(19) Europäisches Patentamt
European Patent Office
Office européen des brevets

(11) EP 2 472 887 A2

(12) **EUROPEAN PATENT APPLICATION**

(43) Date of publication:
**04.07.2012 Bulletin 2012/27**

(51) Int Cl.:
***H04N 13/04*** *(2006.01)* ***H04N 13/00*** *(2006.01)*

(21) Application number: **11190829.9**

(22) Date of filing: **25.11.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.12.2010 JP 2010293219**

(71) Applicant: **Sony Corporation**
**Tokyo 108-0075 (JP)**

(72) Inventors:
- **Takahashi, Shuichi**
  **Minato-ku, Tokyo 108-0075 (JP)**
- **Ooi, Takuya**
  **Minato-ku, Tokyo 108-0075 (JP)**

(74) Representative: **Robinson, Nigel Alexander Julian**
**D Young & Co LLP**
**120 Holborn**
**London EC1N 2DY (GB)**

(54) **Three dimensional image display apparatus**

(57) Disclosed herein is a three-dimensional image display apparatus in which an image for each of a plurality of view points in each of a plurality of observation areas can be observed. The three-dimensional image display apparatus displays one or two images pertaining to a pair of images put in a reverse-view relation in the vicinity of an edge of the observation areas by making use of data different from image data for the view points. Also, the three-dimensional image display apparatus creates one or two images pertaining to a pair of images put in a reverse-view relation in the vicinity of an edge of the observation areas by displaying pieces of image data having a variety of types on a time-division basis.

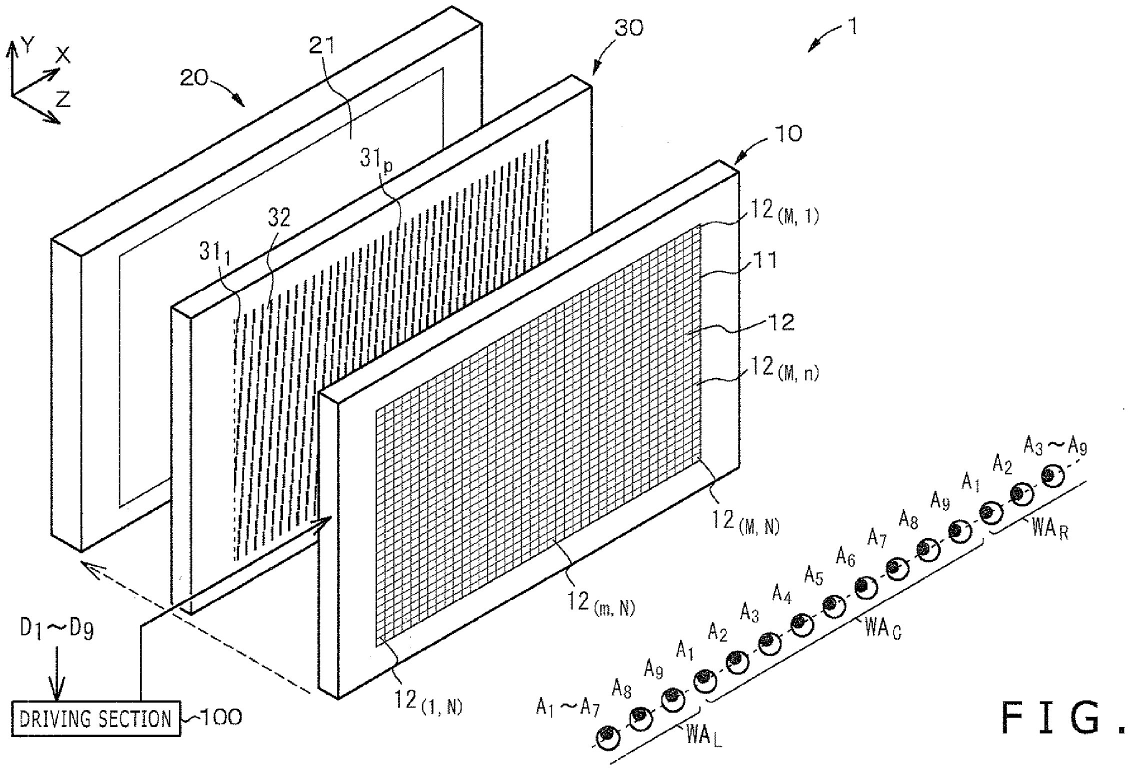


FIG. 1

EP 2 472 887 A2

## Description

The present disclosure relates to a three-dimensional image display apparatus. More particularly, the present disclosure relates to a three-dimensional image display apparatus capable of reducing unnaturalness and discomfort feelings both of which are caused by the so-called reverse view.

There has been known a variety of three-dimensional image display apparatus each used for implementing binocular visions for an image observer observing two image having disparities. There are two principal methods adopted by the three-dimensional image display apparatus. One of them is an eyeglass method of making use of eyeglasses to separate images having disparities into an image for the left eye and an image for the right eye. The other one is a naked-eye method of separating images having disparities into an image for the left eye and an image for the right eye without making use of eyeglasses.

In the case of the three-dimensional image display apparatus adopting the naked-eye method, progress has been made in an effort to put a specific three-dimensional image display apparatus to practical use. The specific three-dimensional image display apparatus is a three-dimensional image display apparatus constructed typically by combining an optical separation section and an image display section, which is actually a two-dimensional image display apparatus,. In this case, the optical separation section includes a parallax barrier also referred to as a disparity barrier or a lens sheet having an array of lenses.

For example, the three-dimensional image display apparatus making use of a parallax barrier as an optical separation section is normally configured from an image display section and the parallax barrier having an aperture extended virtually in the vertical direction (also referred to as the longitudinal direction). In this case, the image display section is typically an image display panel having a plurality pixels laid out in the horizontal direction also referred to as the lateral direction and the vertical direction to form a two-dimensional matrix.

The three-dimensional image display apparatus making use of an optical separation section can be typically an apparatus wherein the optical separation section is provided between the image display section and the image observer as shown in Fig. 7 of Japanese Patent Laid-open No. Hei 5-122733. As an alternative, the three-dimensional image display apparatus making use of an optical separation section can also be an apparatus wherein the image display section comprises a transmission-type liquid-crystal display panel serving as an image display section and a illumination section as shown in Fig. 10 of Japanese Patent No. 3565391. In this case, the optical separation section is provided between the image display section and the illumination section.

Figs. 60A and 60B are conceptual diagrams each showing a three-dimensional image display apparatus in which the optical separation section is provided between the image display section and the illumination section. In the case of the three-dimensional image display apparatus shown in Fig. 60A, the optical separation section is made from a parallax barrier. In the case of the three-dimensional image display apparatus shown in Fig. 60B, the optical separation section is made from a lens sheet (a lenticular lens) having a convex cylindrical lens array. In addition, Figs. 61A and 61B are conceptual diagrams each showing a three-dimensional image display apparatus in which the optical separation section is provided between the image display section and the image observer. In the case of the three-dimensional image display apparatus shown in Fig. 61A, the optical separation section is made from a parallax barrier. In the case of the three-dimensional image display apparatus shown in Fig. 61B, the optical separation section is made from a lenticular lens.

As shown in Fig. 60A, a light-ray group coming from a group of pixels denoted by notations L2, L4, L6, L8 and L10 arrives at view points 1 whereas a light-ray group coming from a group of pixels denoted by notations R1, R3, R5, R7 and R9 arrives at view points 2. In this way, at a position separated away from the image display section by a distance determined in advance, an image for the view point 1 and an image for the view point 2 are observed alternately. This phenomenon also occurs as well in the three-dimensional image display apparatus shown in Figs. 60B, 61A and 61B.

Let the left and right eyes of the image observer be positioned at the view points 1 and 2 respectively. In this case, if the group of pixels denoted by notations L2, L4, L6, L8 and L10 is used for displaying an image for the left eye whereas the group of pixels denoted by notations R1, R3, R5, R7 and R9 is used for displaying an image for the right eye, the observer will recognize the image for the left eye and the image for the right eye as a three-dimensional image. That is to say, when the image observer is present in an area wherein the left eye receives the image for the view point 1 whereas the right eye receives the image for the view point 2, the observer will recognize the image for the left eye and the image for the right eye as a three-dimensional image.

If the image observer moves to a location at which the left eye receives the image for the view point 2 whereas the right eye receives the image for the view point 1, however, the image for the left eye is reversely received by the right eye whereas the image for the left eye is reversely received by the right eye in the so-called reverse-view state. In this state, the image observer conversely perceives the front portion of the observation subject as the back portion of the observation subject and vice versa, hence, feeling unnaturalness and a discomfort.

Efforts made to reduce unnaturalness and discomfort feelings both of which are caused by the so-called reverse view are described in Japanese Patent Laid-open No. 2000-47139. To put it concretely, Japanese Patent Laid-open No. 2000-47139 discloses a three-dimensional image display apparatus which detects the position of the image observer and, in accordance with the detected position of the image observer, changes the shape of a mask pattern of a light modulator corresponding to the optical separation section. Japanese Patent Laid-open No. 2000-47139 also describes a three-dimensional image display apparatus which detects the position of the image observer and, in accordance with the detected position of the image observer, changes the contents of an image displayed on the image display section.

The three-dimensional image display apparatus having a configuration in which the position of the image observer is detected and, on the basis of the detected position, the image display section and the optical separation section are controlled entails a complicated configuration and complex control, resulting in high cost. In addition, when a plurality of image observers are observing one three-dimensional image display apparatus from different positions, there is further raised a problem that the control of the three-dimensional image display apparatus becomes even more difficult.

It is thus a desire of the present disclosure to provide a three-dimensional image display apparatus capable of reducing unnaturalness and discomfort feelings, both of which are caused by the so-called reverse view, with no difficulty and without entailing a complicated configuration and complex control even if a plurality of image observers are observing the three-dimensional image display apparatus from different positions.

In order to achieve the desire described above, in accordance with a first embodiment of the present disclosure, there is provided a three-dimensional image display apparatus in which an image for each of a plurality of view points in each of a plurality of observation areas can be observed; wherein the three-dimensional image display apparatus displays one or two images pertaining to a pair of images put in a reverse-view relation in the vicinity of an edge of the observation areas by making use of data different from image data for the view points.

In order to achieve the desire described above, in accordance with a second embodiment of the present disclosure, there is provided a three-dimensional image display apparatus in which an image for each of view points in each of a plurality of observation areas can be observed, wherein the three-dimensional image display apparatus creates one or two images pertaining to a pair of images put in a reverse-view relation in the vicinity of an edge of the observation areas by displaying pieces of image data having a variety of types on a time-division basis.

The three-dimensional image display apparatus according to the first and second embodiments of the present disclosure are capable of lowering the degree of the reverse view in the vicinity of an edge of an observation area without detecting the position of the image observer and without controlling the image display section or the like in accordance with the detected position. In addition, even if a plurality of image observers are observing the three-dimensional image display apparatus from different positions, the three-dimensional image display apparatus is capable of reducing unnaturalness and discomfort feelings, both of which are caused by the so-called reverse view.

Further particular and preferred aspects of the present invention are set out in the accompanying independent and dependent claims. Features of the dependent claims may be combined with features of the independent claims as appropriate, and in combinations other than those explicitly set out in the claims.

Embodiments of the invention will now be described, by way of example only, with reference to the accompanying drawings in which:

Fig. 1 is a perspective diagram showing a model of a three-dimensional image display apparatus set apart virtually according to example embodiments of the present disclosure;

Fig. 2 is a diagram showing a top view of a model provided for an optical separation section and a portion of a display area to serve as a model used for explaining a relation between positions of apertures and sub-pixels in a three-dimensional image display apparatus;

Fig. 3 is a diagram showing a top view of a model used for explaining relations between positions of view points $A_1$ to $A_9$ in an observation area, an image display section, an optical separation section and an illumination section which are shown in Fig. 1;

Fig. 4 is a diagram showing a model used for explaining a condition to be satisfied as a condition for light coming from sub-pixels to propagate toward the view points $A_1$ to $A_9$ in an observation area at the center;

Fig. 5 is a diagram showing a model used for explaining a condition to be satisfied as a condition for light coming from sub-pixels to propagate toward the view points $A_1$ to $A_9$ in an observation area on the right side;

Fig. 6 is a diagram showing a model used for explaining an image observed at the view points $A_1$ to Ag in an observation area at the center;

Fig. 7 is a diagram showing a model used for explaining an image observed at the view points $A_1$ to $A_9$ in an observation area on the right side;

Fig. 8 is a diagram showing a top view of a model provided for an optical separation section and a portion of a display area to serve as a model used for explaining a sub-pixel composing a pixel of an image for points of views in three-dimensional image display apparatuses according to example embodiments of the present disclosure;

Fig. 9 is a table showing view points to which light from (1, 1) th to (M, N)th sub-pixels propagates;

Fig. 10 is a table used for explaining an array of a set of sub-pixels composing an image for a view point $A_4$;

Fig. 11 is a table used for explaining an array of a set of sub-pixels composing an image for a view point $A_5$;

Fig. 12A is a diagram showing a top view of a model used for explaining a layout of pixels composing an image observed at a view point $A_4$;

Fig. 12B is a diagram showing a top view of a model used for explaining a layout of pixels composing an image observed at a view point $A_5$;

Fig. 13 is a diagram showing a model used for explaining a method for generating multi-view-point image display data on the basis of image data $D_1$ to image data $D_9$ for view points $A_1$ to $A_9$ respectively;

Fig. 14 shows a flowchart of a model used for explaining a method for selecting image data for a sub-pixel $12_{(m, n)}$ at an intersection of the mth column and the nth row;

Fig. 15 shows a table used for explaining a Q value at a view point $A_Q$ to which light from (1, 1)st to (M, N) th sub-pixels propagates;

Fig. 16 shows a table showing j values for (1, 1) st to (M, N)th sub-pixels;

Fig. 17 shows a table showing k values for (1, 1) st to (M, N)th sub-pixels;

Fig. 18 is a diagram showing a top view of a model created for a portion of a display area 11 to serve as a model used for explaining image data displayed on an image display section when the effect of the reverse view is not reduced;

Fig. 19 is a diagram showing a top view of a model created for a portion of a display area to serve as a model used for explaining pixels composing an image observed by the left eye of the image observer and pixels composing an image observed by the right eye of the image observer when the left and right eyes are positioned at view points $A_4$ and $A_5$ respectively;

Fig. 20A is a diagram showing a top view of a model used for explaining an image observed by the left eye;

Fig. 20B is a diagram showing a top view of a model used for explaining an image observed by the right eye;

Fig. 21 is a diagram showing a top view of a model created for a portion of a display area to serve as a model used for explaining pixels composing an image observed by the left eye of the image observer and pixels composing an image observed by the right eye of the image observer when the left and right eyes are positioned at view points $A_9$ and $A_1$ respectively;

Fig. 22A is a diagram showing a top view of a model used for explaining an image observed by the left eye;

Fig. 22B is a diagram showing a top view of a model used for explaining an image observed by the right eye;

Fig. 23A is a diagram showing a model used for explaining a method for generating data $D_{S1}$ (j, k) in a first example embodiment;

Fig. 23B is a diagram showing a model used for explaining an operation carried out to generate multi-view-point display data in the first example embodiment;

Figs. 24A and 24B are diagrams showing top views of models used for explaining an image observed by the left eye of the image observer and an image observed by the right eye of the image observer when the left and right eyes are positioned at view points $A_9$ and $A_1$ respectively;

Fig. 25A is a diagram showing a model used for explaining a method for generating data $D_{S2}$ (j, k) in a second example embodiment;

Fig. 25B is a diagram showing a model used for explaining an operation carried out to generate multi-view-point display data in the second example embodiment;

Figs. 26A and 26B are diagrams showing top views of models used for explaining an image observed by the left eye of the image observer and an image observed by the right eye of the image observer when the left and right eyes are positioned at view points $A_9$ and $A_1$ respectively;

Fig. 27A is a diagram showing a model used for explaining a method for generating data $D_{C1}$ (j, k) in a third example embodiment;

Fig. 27B is a diagram showing a model used for explaining an operation carried out to generate multi-view-point display data in the third example embodiment;

Figs. 28A and 28B are diagrams showing top views of models used for explaining an image observed by the left eye of the image observer and an image observed by the right eye of the image observer when the left and right eyes are positioned at view points $A_9$ and $A_1$ respectively;

Fig. 29A is a diagram showing a model used for explaining a method for generating data $D_{C2}$ (j, k) in a fourth example embodiment;

Fig. 29B is a diagram showing a model used for explaining an operation carried out to generate multi-view-point display data in the fourth example embodiment;

Figs. 30A and 30B are diagrams showing top views of models used for explaining an image observed by the left eye of the image observer and an image observed by the right eye of the image observer when the left and right eyes are positioned at view points $A_9$ and $A_1$ respectively;

Fig. 31A is a diagram showing a model used for explaining a method for generating data $D_{av}$ (j, k) in a fifth example embodiment;

Fig. 31B is a diagram showing a model used for explaining an operation carried out to generate multi-view-point display data in the fifth example embodiment;
Figs. 32A and 32B are diagrams showing top views of models used for explaining an image observed by the left eye of the image observer and an image observed by the right eye of the image observer when the left and right eyes are positioned at view points $A_9$ and $A_1$ respectively;
Fig. 33 is a diagram showing a model used for explaining an operation carried out in a sixth example embodiment;
Figs. 34A and 34B are diagrams showing top views of models used for explaining images of a first half frame and a second half frame when the left eye of the image observer is positioned at a view point $A_9$;
Figs. 35A and 35B are diagrams showing top views of models used for explaining images of a first half frame and a second half frame when the right eye of the image observer is positioned at a view point $A_1$;
Fig. 36 is a diagram showing a model used for explaining an operation carried out to reduce unnaturalness caused by reverse-view relations between view points $A_1$ and $A_2$ as well as between view points $A_8$ and $A_9$;
Fig. 37 is a diagram showing a model used for explaining an operation carried out in a modified version of the sixth example embodiment;
Fig. 38 is a diagram showing a model used for explaining a typical case in which interlace scanning is carried out;
Fig. 39 is a diagram showing a model used for explaining an operation carried out to generate multi-view-point display data in a seventh example embodiment;
Figs. 40A and 40B are diagrams showing top views of models used for explaining an image observed by the left eye of the image observer and an image observed by the right eye of the image observer when the left and right eyes are positioned at view points $A_9$ and $A_1$ respectively;
Fig. 41 is a diagram showing a model used for explaining an operation carried out to generate multi-view-point display data in an eighth example embodiment;
Figs. 42A and 42B are diagrams showing top views of models used for explaining an image observed by the left eye of the image observer and an image observed by the right eye of the image observer when the left and right eyes are positioned at view points $A_9$ and $A_1$ respectively;
Figs. 43A and 43B are diagrams showing top views of models used for explaining an image observed by the left eye of the image observer and an image observed by the right eye of the image observer when the left and right eyes are positioned at view points $A_1$ and $A_2$ respectively;
Figs. 44A and 44B are diagrams showing top views of models used for explaining an image observed by the left eye of the image observer and an image observed by the right eye of the image observer when the left and right eyes are positioned at view points $A_8$ and $A_9$ respectively;
Fig. 45 is a diagram showing a model used for explaining an operation carried out to generate multi-view-point display data in a ninth example embodiment;
Fig. 46 is a diagram showing a model used for explaining an operation carried out to generate multi-view-point display data in a tenth example embodiment;
Figs. 47A and 47B are diagrams showing top views of models used for explaining an image observed by the left eye of the image observer and an image observed by the right eye of the image observer when the left and right eyes are positioned at view points $A_9$ and $A_1$ respectively;
Fig. 48 is a diagram showing a model used for explaining an operation carried out to generate multi-view-point display data in an eleventh example embodiment;
Figs. 49A and 49B are diagrams showing top views of models used for explaining an image observed by the left eye of the image observer and an image observed by the right eye of the image observer when the left and right eyes are positioned at view points $A_9$ and $A_1$ respectively;
Fig. 50 is a diagram showing a model used for explaining an operation carried out to generate multi-view-point display data in a twelfth example embodiment;
Figs. 51A and 51B are diagrams showing top views of models used for explaining an image observed by the left eye of the image observer and an image observed by the right eye of the image observer when the left and right eyes are positioned at view points $A_9$ and $A_1$ respectively;
Fig. 52 is a diagram showing a model used for explaining an operation carried out to generate multi-view-point display data in a thirteenth example embodiment;
Fig. 53 is a diagram showing a model used for explaining an operation carried out to generate multi-view-point display data in a fourteenth example embodiment;
Figs. 54A and 54B are diagrams showing top views of models used for explaining an image observed by the left eye of the image observer and an image observed by the right eye of the image observer when the left and right eyes are positioned at view points $A_9$ and $A_1$ respectively;
Fig. 55 is a perspective diagram showing a model representing a three-dimensional image display apparatus set apart virtually;
Fig. 56 is a perspective diagram showing a model representing a virtually set-apart typical modified version of the three-dimensional image display apparatus;

Fig. 57 is a perspective diagram showing a model of a relation between an aperture and a sub-pixel;

Fig. 58 is a perspective diagram showing a model representing a virtually set-apart typical modified version of a three-dimensional image display apparatus;

Fig. 59 is a perspective diagram showing a model of a relation between an aperture and a sub-pixel;

Figs. 60A and 60B are conceptual diagrams each showing a three-dimensional image display apparatus in which an optical separation section is provided between an image display section and an illumination section; and

Figs. 61A and 61B are conceptual diagrams each showing a three-dimensional image display apparatus in which an optical separation section is provided between an image display section and the image observer.

Example embodiments of the present disclosure are explained below by referring to the diagrams. However, implementations of the present disclosure are by no means limited to the embodiments. In addition, a variety of numerical values used in the embodiments and materials for making elements employed in the embodiment are also typical. In the following description, the same elements and elements having the same function are denoted by the same reference numeral and enlightened once in order to avoid duplications of explanations. It is to be noted that the following description is divided into chapters arranged as follows.

1. Explanation of a three-dimensional image display apparatus provided by the disclosure, its driving method and general matters
2. Explanations of three-dimensional image display apparatus according to embodiments
3. Operations carried out by the three-dimensional image display apparatus without reverse view
4. First example embodiment
5. Second example embodiment
6. Third example embodiment
7. Fourth example embodiment
8. Fifth example embodiment
9. Sixth example embodiment
10. Seventh example embodiment
11. Eighth example embodiment
12. Ninth example embodiment
13. Tenth example embodiment
14. Eleventh example embodiment
15. Twelfth example embodiment
16. Thirteenth example embodiment
17. Fourteenth example embodiment (and others)

[1. Explanation of a three-dimensional image display apparatus provided by the disclosure, its driving method and general matters]

As a three-dimensional image display apparatus provided by the present disclosure, there is widely used a three-dimensional image display apparatus capable of displaying images for a plurality of points of view on the basis of image data for the points of view and usable for observing images for the points of view in a plurality of observation areas. In this specification, a point of view is also referred to as a view point.

As described above, the three-dimensional image display apparatus according to the first embodiment of the present disclosure displays one or both of a pair of images put in a reverse-view relation in the vicinity of an edge of an observation area by making use of data different from image data for points of view. Thus, it is possible to decrease the absolute value of the magnitude of a disparity between images forming a pair of images put in a reverse-view relation in the vicinity of an edge of an observation area. As a result, it is possible to lower the degree of the reverse view in the vicinity of an edge of an observation area. In this case, the data different from image data for points of view can be configured from data obtained as a result of combining pieces of image data having a variety of types.

From a viewpoint of simplifying the configuration of the three-dimensional image display apparatus, it is desirable to provide a configuration in which each of the pieces of image data having a variety of types is image data for a different point of view. However, each of the pieces of image data having a variety of types is not necessarily limited to such a configuration. For example, it is also possible to provide a configuration in which pieces of image data are generated separately from each other and these generated pieces of data are used as the pieces of image data having a variety of types. In this case, the pieces of image data include image data generated by reworking some or all of image data for a point of view and image data generated for a virtual point of view.

It is possible to provide a configuration in which image data displayed on the basis data obtained by combining the pieces of image data having a variety of types is put in an array obtained by alternately laying out components of the pieces of image data having a variety of types to create a stripe state or a configuration in which the components of the pieces of image data having a variety of types are laid out to form a checker board pattern.

Typical examples of the configuration in which components of an image are alternately laid out to create a stripe state are a configuration in which components of an image are alternately laid out in pixel-column units or pixel units and a configuration in which components of an image are alternately laid out in pixel-column-group units each having a plurality of pixel columns adjacent to each other or alternately laid out in pixel-row-group units each having a plurality of pixel rows adjacent to each other. Also, typical examples of the configuration in which components of an image are laid out to form a checker board pattern are a configuration in which the components of an image are laid out in pixel units to form a checker board pattern and a configuration in which the components of an image are laid out in pixel-group units each having a plurality of pixels to form a checker board pattern.

As an alternative, it is also possible to provide the three-dimensional image display apparatus according to the first embodiment of the present disclosure with a configuration in which the data different from the image data for a point of view is data obtained by finding an average of the pieces of image data having a variety of types. In this case, it is desirable to configure each of the pieces of image data having a variety of types from image data for a different point of view. However, each of the pieces of image data having a variety of types is by no means limited to such a configuration. For example, as described above, it is also possible to provide a configuration in which pieces of image data are generated separately from each other and these generated pieces of data are used as the pieces of image data having a variety of types. In this case, the pieces of image data include image data generated by reworking some or all of image data for a point of view and image data generated for a virtual point of view. It is to be noted that the data obtained by finding an average of the pieces of image data having a variety of types implies a set of data obtained by averaging pieces of data for the same pixel. In addition, the word 'average' is not limited to an arithmetic average also referred to as an average mean. That is to say, the word 'average' may also imply a weighted average. In the case of a weighted average, weight coefficients used for computing the weighted average can be properly selected in accordance with the design of the three-dimensional image display apparatus.

As an alternative, it is also possible to provide the three-dimensional image display apparatus according to the first embodiment of the present disclosure with a configuration in which the data different from the image data for a point of view is data for another point of view.

As described above, the three-dimensional image display apparatus according to the second embodiment of the present disclosure is capable of displaying an image for every point of view in each of a plurality of observation areas. The three-dimensional image display apparatus forms one or both of a pair of images put in a reverse-view relation in the vicinity of an edge of an observation area by displaying pieces of image data having a variety of types on a time-division basis. In this case, it is desirable to configure each of the pieces of image data having a variety of types from image data for a different point of view. However, each of the pieces of image data having a variety of types is by no means limited to such a configuration. For example, as described above, it is also possible to provide a configuration in which pieces of image data are generated separately from each other and these generated pieces of data are used as the pieces of image data having a variety of types. In this case, the pieces of image data include image data generated by reworking some or all of image data for a point of view and image data generated for a virtual point of view.

In the three-dimensional image display apparatus according to the second embodiment of the present disclosure, the display obtained in an operation carried out on a time-division basis can be configured as a display obtained by performing the so-called progressive scanning or the so-called interlace scanning.

If the three-dimensional image display apparatus is provided with an image display section for displaying a multi-view-point image and an optical separation section, which is used for separating the multi-view-point image to be displayed on the image display section and for allowing an image for each point of view in every observation area to be observed, the three-dimensional image display apparatus can be configured to include the optical separation section provided between the image display section and the image observer or to include the optical separation section provided between the image display section and an illumination section. In the case of the first configuration including the optical separation section provided between the image display section and the image observer, a commonly known display unit can be used as the image display section. Typical examples of the commonly known display unit are a liquid-crystal display panel, an electro luminescence display panel and a plasma display panel. In the case of the second configuration including the optical separation section provided between the image display section and an illumination section, on the other hand, a commonly known transmission-type display panel such as a transmission-type liquid-crystal display panel can be used as the image display section. In addition, the image display section can be a monochrome or color display section.

The configuration of the optical separation section, a position at which the optical separation section is to be installed and other things related to the optical separation section are properly set in accordance with, among others, the specifications of the three-dimensional image display apparatus and the like. If a parallax barrier is selected to serve as the optical separation section, a fixed parallax barrier can be employed or, as an alternative, a dynamically switchable parallax barrier can be used.

The fixed parallax barrier can be created by adoption of a commonly known method making use of a base material made from a commonly known transparent material such as the acrylic resin, the PC (polycarbonate) resin, the ABS resin, the PMMA (poly(methyl methacrylate)), the PAR (polyacrylate resin), the PET (polyethylene terephthalate) or the glass. Typical examples of the commonly known method are a combination of a photolithographic method and an etching method, a variety of printing methods such as a screen printing method, an ink jet method and a metal mask printing method, a coating method (an electrical coating method and a non-electrolytic plating method) and a lift-off method. On the other hand, the dynamically switchable parallax barrier can be configured by making use of typically a light valve provided with a liquid-crystal material layer to serve as a valve that can be electrically switched. The type of a material used for making the light valve using a liquid-crystal material layer and the operating mode of the liquid-crystal material layer are not limited in particular. As a matter of fact, in some cases, the liquid-crystal display panel of a monochrome display unit can be used as the dynamically parallax barrier. The size of each aperture of the parallax barrier, the wire pitch and the like can be properly set in accordance with the specifications of the three-dimensional image display apparatus and the like.

If a lens sheet is used as the optical separation section, a configuration in which the lens sheet is designed and the structure of the lens sheet are not prescribed in particular. For example, it is possible to make use of a lens sheet formed in an integrated fashion by utilizing a commonly known transparent material described above or a lens sheet in which a lens array is created by using an light-sensitive resin material or the like on a base made from the material described above to serve as a base having a sheet shape. The optical power of the lens array, the pitch at which the lens array is created and other attributes of the lens array are properly determined in accordance with, among others, the specifications of the three-dimensional image display apparatus and the like.

In the configuration of the three-dimensional image display apparatus including a transmission-type display panel and an illumination section, a widely known illumination section can be used. The configuration of the illumination section is not limited in particular. In general, however, the illumination section can be configured to make use of commonly known members such as a light source, a prism sheet, a diffusion sheet and a light guiding plate.

In embodiments to be described later, a transmission-type color liquid-crystal display panel adopting the active matrix method is used as the image display section, and a fixed parallax barrier is employed as the optical separation section. In addition, in the embodiments, the optical separation section is provided between the image display section and an illumination section. However, implementations of the present disclosure are by no means limited to the embodiments.

The liquid-crystal display panel is typically configured to include a front panel having a first transparent electrode, a rear panel having a second transparent electrode as well as a liquid-crystal material provided between the front panel and the rear panel.

To put it more concretely, the front panel typically includes a first substrate, a first transparent electrode and a polarization film. The first substrate is a substrate made from glass. Also referred to as a common electrode, the first transparent electrode is provided on the inner surface of the first substrate. The first electrode is typically made from the ITO (Indium Tin Oxide). Also, the polarization film is provided on the outer surface of the first substrate. In addition, in the case of a color liquid-crystal display panel, the front panel has a configuration in which a color filter is provided on the inner surface of the first substrate and the color filter is covered with an overcoat layer made from an acrylic resin or an epoxy resin. The first transparent electrode is created on the overcoat layer. On the first transparent electrode, an orientation film is created. The layout pattern of the color filter can be a delta layout pattern, a stripe layout pattern, a diagonal layout pattern or a rectangular layout pattern.

On the other hand, to put it more concretely, the rear panel typically includes a second substrate, a switching device, a second transparent electrode and a polarization film. The second substrate is a glass substrate. The switching device is created on the inner surface of the second substrate. The second transparent electrode (referred to as a pixel electrode, for example, made from the ITO (Indium Tin Oxide)) is controlled by the switching device to enter a conductive or nonconductive state. The polarization film is provided on the outer surface of the second substrate. An orientation film is created on the entire surface including the second transparent electrode. Commonly known members can be used as a variety of members composing the transmission-type liquid-crystal display panel. By the same token, commonly known materials can be used as a variety of liquid-crystal materials composing the transmission-type liquid-crystal display panel. Typical examples of the switching device are a three-terminal device and a two-terminal device. A typical example of the three-terminal device is a TFT (Thin Film Transistor), and typical examples of the two-terminal device are a MIM (Metal Insulator Metal) device, a varistor device and a diode.

It is to be noted that, in the color liquid-crystal display panel, the first and second transparent electrodes are created in areas overlapping each other and an area including a liquid-crystal cell corresponds to a sub-pixel. In addition, a red-color light emitting sub-pixel is configured from a combination of a relevant area and a color filter passing through light having a red color. By the same token, a green-color light emitting sub-pixel is configured from a combination of a relevant area and a color filter passing through light having a green color. In the same way, a blue-color light emitting sub-pixel is configured from a combination of a relevant area and a color filter passing through light having a blue color light. The layout pattern of the red-color light emitting sub-pixels, the layout pattern of the green-color light emitting sub-pixels and the layout pattern of the blue-color light emitting sub-pixels match the layout pattern described above as the layout pattern of the color filters.

In addition, it is also possible to provide a configuration in which sub-pixels having a type or a plurality of types are added to the sub-pixels having the three types described above. Typical examples of the additional sub-pixels are a sub-pixel emitting light having a white color to increase the luminance, a sub-pixel emitting light having a supplementary color to enlarge a color reproduction range, a sub-pixel emitting light having a yellow color to enlarge a color reproduction range and a sub-pixel emitting light having yellow and cyan colors to enlarge a color reproduction range.

When notation ($M_o$, No) denote a pixel count of $M_o$ x No for a case in which the image display section is assumed to display an ordinary planar image, the values of the pixel count ($M_0$, $N_0$) are, specifically, VGA (640, 480), S-VGA (800, 600), XGA (1024, 768), APRC (1152, 900), S-XGA (1280, 1024), U-XGA (1600, 1200), HD-TV (1920, 1080) and Q-XGA (2048, 1536). In addition, other values of the pixel count ($M_0$, No) include (1920, 1035), (720, 480) and (1280, 960). These values of the pixel count ($M_0$, $N_0$) are each a typical image display resolution. However, the values of the pixel count ($M_0$, $N_0$) are by no means limited to the examples given above.

A driving section for driving the image display section can be configured from a variety of circuits such as an image-signal processing section, a timing control section, a data driver and a gate driver. Each of these circuits can be configured by using commonly known circuit devices and the like.

[2. Explanation of three-dimensional image display apparatus according to embodiments]

Fig. 1 is a perspective diagram showing a model of a three-dimensional image display apparatus set apart virtually according to embodiments of the present disclosure described later.

As shown in Fig. 1, the three-dimensional image display apparatus 1 employs an image display section 10, an illumination section 20 and an optical separation section 30 provided between the image display section 10 and the illumination section 20. The illumination section 20 is a section for illuminating the back surface of the image display section 10. The optical separation section 30 is a section for separating a multi-view-point image to be displayed on the image display section 10 into an observable image for every point of view in each of observation areas $WA_L$, $WA_C$ and $WA_R$. It is to be noted that the observation areas $WA_L$, $WA_C$ and $WA_R$ are also referred to collectively as an observation area WA in some cases.

The image display section 10 is a section for displaying a multi-view-point image for view points $A_1$ to $A_9$. A driving section 100 is a section for generating multi-view-point image display data on the basis of pieces of image data $D_1$ to $D_9$ for the points of view and supplying the multi-view-point image display data to the image display section 10 in order to drive the image display section 10. Operations carried out by the driving section 100 will be described later in detail by referring to Figs. 9 to 14.

M x N sub-pixels 12 are laid out in a display area 11 of the image display section 10 to form a matrix having M columns and N rows. M sub-pixels 12 are laid out in the horizontal direction (in the X direction of the figure), and N sub-pixels 12 are laid out in the vertical direction (in the Y direction of the figure). A sub-pixel 12 placed at the intersection of the mth column (where m = 1, 2, ... and M) and the nth row (where n = 1, 2, ... and N) is referred to as a (m, n)th sub-pixel 12 or a sub-pixel $12_{(m, n)}$. In addition, a sub-pixel 12 on the mth column is referred to as a sub-pixel $12_m$ in some cases.

The image display section 10 is a color liquid-crystal display panel adopting the active matrix method. The sub-pixels 12 are laid out in such an order that a sub-pixel 12 on the first column is a sub-pixel emitting light having a red color, a sub-pixel 12 on the second column is a sub-pixel emitting light having a green color and a sub-pixel 12 on the third column is a sub-pixel emitting light having a blue color. This layout order is repeated for sub-pixels 12 on the fourth and subsequent columns. Generally speaking, a sub-pixel 12 on the mth column is a sub-pixel emitting light having a red color if the remainder of dividing (m - 1) by 3 is 0, a sub-pixel 12 on the mth column is a sub-pixel emitting light having a green color if the remainder of dividing (m - 1) by 3 is 1, and a sub-pixel 12 on the mth column is a sub-pixel emitting light having a blue color if the remainder of dividing (m - 1) by 3 is 2.

As described earlier, notation ($M_0$, $N_0$) denotes a pixel count of $M_0$ x $N_0$ for a case in which the image display section 10 is assumed to display an ordinary planar image. A typical pixel count is (1920, 1080). In the case of an ordinary planar image, each pixel on the ordinary planar image is a set including three sub-pixels laid out in the horizontal direction, that is, a set including a sub-pixel emitting light having a red color, a sub-pixel emitting light having a green color and a sub-pixel emitting light having a blue color so that the equations M = $M_0$ x 3 and N = No hold true. That is to say, in the case of the pixel count of (1920, 1080), the equations M = 5,760 and N = 1,080 hold true.

The image display section 10 is configured to include typically a front panel, a rear panel and a liquid-crystal material provided between the front and rear panels. The front panel is a panel provided on a side close to the observation area WA, and the rear panel is a panel provided on a side close to the optical separation section 30. For the sake of drawing simplicity, however, Fig. 1 shows the image display section 10 as a single-panel section.

The optical separation section 30 has a plurality of apertures 31 laid out in the vertical direction to form vertical columns and a plurality of light shielding sections 32 between two adjacent vertical aperture columns. That is to say, each of the vertical aperture columns consists of a plurality of apertures 31 substantially laid out in the vertical direction (in the Y direction in the figure). An aperture-column count P is the number of the aperture columns described above in the optical separation section 30. The aperture columns are laid out in the horizontal direction (in the X direction in the figure). An aperture 31 on the pth aperture column (where p = 1, 2, ... and P) is referred to as an aperture $31_p$. As will be described later in detail, the pixel-column count M and the aperture-column P satisfy the following relation: $M \approx P \times 9$.

Every aperture column is basically configured to include N apertures 31. As will be described later, the direction in which apertures 31 are laid out on an aperture column and the Y direction form a small angle. For this reason, an aperture column on an edge of the optical separation section 30 includes apertures 31, the number of which is smaller than N.

The optical separation section 30 is typically made by creating a light sensitive material layer including black-color pigments on a PET film and, then, removing the light sensitive material layer by adoption of a combination of the photolithographic and etching methods in order to leave light shielding sections 32 on the PET film. Portions from which the light sensitive material layer is removed become apertures 31.

It is to be noted that, in Figs. 3 to 7 to be discussed later, the PET film used as the base material of the optical separation section 30 is not shown and only a model for the apertures 31 and the light shielding sections 32 is shown. In addition, in order to clearly distinguish a light shielding state and a light passing state from each other, the light shielding sections 32 are shown in a black color.

The illumination section 20 is configured to make use of commonly known members such as a light source, a prism sheet, a diffusion sheet and a light guiding plate (these members are shown in none of the figures). Diffusion light passing through the diffusion sheet and the other members is radiated from a light emitting surface 21 of the illumination section 20 to the back surface of the image display section 10. Since the optical separation section 30 blocks some of the light radiated by the illumination section 20, an image to be displayed on the image display section 10 is separated into a plurality of images each provided for a point of view.

When light originating from the illumination section 20 and passing through an aperture 31 of the optical separation section 30 hits the image display section 10, some of the light is reflected by the image display section 10 back to the optical separation section 30 and illuminates the optical separation section 30. Thus, the directivity of the disparity image may deteriorate because some of the light is reflected by the image display section 10 back to the optical separation section 30 and illuminates the optical separation section 30. In order to solve this problem, a reflection preventing film is provided on one side of the image display section 10. The side of the image display section 10 is a side close to the optical separation section 30. As an alternative, the reflection preventing film is provided on one side of the optical separation section 30. The side of the optical separation section 30 is a side close to the image display section 10. If the reflection preventing film is provided on one side of the optical separation section 30, it is desirable to provide the reflection preventing film on only the light shielding sections 32. The configuration of the reflection preventing film is not prescribed in particular, but a commonly known reflection preventing film can be used.

The distance between the optical separation section 30 and the image display section 10, a sub-pixel pitch and an aperture pitch are set at values satisfying conditions for allowing observation of a desirable three-dimensional image appearing on the observation area WA determined in the specifications of the three-dimensional image display apparatus 1. The sub-pixel pitch is a pitch oriented in the X direction of the figure as the pitch of the sub-pixels 12. Also, the aperture pitch is a pitch oriented in the X direction of the figure as the pitch of the apertures 31. These conditions are described in concrete terms as follows.

The number of view points of an image displayed in the three-dimensional image display apparatus according to the embodiments is nine for each of the observation areas $WA_L$, $WA_C$ and $WA_R$ shown in Fig. 1. The nine view points in each of the observation areas $WA_L$, $WA_C$ and $WA_R$ are view points $A_1$, $A_2$, ... and $A_9$ respectively. However, implementations of the present disclosure are by no means limited to this configuration. That is to say, the number of observation areas and the number of view points in each of the observation area can be set at proper values according to the design of the three-dimensional image display apparatus. It is to be noted that, in order to make the figures simple, some view points in the observation areas $WA_L$ and $WA_R$ are not shown in Figs. 1, 3 to 7, 56 and 58 described later.

Fig. 2 is a diagram showing a top view of a model provided for the optical separation section and a portion of the display area to serve as a model used for explaining a relation between positions of apertures and sub-pixels in the three-dimensional image display apparatus.

As shown in Fig. 2, by taking the aperture 31 associated with the sub-pixel 12 on the nth row as a reference, the aperture 31 associated with the sub-pixel 12 on the (n + 1) th row is shifted in the -X direction by a distance about equal to the pitch of the sub-pixel 12. Thus, the direction in which the apertures 31 are laid out on an aperture column and the Y direction form a small angle. It is to be noted that, in order to make Fig. 2 simple, the X-direction width of the aperture 31 shown in Fig. 2 is made equal to the pitch of the sub-pixel 12 shown in the same figure. However, this relation indicating that the X-direction width of the aperture 31 is equal to the pitch of the sub-pixel 12 is no more than a typical relation.

In Fig. 2 and Fig. 8 to be described later, the red-color light emitting sub-pixel, the green-color light emitting sub-pixel and the blue-color light emitting sub-pixel are denoted by reference notations R, G and B respectively.

In order to make the explanation to be read by referring to Figs. 2 and 8 easy to understand, in the explanation, the sub-pixel 12 placed at the intersection of the mth sub-pixel column and nth sub-pixel row is assumed to be a red-color light emitting sub-pixel and the center point of this sub-pixel 12 is assumed to be located on a virtual straight line stretched in the Z direction to pass through the center of an aperture $31_p$ on the pth aperture column.

Fig. 3 is a diagram showing a top view of a model used for explaining relations between the positions of the view points $A_1$ to $A_9$ in an observation area, the image display section, the optical separation section and the illumination section which are shown in Fig. 1. To put it more concretely, Fig. 3 is a diagram showing a top view of a model used for explaining relations between the positions of the view points $A_1$ to $A_9$ in an observation area, the image display section, the optical separation section and the illumination section which are on a virtual plane. The virtual plane includes the virtual line cited above and is parallel to the X-Z plane.

In the figure, notations ND and RD denote a sub-pixel pitch [mm] and an aperture pitch [mm] respectively. Notation Z1 denotes the distance [mm] between the aperture 31 and the image display section 10, and notation Z2 denotes the distance [mm] between the image display section 10 and each of the observation areas $WA_L$, $WA_C$ and $WA_R$. In addition, notation DP denotes the distance [mm] between every two adjacent points of view on each of the observation areas $WA_L$, $WA_C$ and $WA_R$.

Notation PW denotes the width of the aperture 31, and notation SW denotes the width of the light shielding section 32. Thus, the equation RD = SW + PW holds true. To describe qualitatively, the smaller the value of the expression PW / RD = PW / (SW + PW), the better the directivity of the image of every point of view. However, the smaller the value of the expression PW / RD = PW / (SW + PW), the worse the luminance of the observed image. Thus, it is only necessary to set PW / RD at a proper value according to the specifications of the three-dimensional image display apparatus.

Light rays coming from an aperture $31_p$ and passing through sub-pixels $12_{(m-4, n)}$, $12_{(m-3, n)}$, ... and $12_{(m+4, n)}$ propagate to respectively view points $A_1$, $A_2$, ... and $A_9$ in the center observation area $WA_C$. Conditions for the propagations of the light rays from the aperture $31_p$ to the view points $A_1$, $A_2$, ... and $A_9$ in the center observation area $WA_C$ are discussed as follows. In order to make the discussion easy to understand, the aperture width PW of the aperture 31 is assumed to be sufficiently small and the discussion focuses attention on the locus of light passing through the center of the aperture 31.

Fig. 4 is a diagram showing a model used for explaining a condition to be satisfied as a condition for light coming from sub-pixels to propagate toward the view points $A_1$ to Ag in the center observation area.

A virtual straight line stretched in the Z direction to pass through the center of the aperture $31_p$ is taken as a reference. Notation X1 denotes the distance between the reference and the center of the sub-pixel $12_{(m-4, n)}$, and notation X2 denotes the distance between the reference and the view point $A_1$ in the center observation area $WA_C$. In order for light coming from the aperture $31_p$ and passing through the sub-pixel $12_{(m-4, n)}$ to propagate to the view point $A_1$ in the center observation area $WA_C$, from a homothetic relation, Eq. (1) given below is satisfied.

$$Z1 : X1 = (Z1 + Z2) : X2 \quad \ldots \quad (1)$$

Since X1 and X2 in Eq. (1) given above satisfy the equations X1 = 4 x ND and X2 = 4 x OP respectively, substitution of these equations into Eq. (1) results in Eq. (1') given as follows:

$$Z1 : 4 \times ND = (Z1 + Z2) : 4 \times DP \quad \ldots \quad (1')$$

If Eq. (1') given above is satisfied, it is geometrically obvious that light rays coming from the aperture $31_p$ and passing through the sub-pixels $12_{(m-3, n)}$, $12_{(m-2, n)}$, ... and $12_{(m+4, n)}$ also propagate to respectively the view points $A_2$, $A_3$, ... and $A_9$ in the center observation area $WA_C$.

Fig. 5 is a diagram showing a model used for explaining a condition to be satisfied as a condition for light coming from sub-pixels to propagate toward view points A1 to A9 in the observation area on the right side.

Light rays coming from an aperture $31_{p-1}$ and passing through sub-pixels $12_{(m-4, n)}$, $12_{(m-3, n)}$, ... and $12_{(m+4, n)}$ propagate to respectively the view points $A_1$, $A_2$, ... and $A_9$ in the right-side observation area $WA_R$. Conditions for the propagations of the light rays from the aperture $31_{p-1}$ to the view points $A_1$, $A_2$, ... and $A_9$ in the right-side observation area $WA_R$ are discussed as follows.

A virtual straight line stretched in the Z direction to pass through the center of the aperture $31_{p-1}$ is taken as a reference. Notation X3 denotes the distance between the reference and the center of the sub-pixel $12_{(m-4, n)}$ whereas notation X4 denotes the distance between the reference and the view point $A_1$ in the right-side observation area $WA_R$. In order for light coming from the aperture $31_{p-1}$ and passing through the sub-pixel $12_{(m-4, n)}$ to propagate to the view point $A_1$ in the observation area $WA_R$, from a homothetic relation, Eq. (2) given below is satisfied.

$$Z1 : X3 = (Z1 + Z2) : X4 \quad \dots \quad (2)$$

Since X3 and X4 in Eq. (2) given above satisfy the equations X3 = RD - X1 = RD - 4 x ND and X4 = RD + 5 x DP respectively, substitution of these equations into Eq. (2) results in Eq. (2') given as follows:

$$Z1 : (RD - 4 \times ND) = (Z1 + Z2) : (RD + 5 \times DP) \quad \dots \quad (2')$$

If q. (2') given above is satisfied, it is geometrically obvious that light rays coming from the aperture $31_{p+1}$ and passing through the sub-pixels $12_{(m-3, n)}$, $12_{(m-2, n)}$, ... and $12_{(m+4, n)}$ also propagate to respectively the view points $A_2$, $A_3$, ... and $A_9$ in the observation area $WA_R$.

Light rays coming from an aperture $31_{p+1}$ and passing through sub-pixels $12_{(m-4, n)}$, $12_{(m-3, n)}$, ... and $12_{(m+4, n)}$ propagate to respectively the view points $A_1$, $A_2$, ... and $A_9$ in the left-side observation area $WA_L$. Conditions for the propagations of the light rays from the aperture $31_{p+1}$ to the view points $A_1$, $A_2$, ... and $A_9$ in the left-side observation area $WA_L$ are obtained by inverting the conditions shown in Fig. 5 with respect to the Z axis. For this reason, explanation of the conditions is omitted.

Each of the distances Z2 and DP is set at a value determined in advance on the basis of the specifications of the three-dimensional image display apparatus 1. In addition, the sub-pixel pitch ND is determined in accordance with the structure of the image display section 10. The distance Z1 and the aperture pitch RD are expressed by respectively Eqs. (3) and (4) which are derived from Eqs. (1') and (2').

$$Z1 = Z2 \times ND / (DP - ND) \quad \dots \quad (3)$$

$$RD = 9 \times DP \times ND / (DP - ND) \quad \dots \quad (4)$$

If the sub-pixel pitch ND of the image display section 10 is 0.175 [mm], the distance Z2 is 3,000 [mm], the distance DP is 65.0 [mm] for example, the distance Z1 is found to be about 8.10 [mm], and the aperture pitch RD is found to be about 1.58 [mm].

It is to be noted that, if the configuration of the three-dimensional image display apparatus 1 is set so that the image observer is capable of observing an image for another point of view when the image observer moves by a distance about equal to half the distance between the left and right eyes of the image observer, the value of the distance DP merely needs to be reduced to half. If the value of the distance DP is reduced to 32.5 [mm], the distance Z1 is found to be about 16.2 [mm], and the aperture pitch RD is found to be about 1.58 [mm].

In the three-dimensional image display apparatus 1, a spacer shown in none of the figures is used for separating the image display section 10 and the optical separation section 30 from each other by the distance Z1 described above.

It is to be noted that the distance between the light emitting surface 21 of the illumination section 20 and the optical separation section 30 is not limited in particular. It is only necessary to set the distance between the light emitting surface 21 of the illumination section 20 and the optical separation section 30 at a proper value according to the specifications of the three-dimensional image display apparatus 1.

In the typical configuration described above, the value of the aperture pitch RD is about nine times the value of the sub-pixel pitch ND. Thus, M and P satisfy the relation $M \approx P \times 9$.

The distance Z1 and the aperture pitch RD are set so that the conditions described above are satisfied. With the conditions satisfied, at each of the view points $A_1$, $A_2$, ... and $A_9$ in each of the observation areas $WA_L$, $WA_C$ and $WA_R$, an image for a view point determined in advance can be observed.

Fig. 6 is a diagram showing a model used for explaining an image observed at the view points $A_1$ to $A_9$ in the observation area at the center. Fig. 7 is a diagram showing a model used for explaining an image observed at the view points $A_1$ to $A_9$ in the observation area on the right side.

As explained before by referring to Fig. 2, by taking an aperture 31 associated with a sub-pixel 12 on the nth row as a reference, an aperture 31 associated with a sub-pixel 12 on the (n + 1) th row is shifted in the -X direction by a distance about equal to the pitch of the sub-pixel 12. Thus, by replacing 'n' with 'n + 1' and replacing 'm' with 'm - 1' in the description given above, the description given above can be taken as an explanation for a sub-pixel 12 on the (n + 1) th row. In addition, by replacing 'n' with 'n - 1' and replacing 'm' with 'm + 1' in the description given above, the description given above can be taken as an explanation for a sub-pixel 12 on the (n - 1) th row.

Accordingly, if attention is paid to sub-pixels 12 on three rows adjacent to each other, it is obvious from Fig. 9 to be described later that sub-pixels 12 passed through by light propagating to a certain point of view are laid out by shifting the sub-pixels 12 from each other by a distance equal to the size of one sub-pixel 12 for every row. Each of pixels composing an image for every point of view is configured from a set of sub-pixels 12 laid out over the three rows.

Fig. 8 is a diagram showing a top view of a model provided for the optical separation section and a portion of the display area to serve as a model used for explaining sub-pixels composing every pixel of an image for a point of view in three-dimensional image display apparatus according to embodiments of the present disclosure.

If the nth row be a row in the middle of pixel rows, in Fig. 8, a set of a circle, a rectangle and an octangle enclosing the capitals R, G and B forms a pixel. An image for each point of view has a horizontal-direction pixel count J and a vertical-direction pixel count K. That is to say, the number of pixels in an image for each point of view is J x K. In this case, the relations J = M/9 and K = N/3 hold true where notations M and N denote a horizontal-direction sub-pixel count and a vertical-direction sub-pixel count respectively. Thus, for M = 5,760 and N = 1,080, the number of pixels in the image is J x K = 640 x 360. By referring to Figs. 9 to 12, the following description explains relations between pixels composing an image for each point of view and sub-pixels 12 composing the image display section.

Fig. 9 is a table showing view points to which light from (1, 1) th to (M, N)th sub-pixels propagates.

First of all, the description begins with discussion of pixels composing an image observed at a view point $A_4$. The image observed at a view point $A_4$ is configured from sub-pixels each marked by notation $A_4$ in the table shown in Fig. 9. As explained earlier, each of pixels composing an image for every point of view is configured from a set of sub-pixels 12 laid out over three rows. Each of pixels composing an image observed at a view point $A_4$ is denoted by reference numeral 412 and a pixel placed at the intersection of the jth column and the kth row is denoted by notation 412 (j, k) where j = 1, 2, ... and J and k = 1, 2, ... and K.

Fig. 10 is a table used for explaining the array of a set of sub-pixels 12 composing an image for a view point $A_4$.

As shown in Fig. 10, if attention is focused on a horizontal-direction array of pixels 412, it is obvious that each pixel 412 has nine sub-pixels placed on nine different columns, respectively. The total number of pixels 412 on each horizontal-direction array is J. If attention is focused on a vertical-direction array of pixels 412, on the other hand, it is obvious that each pixel 412 has three sub-pixels placed on three different rows, respectively. The total number of pixels 412 on each vertical-direction array is K. Thus, the pixels 412 are laid out to form a two-dimensional matrix having J x K pixels 412 or J pixels 412 per row and K pixels 412 per column. These pixels 412 compose an image observed at the view point $A_4$.

Next, the following description is given as discussion of pixels composing an image observed at a view point $A_5$. The image observed at a view point $A_5$ is configured from sub-pixels each marked by notation $A_5$ in the table shown in Fig. 9. Each of pixels composing an image observed at a view point $A_5$ is denoted by reference numeral 512 and a pixel placed at the intersection of the jth column and the kth row is denoted by notation 512 (j, k).

Fig. 11 is a table used for explaining the array of a set of sub-pixels composing an image for a view point $A_5$.

The pixels 512 are laid out in the same way as the pixels 412 explained above by referring to Fig. 10. As shown in Fig. 11, each pixel 512 has nine sub-pixels 12 placed on a horizontal-direction array on nine different columns respectively. The total number of pixels 512 on each horizontal-direction array is J. In addition, each pixel 512 has three sub-pixels 12 placed on a vertical-direction array on three different rows respectively. The total number of pixels 512 on each vertical-direction array is K. Thus, the pixels 512 are laid out to form a two-dimensional matrix having J x K pixels 512 or J pixels 512 per row and K pixels 512 per column. These J x K pixels 512 compose an image observed at the view point $A_5$.

As described above, an image observed at the view point $A_4$ is configured to include J x K pixels 412 laid out to form a matrix. By the same token, an image observed at the view point $A_5$ is configured to include J x K pixels 512 laid out to form a matrix. Fig. 12A is a diagram showing a top view of a model used for explaining the layout of pixels composing an image observed at the view point $A_4$, and Fig. 12B is a diagram showing a top view of a model used for explaining the layout of pixels composing an image observed at the view point $A_5$.

The explanation of pixels composing an image observed at another point of view is the same as the explanation described above except that the combination of sub-pixels composing each pixel for the other point of view is different from the combination described above. Thus, the explanation of pixels composing an image observed at any other point of view and the arrangement is omitted. It is to be noted that, in the following description, each of pixels composing an image observed at the view point $A_1$ is referred to as a pixel 112. By the same token, each of pixels composing an image observed at the view point $A_2$ is referred to as a pixel 212. Likewise, each of pixels composing an image observed at the view point $A_8$ is referred to as a pixel 812. In the same way, each of pixels composing an image observed at the view point $A_9$ is referred to as a pixel 912.

The above description has explained relations between pixels composing an image for each point of view and sub-pixels composing the image display section. Next, the following description explains multi-view-point image display data used for displaying a multi-view-point image on the image display section.

Fig. 13 is a diagram showing a model used for explaining a method for generating multi-view-point image display data on the basis of image data $D_1$ to image data $D_9$ for the view points $A_1$ to $A_9$ respectively.

As shown in Fig. 13, the image data $D_1$ is configured from a set of image data $D_{1_R}$ for red-color light emitting sub-pixels, image data $D_{1_G}$ for green-color light emitting sub-pixels and image data $D_{1_B}$ for blue-color light emitting sub-pixels. The other pieces of image data $D_2$ to $D_9$ are each configured in the same way as the image data $D_1$.

The image data $D_{1_R}$, the image data $D_{1_G}$ and the image data $D_{1_B}$ are each J x K pieces of data for respectively J x K pixels composing an image observed at the view point A1. The image data $D_{1_R}$ for a pixel placed at the intersection of the jth column and the kth row is denoted by notation $D_{1_R}$ (j, k) in some cases. By the same token, the image data $D_{1_G}$ for a pixel placed at the intersection of the jth column and the kth row is denoted by notation $D_{1_G}$ (j, k) in some cases. In the same way, the image data $D_{1_B}$ for a pixel placed at the intersection of the jth column and the kth row is denoted by notation $D_{1_B}$ (j, k) in some cases. In addition, these three pieces of image data having types different from each other, that is, the image data $D_{1_R}$ (j, k), the image data $D_{1_G}$ (j, k) and the image data $D_{1_B}$ (j, k) are collectively referred to as image data $D_1$ (j, k) in some cases. The other pieces of image data $D_2$ to $D_9$ are each configured in the same way as the image data $D_1$. In addition, pieces of data $D_{S1}$, $D_{S2}$, $D_{C1}$, $D_{C2}$ and $D_{av}$ to be described later are each configured in the same way as the image data $D_1$.

Fig. 14 shows a flowchart of a model used for explaining a method for selecting image data for a sub-pixel $12_{(m, n)}$ placed at the intersection of the mth column and the nth row.

The driving section 100 shown in Fig. 1 selects image data for the sub-pixel $12_{(m, n)}$ in accordance with the flowchart shown in Fig. 14 in order to generate multi-view-point image display data and drives the image display section in accordance with the multi-view-point image display data. A method for selecting image data is explained by referring to the flowchart shown in Fig. 14 as follows.

As shown in Fig. 9, in the three-dimensional image display apparatus 1 according to an embodiment, light rays from the sub-pixels 12 placed at intersections of the first to ninth columns and the first row in the image display section 10 propagate to view points $A_1$ to $A_9$ respectively. Light rays from sub-pixels 12 on the 10th and subsequent columns repeat the same relations as the light rays from the sub-pixels 12 on the first to ninth columns. In addition, as described earlier, sub-pixels 12 passed through by light rays propagating to a certain point of view are shifted from each other by a distance equal to the size of a sub-pixel for every row.

Thus, a view point toward which light coming from a sub-pixel $12_{(m, n)}$ placed at the intersection of the mth column and the nth row propagates is referred to as a view point $A_Q$ where suffix Q is an integer in the range 1 to 9. The value of Q is expressed by Eq. (5) given below. In Eq. (5), notation mod (dividend, divisor) implies a remainder of dividing the dividend by the divisor.

$$Q = \mathrm{mod}\ (m+n-2,\ 9) + 1 \quad \ldots \quad (5)$$

Fig. 15 shows a table used for explaining a Q value computed in accordance with Eq. (5) given above as the Q value of a view point $A_Q$ to which light from (1, 1) st to (M, N)th sub-pixels propagates.

In addition, if the sub-pixel $12_{(m, n)}$ is one of sub-pixels composing a pixel placed at the intersection of the jth column and the kth row in an image for the view point $A_Q$ (where j = 1, 2, ... and J and k = 1, 2, ... and K), the values of j and k are expressed by respectively Eqs. (6) and (7) given below. It is to be noted that, in Eqs. (6) and (7), notation INT (argument) is a function of finding an integer from the argument by truncating the fraction part of the argument.

$$j = \mathrm{INT}\ ([\mathrm{mod}\ (n-1,\ 3) + m-1]/9) + 1 \quad \ldots \quad (6)$$

$$k = \mathrm{INT}\ ((n-1)/3) + 1 \quad \ldots \quad (7)$$

Fig. 16 is a table showing j values computed on the basis of Eq. (6) as j values for (1, 1)st to (M, N)th sub-pixels. On the other hand, Fig. 17 shows a table showing k values computed on the basis of Eq. (7) as k values for (1, 1)st to (M, N)th sub-pixels.

In addition, a sub-pixel on the mth column is a sub-pixel emitting light having a red color if the remainder of dividing (m - 1) by 3 is 0, a sub-pixel on the mth column is a sub-pixel emitting light having a green color if the remainder of dividing (m - 1) by 3 is 1, and a sub-pixel on the mth column is a sub-pixel emitting light having a blue color if the remainder of dividing (m - 1) by 3 is 2.

Thus, a sub-pixel $12_{(m, n)}$ placed at the intersection of the mth column and the nth row is associated with red-color display data for the view point $A_Q$ if mod (m-1, 3) = 0, the sub-pixel $12_{(m, n)}$ is associated with green-color display data for the view point $A_Q$ if mod (m-1, 3) = 1, and the sub-pixel $12_{(m, n)}$ is associated with blue-color display data for the view point $A_Q$ if mod (m-1, 3) = 2.

If the effect of the reverse view is not to be reduced, the view points $A_1$ to $A_9$ are associated with image data $D_1$ to image data $D_9$ respectively as they are. On the other hand, the embodiments carry out processing including an operation of properly replacing image data for some points of view with image data for other points of view.

In order to make the explanation easier to understand, this paragraph explains selection of data for a case in which the effect of the reverse view is not to be reduced. If the effect of the reverse view is not to be reduced, a sub-pixel $12_{(m, n)}$ placed at the intersection of the mth column and the nth row is associated with image data $D_{Q_R}$ (j, k) if mod (m-1, 3) = 0. Also, the sub-pixel $12_{(m, n)}$ is associated with image data $D_{Q_G}$ (j, k) if mod (m-1, 3) = 1, and the sub-pixel $12_{(m, n)}$ is associated with image data $D_{Q_B}$ (j, k) if mod (m-1, 3) = 2.

Due to a relation based on sets each having sub-pixels 12 for which pixels composing an image for a point of view are laid out in an inclined direction, as shown in Fig. 16, for some sub-pixels 12 each placed at the intersection of the (M-1) th column and the Mth row, the value of j exceeds the value of J which is 640 in the case of this embodiment. Since there is no image data associated with such sub-pixels 12, it is nice to associate the sub-pixels 12 with image data by carrying out exception processing such as an operation of making use of the value of J as the value of j (that is, j = J) . The reader is advised to keep in mind that it is possible to provide a configuration in which the data of an image for every point of view includes (J + 1) x K pieces of data. In this case, the exception processing cited above is not required.

By selecting image data in accordance with the procedure described above, it is possible to generate multi-view-point image display data used for displaying a multi-view-point image on the image display section.

[3. Explanation of operations carried out by the three-dimensional image display apparatus without reduction of the effect of the reverse view]

Fig. 18 is a diagram showing a top view of a model created for a portion of a display area 11 to serve as a model used for explaining data of an image which is displayed on an image display section 10 when the effect of the reverse view is not reduced.

Notations D1 to D9 shown in Fig. 18 each denote the type of image data used for driving a sub-pixel 12. In the typical example shown in Fig. 18, the (m, n)th sub-pixel 12 is a red-color light emitting sub-pixel denoted by notation $D_s$. This sub-pixel 12 is associated with image data $D_{5_R}$ (j, k). Other sub-pixels for other colors can be interpreted in the same way.

When the left and right eyes of the image observer are both located in the same observation area, the image observer recognizes the image as a three-dimensional image. For example, the left and right eyes of the image observer are located at respectively view points $A_4$ and $A_5$ in the observation area $WA_C$ shown in Fig. 1. In this case, an image observed by the left eye is created by light originating from sub-pixels 12 and propagating to the view point $A_4$, and an image observed by the right eye is created by light originating from sub-pixels 12 and propagating to the view point $A_5$.

Fig. 19 is a diagram showing a top view of a model created for a portion of a display area 11 for explaining pixels composing an image observed by the left eye of the image observer and pixels composing an image observed by the right eye of the image observer when the left and right eyes are positioned at the view points $A_4$ and $A_5$ respectively.

Notations $A_4$ and $A_5$ shown in Fig. 19 each denote a view point to which light propagates from a sub-pixel 12. Since notations $D_4$ and $D_5$ have been explained before by referring to Fig. 18, explanations of $D_4$ and $D_5$ are omitted.

The image observer makes use of the left eye to observe an image created by sub-pixels driven by the image data $D_4$ and makes use of the right eye to observe an image created by sub-pixels driven by the image data $D_5$.

Fig. 20A is a diagram showing a top view of a model used for explaining an image observed by the left eye. Fig. 20B is a diagram showing a top view of a model used for explaining an image observed by the right eye.

The image observer makes use of the left eye to observe an image created by pixels 412 on the basis of image data $D_4$ (1, 1) to image data $D_4$ (J, K) (as shown in Fig. 20A), and the image observer makes use of the right eye to observe an image created by pixels 512 on the basis of image data $D_5$ (1, 1) to image data $D_5$ (J, K) (as shown in Fig. 20B) . Due to disparities between the images observed by the left and right eyes, the image observer recognizes the image as a three-dimensional image.

When the left and right eyes of the image observer are located in different observation areas, on the other hand, a reverse-view phenomenon occurs. In the reverse-view phenomenon, conversely, the image for the left eye is observed by the right eye whereas the image for the right eye is observed by the left eye. The image observer perceives an image in which the front and rear portions are swapped with each other. As a result, the image observer feels unnaturalness and discomforts.

For example, if the left eye of the image observer is located at a view point $A_9$ in the left-side observation area $WA_L$ shown in Fig. 1 and the right eye of the image observer is located at a view point $A_1$ in the center observation area

$WA_C$, an image observed by the left eye is created by light originating from sub-pixels 12 and propagating to the view point $A_9$, and an image observed by the right eye is created by light originating from sub-pixels 12 and propagating to the view point $A_1$.

Fig. 21 is a diagram showing a top view of a model created for a portion of a display area for explaining pixels composing an image observed by the left eye of the image observer and pixels composing an image observed by the right eye of the image observer when the left and right eyes are positioned at the view points $A_9$ and $A_1$ respectively.

Notations $A_1$ and $A_9$ shown in Fig. 21 each denote a view point to which light propagates from a sub-pixel. Since notations $D_1$ and $D_9$ have been explained before by referring to Fig. 18, explanations of $D_1$ and $D_9$ are omitted.

The image observer makes use of the left eye to observe an image created by sub-pixels driven by the image data $D_9$ and makes use of the right eye to observe an image created by sub-pixels driven by the image data $D_9$.

Fig. 22A is a diagram showing a top view of a model used for explaining an image observed by the left eye. Fig. 22B is a diagram showing a top view of a model used for explaining an image observed by the right eye.

The image observer makes use of the left eye to observe an image created by pixels 912 on the basis of image data $D_9$ (1, 1) to image data $D_9$ (J, K) as shown in Fig. 22A, and the image observer makes use of the right eye to observe an image created by pixels 112 on the basis of image data $D_1$ (1, 1) to image data $D_1$ (J, K) as shown in Fig. 22B. Thus, since the image for the right eye is observed by the left eye and the image for the left eye is observed by the right eye, the reverse-view phenomenon occurs, causing the image observer to feel unnaturalness and discomforts.

[4. First embodiment]

A first embodiment implements a three-dimensional image display apparatus according to the first embodiment of the present disclosure and a method for driving the three-dimensional image display apparatus.

In the first embodiment, a pair of images are put in a reverse-view relation in the vicinity of an edge of an observation area. In order to solve this problem, both the images of the pair are displayed by making use of data different from pieces of image data provided for points of view. The data different from pieces of image data provided for points of view is data obtained by combining pieces of image data having a plurality of types. To put it more concretely, the pieces of image data having a plurality of types are pieces of image data provided for different points of view. In an image displayed on the basis of data obtained by combining pieces of image data having a plurality of types, components of the pieces of image data having a plurality of types are alternately laid out to create a stripe state.

An outline of the operation carried out by the first embodiment to generate multi-view-point image display data is explained as follows. A plurality of pieces of image data provided for a plurality of different view points are combined in order to generate data $D_{S1}$ to be described later. To put it more concretely, the pieces of image data are image data $D_1$ and image data $D_9$. Then, a view point $A_1$ is associated with the data $D_{S1}$ replacing the image data $D_1$. By the same token, a view point $A_9$ is also associated with the data $D_{S1}$ replacing the image data $D_9$. It is to be noted that the view points $A_2$ to $A_8$ are associated with image data $D_2$ to image data $D_8$ respectively without modifying these pieces of image data. Then, multi-view-point image display data is generated in accordance with the flowchart shown in Fig. 14.

The image display section 10 is driven to operate on the basis of the multi-view-point image display data generated as described above. By driving the image display section 10 to operate in this way, even if a pair of images are put in a reverse-view relation in the vicinity of an edge of an observation area, both the images of the pair can each be displayed by combining pieces of image data associated with images for a plurality of view points.

Fig. 23A is a diagram showing a model used for explaining a method for generating data $D_{S1}$ (j, k) in the first embodiment. Fig. 23B is a diagram showing a model used for explaining operations carried out to generate multi-view-point image display data in the first embodiment.

As is obvious from an equation shown in Fig. 23A, if the value of j is an odd number, the data $D_{S1}$ (j, k) is set at the image data $D_1$ (j, k), that is, $D_{S1}$ (j, k) = $D_1$ (j, k) and, if the value of j is an even number, on the other hand, the data $D_{S1}$ (j, k) is set at the image data $D_9$ (j, k), that is, $D_{S1}$ (j, k) = $D_9$ (j, k) . That is to say, the data $D_{S1}$ (j, k) is generated by alternately laying out components of image data for the view point $A_1$ and image data for the view point $A_9$ to create a stripe state.

The image data $D_1$ to the image data $D_9$ are supplied to the driving section 100 without modifying these pieces of image data. Then, the driving section 100 generates the data $D_{S1}$ on the basis of the operation shown in Fig. 23A, replacing the image data associated with the view point $A_1$ with the data $D_{S1}$ and the image data associated with the view point $A_9$ also with the data $D_{S1}$. It is to be noted that, a configuration in which the data $D_{S1}$ is generated by a section external to the driving section 100 is also possible.

Figs. 24A and 24B are diagrams showing top views of models used for explaining an image observed by the left eye of the image observer and an image observed by the right eye of the image observer when the left and right eyes are positioned at the view points $A_9$ and $A_1$ respectively.

As shown in Figs. 24A and 24B, in each of the two images observed at the view points $A_9$ and $A_1$ respectively, components of 2 images for the view points $A_1$ and $A_9$ respectively are laid out alternately to create a stripe state. To put it more concretely, image components stretched to create a stripe state in the column direction are alternately laid out in the row direction. Since the two images observed at the view points $A_9$ and $A_1$ respectively are the same image, however, there is no disparity between the two images. In this way, it is possible to decrease the absolute value of the magnitude of a disparity between the two images included in a pair as two images put in a reverse-view relation.

Thus, when the left and right eyes of the image observer are put at view points $A_9$ and $A_1$ respectively, the image observer recognizes a planar image obtained as a result of superposing two images for the view points $A_9$ and $A_1$ on each other. As a result, the image observer does not feel unnaturalness and a discomfort which are caused by a reverse-view phenomenon. Even if a plurality of image observers observe an image displayed on the same three-dimensional image display apparatus from different locations, it is possible to reduce unnaturalness and a discomfort caused by a reverse-view phenomenon without a problem.

Each of the images observed at the view points $A_1$ and $A_9$ includes components of images for the view points $A_1$ and $A_9$. Thus, when the left and right eyes of the image observer are put at the view points $A_1$ and $A_2$ respectively, an image component included in an image observed by the left eye as an image component for the view point $A_9$ and an image component included in an image observed by the right eye as an image component for the view point $A_2$ are put in a reverse-view relation. However, the image observed by the left eye also includes image components for the view point $A_1$ and, this image and the image provided for the view point $A_2$ to be observed by the right eye are put in a normal three-dimensional view relation. Thus, the image observer does not strongly feel unnaturalness and a discomfort caused by the reverse-view phenomenon described above. In addition, also when the left and right eyes of the image observer are put at the view points $A_8$ and $A_9$ respectively, an image provided for the view point $A_8$ to be observed by the left eye and an image component provided for the view point $A_1$ as an image component included in an image observed by the right eye are put in a reverse-view relation. However, the image observed by the right eye also includes image components for the view point $A_9$ and, this image and the image provided for the view point $A_2$ to be observed by the right eye are put in a normal three-dimensional view relation. Thus, the image observer never strongly does not feel unnaturalness and a discomfort caused by the reverse-view phenomenon described above.

As described above, the image data $D_1$ and the image data $D_9$ are combined in order to generate the data $D_{S1}$. However, it is also possible to provide a configuration in which the image data $D_2$ and the image data $D_8$ are combined or a configuration in which the image data $D_3$ and the image data $D_7$ are combined. As another alternative, it is also possible to provide a configuration in which data obtained by reworking the image data $D_1$ and data obtained by reworking the image data $D_9$ are typically combined. It is only necessary to properly select a combination of pieces of image data in accordance with the design of the three-dimensional image display apparatus.

In addition, it is also possible to provide a configuration in which three or more pieces of image data with different types are combined in order to generate the data $D_{S1}$. For example, it is also possible to provide a configuration in which the image data $D_1$, the image data $D_5$ and the image data $D_9$ are combined or a configuration in which the image data $D_2$, the image data $D_5$ and the image data $D_8$ are combined. As an alternative, it is also possible to provide a configuration in which data obtained by reworking the image data $D_1$, data obtained by reworking the image data $D_5$ and data obtained by reworking the image data $D_9$ are typically combined.

[5. Second embodiment]

A second embodiment is obtained by modifying the first embodiment. In the case of the first embodiment, each of the view points $A_1$ and $A_9$ is associated with the same data $D_{S1}$. In the case of the second embodiment, on the other hand, the view points $A_1$ and $A_9$ are associated with different pieces of data as follows.

An outline of the operation carried out by the second embodiment to generate multi-view-point image display data is explained as follows. A plurality of pieces of image data provided for a plurality of different view points are combined in order to generate data $D_{S2}$ to be described later in addition to the data $D_{S1}$ explained above in the description of the first embodiment. To put it more concretely, the pieces of image data are image data $D_1$ and image data $D_9$. Then, a view point $A_1$ is associated with the data $D_{S1}$ replacing the image data $D_1$. On the other hand, a view point $A_9$ is associated with the data $D_{S2}$ replacing the image data $D_9$. It is to be noted that the view points $A_2$ to $A_8$ are associated with image data $D_2$ to image data $D_8$ respectively without modifying these pieces of image data. Then, multi-view-point image display data is generated in accordance with the flowchart shown in Fig. 14.

The image display section 10 is driven to operate on the basis of the multi-view-point image display data generated as described above. By driving the image display section 10 to operate in this way, even if a pair of images are put in a reverse-view relation in the vicinity of an edge of an observation area, both the images of the pair can each be displayed by combining pieces of image data associated with images for a plurality of view points.

Fig. 25A is a diagram showing a model used for explaining a method for generating data $D_{S2}$ (j, k) in the second embodiment and Fig. 25B is a diagram showing a model used for explaining operations carried out to generate multi-view-point image display data in the second embodiment.

The method for generating the data $D_{S1}$ (j, k) has been explained by referring to Fig. 23A in the description of the first embodiment. It is thus unnecessary to explain the method again.

As is obvious from comparison of Fig. 25A with Fig. 23A, the pieces of data selected as the data $D_{S1}$ (j, k) are swapped with each other in order to obtain pieces of data to be selected as the data $D_{S2}$ (j, k). That is to say, if the value of j is an odd number, the data $D_{S2}$ (j, k) is set at the image data $D_9$ (j, k), that is, $D_{S2}$ (j, k) = $D_9$ (j, k) and, if the value of j is an even number, on the other hand, the data $D_{S2}$ (j, k) is set at the image data $D_1$ (j, k), that is, $D_{S2}$ (j, k) = $D_1$ (j, k). In this way, the data $D_{S2}$ (j, k) is also generated by alternately laying out components of image data for the view point $A_1$ and image data for the view point $A_9$ to create a stripe state.

Figs. 26A and 26B are diagrams showing top views of models used for explaining an image observed by the left eye of the image observer and an image observed by the right eye of the image observer when the left and right eyes are positioned at the view points $A_9$ and $A_1$ respectively.

As shown in Figs. 26A and 26B, in each of the two images observed at the view points $A_9$ and $A_1$ respectively, components of two images for the view points $A_1$ and $A_9$ respectively are laid out alternately to create a stripe state. To put it more concretely, image components stretched to create a stripe state in the column direction are alternately laid out in the row direction. The two images observed at the view points $A_9$ and $A_1$ respectively have different stripe layout phases. Since these two images are perceived virtually as all but the same image, however, there is essentially no disparity between the two images. In this way, it is possible to decrease the absolute value of the magnitude of a disparity between the two images included in a pair as two images put in a reverse-view relation.

Thus, when the left and right eyes of the image observer are put at the view points $A_9$ and $A_1$ respectively, the image observer recognizes a planar image obtained as a result of superposing two images for the view points $A_9$ and $A_1$ on each other. As a result, the image observer never feels unnaturalness and a discomfort which are caused by a reverse-view phenomenon.

As explained earlier in the description of the first embodiment, it is also possible to provide a configuration in which the image data $D_2$ and the image data $D_8$ are typically combined in order to generate the data $D_{S2}$. As another alternative, it is also possible to provide a configuration in which in which three or more pieces of image data with different types are typically combined in order to generate the data $D_{S2}$. It is only necessary to properly select a combination of pieces of image data in accordance with the design of the three-dimensional image display apparatus.

[6. Third embodiment]

A third embodiment also implements a three-dimensional image display apparatus according to the first embodiment of the present disclosure and a method for driving the three-dimensional image display apparatus.

Also in the case of the third embodiment, a pair of images are put in a reverse-view relation in the vicinity of an edge of an observation area. In order to solve this problem, both the images of the pair are displayed by making use of data different from pieces of image data provided for points of view. The data different from pieces of image data provided for points of view is data obtained by combining pieces of image data having a plurality of types. To put it more concretely, the pieces of image data having a plurality of types are pieces of image data provided for different points of view. In an image displayed on the basis of data obtained by combining pieces of image data having a plurality of types, components of the pieces of image data having a plurality of types are laid out to form a checker board pattern.

In the third embodiment, a plurality of pieces of image data provided for a plurality of different view points are combined in order to generate data $D_{C1}$ to be described later. To put it more concretely, the pieces of image data are image data $D_1$ and image data $D_9$. Then, a view point $A_1$ is associated with the data $D_{C1}$ replacing the image data $D_1$. By the same token, a view point $A_9$ is also associated with the data $D_{C1}$ replacing the image data $D_9$. It is to be noted that the view points $A_2$ to $A_8$ are associated with image data $D_2$ to image data $D_8$ respectively without modifying these pieces of image data. Then, multi-view-point image display data is generated in accordance with the flowchart shown in Fig. 14.

The image display section 10 is driven to operate on the basis of the multi-view-point image display data generated as described above. By driving the image display section 10 to operate in this way, even if a pair of images are put in a reverse-view relation in the vicinity of an edge of an observation area, both the images of the pair can each be displayed by combining pieces of image data associated with images for a plurality of view points.

Fig. 27A is a diagram showing a model used for explaining a method for generating data $D_{C1}$ (j, k) in the third embodiment and Fig. 27B is a diagram showing a model used for explaining operations carried out to generate multi-view-point image display data in the third embodiment.

As is obvious from an equation shown in Fig. 27A, if the value of (j + k) is an odd number, the data $D_{C1}$ (j, k) is set at the image data $D_1$ (j, k), that is, $D_{C1}$ (j, k) = $D_1$ (j, k) and, if the value of (j + k) is an even number, on the other hand, the data $D_{C1}$ (j, k) is set at the image data $D_9$ (j, k), that is, $D_{C1}$ (j, k) = $D_9$ (j, k)· That is to say, the data $D_{C1}$ (j, k) is generated by combining components of image data for the view point $A_1$ and image data for the view point $A_9$ to form a checker board pattern.

The image data $D_1$ to the image data $D_9$ are supplied to the driving section 100 without modifying these pieces of image data. Then, the driving section 100 generates the data $D_{C1}$ on the basis of the operation shown in Fig. 27A, replacing the image data associated with the view point $A_1$ with the data $D_{C1}$ and the image data associated with the view point $A_9$ also with the data $D_{C1}$. However, it is also possible to provide a configuration in which the data $D_{C1}$ is generated by a section external to the driving section 100.

Figs. 28A and 28B are diagrams showing top views of models used for explaining an image observed by the left eye of the image observer and an image observed by the right eye of the image observer when the left and right eyes are positioned at the view points $A_9$ and $A_1$ respectively.

As shown in Figs. 28A and 28B, in each of the two images observed at the view points $A_9$ and $A_1$ respectively, components of two images for the view points $A_1$ and $A_9$ respectively are laid out to form a checker board pattern. To put it more concretely, image components are laid out for every pixel to form a checker board pattern. Since the two images observed at the view points $A_9$ and $A_1$ respectively are the same image, there is no disparity between the two images. In this way, it is possible to decrease the absolute value of the magnitude of a disparity between the two images included in a pair as two images put in a reverse-view relation.

Thus, when the left and right eyes of the image observer are put at the view points $A_9$ and $A_1$ respectively, the image observer recognizes a planar image obtained as a result of superposing two images for the view points $A_9$ and $A_1$ on each other. As a result, the image observer never feels unnaturalness and a discomfort which are caused by a reverse-view phenomenon. Even if a plurality of image observers observe an image displayed on the same three-dimensional image display apparatus from different locations, it is possible to reduce unnaturalness and a discomfort which are caused by a reverse-view phenomenon without a problem.

In addition, unlike the first embodiment, the components of the two images are laid out to form a checker board pattern. Thus, the image observer is capable of recognizing a planar image obtained as a result of superposing two images for the two points of view on each other as a smoother image. The operation carried out by the third embodiment to generate multi-view-point image display data is slightly more complicated than the operation carried out by the first embodiment to generate the multi-view-point image display data. However, the third embodiment has a merit that the displayed image can be made smoother.

Also in the case of the third embodiment, each of the images observed at the view points $A_1$ and $A_9$ includes image components for the view points $A_1$ and $A_9$. Thus, the image observer never strongly feels unnaturalness and a discomfort which are caused by a reverse-view phenomenon when the image observer observes an image at the view points $A_1$ and $A_2$ or observes an image at the view points $A_8$ and $A_9$.

As described above, the data $D_{C1}$ is generated by combining the image data $D_1$ with the image data $D_9$. As explained earlier in the description of the first embodiment, however, it is also possible to provide a configuration in which the image data $D_2$ and the image data $D_8$ are typically combined in order to generate the data $D_{C1}$. As another alternative, it is also possible to provide a configuration in which in which three or more pieces of image data with different types are typically combined in order to generate the data $D_{C1}$ It is only necessary to properly select a combination of pieces of image data in accordance with the design of the three-dimensional image display apparatus.

[7. Fourth embodiment]

A fourth embodiment is obtained by modifying the third embodiment. In the case of the third embodiment, each of the view points $A_1$ and $A_9$ is associated with the same data $D_{C1}$. In the case of the fourth embodiment, on the other hand, the view points $A_1$ and $A_9$ are associated with different pieces of data as follows.

An outline of the operation carried out by the fourth embodiment to generate multi-view-point image display data is explained as follows. A plurality of pieces of image data provided for a plurality of different view points are combined in order to generate data $D_{C2}$ to be described later in addition to the data $D_{C1}$ explained above in the description of the third embodiment. Then, a view point $A_1$ is associated with the data $D_{C1}$ replacing the image data $D_1$. On the other hand, a view point $A_9$ is associated with the data $D_{C2}$ replacing the image data $D_9$. It is to be noted that the view points $A_2$ to $A_8$ are associated with image data $D_2$ to image data $D_8$ respectively without modifying these pieces of image data. Then, multi-view-point image display data is generated in accordance with the flowchart shown in Fig. 14.

The image display section 10 is driven to operate on the basis of the multi-view-point image display data generated as described above. By driving the image display section 10 to operate in this way, even if a pair of images are put in a reverse-view relation in the vicinity of an edge of an observation area, both the images of the pair can each be displayed by combining pieces of image data associated with images for a plurality of view points.

Fig. 29A is a diagram showing a model used for explaining a method for generating data $D_{C2}$ (j, k) in the fourth embodiment and Fig. 29B is a diagram showing a model used for explaining an operation carried out to generate multi-view-point image display data in the fourth embodiment.

The method for generating the data $D_{C1}$ (j, k) has been explained by referring to Fig. 27A in the description of the third embodiment. Thus the description thereof is skipped.

As is obvious from comparison of Fig. 29A with Fig. 27A, the pieces of data selected as the data $D_{C1}$ (j, k) are swapped with each other in order to obtain pieces of data to be selected as the data $D_{C2}$ (j, k). That is to say, if the value of (j + k) is an odd number, the data $D_{C2}$ (j, k) is set at the image data $D_9$ (j, k), that is, $D_{C2}$ (j, k) = Dg (j, k) and, if the value of (j + k) is an even number, on the other hand, the data $D_{C2}$ (j, k) is set at the image data $D_1$ (j, k), that is, $D_{C2}$ (j, k) = $D_1$ (j, k). In this way, the data $D_{C2}$ (j, k) is also generated by combining components of image data for the view point $A_1$ and image data for the view point $A_9$ to form a checker board pattern.

Figs. 30A and 30B are diagrams showing top views of models used for explaining an image observed by the left eye of the image observer and an image observed by the right eye of the image observer when the left and right eyes are positioned at the view points $A_9$ and $A_1$ respectively.

As shown in Figs. 30A and 30B, in each of the two images observed at the view points $A_9$ and $A_1$ respectively, components of two images for the view points $A_1$ and $A_9$ respectively are laid out to form a checker board pattern. To put it more concretely, for each pixel, image components are laid out to form a checker board pattern. The two images observed at the view points $A_9$ and $A_1$ respectively have different phases of the array of the checker board pattern. Since these two images are perceived virtually as all but the same image, however, there is essentially no disparity between the two images. In this way, it is possible to decrease the absolute value of the magnitude of a disparity between the two images included in a pair as two images put in a reverse-view relation.

Thus, when the left and right eyes of the image observer are put at the view points $A_9$ and $A_1$ respectively, the image observer recognizes a planar image obtained as a result of superposing two images for the view points $A_9$ and $A_1$ on each other. As a result, the image observer never feels unnaturalness and a discomfort which are caused by a reverse-view phenomenon. In addition, in the case of the fourth embodiment, the two images observed at the view points $A_9$ and $A_1$ respectively have different phases of the array of the checker board pattern. Thus, the image observer recognizes a planar image more smoothly.

As explained earlier in the description of the first embodiment, also in the case of the fourth embodiment, it is also possible to provide a configuration in which the image data $D_2$ and the image data $D_8$ are typically combined in order to generate the data $D_{C2}$. As another alternative, it is also possible to provide a configuration in which in which three or more pieces of image data with different types are typically combined in order to generate the data $D_{C2}$. It is only necessary to properly select a combination of pieces of image data in accordance with the design of the three-dimensional image display apparatus.

[8. Fifth embodiment]

A fifth embodiment also implements a three-dimensional image display apparatus according to the first embodiment of the present disclosure and a method for driving the three-dimensional image display apparatus.

Also in the case of the fifth embodiment, a pair of images are put in a reverse-view relation in the vicinity of an edge of an observation area. In order to solve this problem, both the images of the pair are displayed by making use of data different from pieces of image data provided for points of view. The data different from pieces of image data provided for points of view is data obtained by computing the average of pieces of image data having a plurality of types. To put it more concretely, the pieces of image data having a plurality of types are pieces of image data provided for different points of view. In the following description, the average is assumed to be an arithmetic average also referred to as an average mean.

Fig. 31A is a diagram showing a model used for explaining a method for generating data $D_{av}$ (j, k) in the fifth embodiment and Fig. 31B is a diagram showing a model used for explaining an operation carried out to generate multi-view-point image display data in the fifth embodiment.

An outline of the operation carried out by the fifth embodiment to generate multi-view-point image display data is explained as follows. In the fifth embodiment, data $D_{av}$ is generated on the basis of data found by computing an arithmetic average from a plurality of pieces of image data provided for a plurality of different view points. To put it more concretely, the pieces of image data are image data $D_1$ and image data $D_9$. Then, a view point $A_1$ is associated with the data $D_{av}$ replacing the image data $D_1$. By the same token, a view point $A_9$ is associated with the data $D_{av}$ replacing the image data $D_9$. It is to be noted that the view points $A_2$ to $A_8$ are associated with image data $D_2$ to image data $D_8$ respectively without modifying these pieces of image data. Then, multi-view-point image display data is generated in accordance with the flowchart shown in Fig. 14.

As shown in Fig. 31A, the arithmetic average is found for data for sub-pixels emitting light having a red color, for data for sub-pixels emitting light having a green color and for data for sub-pixels emitting light having a blue color. To put it more concretely, the data $D_{av}$ (j, k) is a set including data $D_{av-R}$ (j, k), data $D_{av-G}$ (j. k) and data $D_{av-B}$ (j, k). The data $D_{av-R}$ (j, k) is data representing the arithmetic average of data $D_{1_R}$ (j, k) and data $D_{9-R}$ (j, k). By the same token, the data $D_{av_G}$ (j, k) is data representing the arithmetic average of data $D_{1_G}$ (j, k) and data $D_{9-G}$ (j, k). In the same way, the data $D_{av_B}$ (j, k) is data representing the arithmetic average of data $D_{1_B}$ (j, k) and data $D_{9_B}$ (j, k).

The image data $D_1$ to the image data $D_9$ are supplied to the driving section 100 without modifying these pieces of image data. Then, the driving section 100 generates the data $D_{av}$ on the basis of the operation shown in Fig. 31A, replacing the image data associated with the view point $A_1$ with the data $D_{av}$ and the image data associated with the view point $A_9$ also with the data $D_{av}$. However, it is also possible to provide a configuration in which the data $D_{av}$ is generated by a section external to the driving section 100.

Figs. 32A and 32B are diagrams showing top views of models used for explaining an image observed by the left eye of the image observer and an image observed by the right eye of the image observer when the left and right eyes are positioned at the view points $A_9$ and $A_1$ respectively.

As shown in Figs. 32A and 32B, when the left and right eyes of the image observer are positioned at view points $A_9$ and $A_1$ respectively, both the eyes observe images based on the data $D_{av}$. Since the two images observed at the view points $A_9$ and $A_1$ respectively are the same image, there is no disparity between the two images. In this way, it is possible to decrease the absolute value of the magnitude of a disparity between the two images included in a pair as two images put in a reverse-view relation.

Thus, when the left and right eyes of the image observer are put at the view points $A_9$ and $A_1$ respectively, the image observer recognizes a planar image obtained as a result of superposing two images for the view points $A_9$ and $A_1$ on each other. As a result, the image observer never feels unnaturalness and a discomfort which are caused by a reverse-view phenomenon. Even if a plurality of image observers observe an image displayed on the same three-dimensional image display apparatus from different locations, it is possible to reduce unnaturalness and a discomfort which are caused by a reverse-view phenomenon without a problem.

The data $D_{av}$ reflects the values of the image data $D_1$ and the image data $D_9$. Thus, when the left and right eyes of the image observer are put at the view points $A_1$ and $A_2$ respectively, there is a reverse-view relation between the image to be observed by the left eye at the view point $A_1$ and the image to be observed by the right eye at the view point $A_2$. Since the data $D_{av}$ also reflects the value of the image data $D_1$, however, the image observer never strongly feels unnaturalness and a discomfort which are caused by the reverse-view relation. It is to be noted that, even for a case in which the left and right eyes of the image observer are put at the view points $A_8$ and $A_9$ respectively, the above description basically holds true.

As described above, the data $D_{av}$ is found by making use of the image data $D_1$ and the image data $D_9$. However, it is also possible to provide a configuration in which the data $D_{av}$ is found by making use of the image data $D_2$, the image data $D_8$ or the like. In addition, it is also possible to provide a configuration in which the data $D_{av}$ is found by making use of the image data $D_3$, the image data $D_7$ or the like. It is only necessary to properly select a combination of pieces of image data in accordance with the design of the three-dimensional image display apparatus as pieces of image data to be used for finding the data $D_{av}$.

In addition, it is also possible to provide a configuration in which the data $D_{av}$ is found by making use of three or more pieces of image data. For example, it is also possible to provide a configuration in which the data $D_{av}$ is found by making use of the image data $D_1$, the image data $D_5$, the image data $D_9$ and/or the like or a configuration in which the data $D_{av}$ is found by making use of the image data $D_2$, the image data $D_5$, the image data $D_8$ and/or the like.

[9. Sixth embodiment]

A sixth embodiment implements a three-dimensional image display apparatus according to the second embodiment of the present disclosure and a method for driving the three-dimensional image display apparatus.

Also in the case of the sixth embodiment, a pair of images are put in a reverse-view relation in the vicinity of an edge of an observation area. In order to solve this problem, both the images of the pair are created by displaying a plurality of pieces of image data having different types on a time-division basis. The pieces of image data are pieces of image data for different points of view.

Fig. 33 is a diagram showing a model used for explaining an operation carried out in the sixth embodiment.

An outline of the operation carried out by the sixth embodiment to generate multi-view-point image display data is explained as follows. In the sixth embodiment, an image configured to include a pair of frames having a typical frame frequency of 120 hertz is displayed. The two frames of the pair are referred to as a first half frame and a second half frame respectively. The first-half and second-half frames pertaining to the frame pair of an image at each of the view points $A_1$ and $A_9$ are associated with different pieces of image data. To put it more concretely, the view point $A_1$ is associated with the image data $D_1$ and the image data $D_9$ as the first half frame and the second half frame respectively. On the other hand, the view point $A_9$ is associated with the image data $D_9$ and the image data $D_1$ as the first half frame and the second half frame respectively. It is to be noted that, for the view points $A_2$ to $A_8$, both the first half frame and the second half frame are associated with the image data $D_2$ to the image data $D_8$ respectively without modifying these pieces of image data. Thus, the images for the view points $A_1$ and $A_9$ are each created by displaying a plurality of pieces of image data for a plurality of view points on a time-division basis.

Figs. 34A and 34B are diagrams showing top views of models used for explaining images of a first half frame and a second half frame when the left eye of the image observer is positioned at a view point $A_9$ and Figs. 35A and 35B are diagrams showing top views of models used for explaining images of a first half frame and a second half frame when the right eye of the image observer is positioned at a view point $A_1$.

The switching between the first half frame and the second half frame is carried out at such a speed that the image observer does not perceive the individual images. Thus, the image observer perceives an image obtained as a result of superposing the images of the first half frame and the second half frame on each other due to the effect of a residual-image phenomenon of the perception. As a result, since the two images observed at the view points $A_9$ and $A_1$ respectively are virtually the same image, there is no disparity between the two images. In this way, it is possible to decrease the absolute value of the magnitude of a disparity between the two images included in a pair as two images put in a reverse-view relation.

Thus, when the left and right eyes of the image observer are put at the view points $A_9$ and $A_1$ respectively, the image observer recognizes a planar image obtained as a result of superposing two images for the view points $A_9$ and $A_1$ on each other. As a result, the image observer never feels unnaturalness and a discomfort which are caused by a reverse-view phenomenon. Even if a plurality of image observers observe an image displayed on the same three-dimensional image display apparatus from different locations, it is possible to reduce unnaturalness and a discomfort which are caused by a reverse-view phenomenon without a problem.

Also in the case of the sixth embodiment, each of the images observed at the view points $A_1$ and $A_9$ includes components of images for the view points $A_1$ and $A_9$. Thus, when the left and right eyes of the image observer are put at the view points $A_1$ and $A_2$ respectively or when the left and right eyes of the image observer are put at the view points $A_8$ and $A_9$ respectively, the image observer never strongly feels unnaturalness and a discomfort which are caused by the reverse-view phenomenon described above.

In addition, in order to further reduce the unnaturalness caused by the reverse-view relation between the view points $A_1$ and $A_2$ or between the view points $A_8$ and $A_9$, it is possible to provide a configuration in which a plurality of pieces of image data for a plurality of view points are displayed on a time-division basis for the first half frame and the second half frame also at the view points $A_2$ and $A_8$.

Fig. 36 is a diagram showing a model used for explaining an operation carried out to reduce unnaturalness caused by reverse-view relations between the view points $A_1$ and $A_2$ as well as between the view points $A_8$ and $A_9$.

In this typical example, in addition to the operation explained earlier by referring to Fig. 33, at the view point $A_2$, the first half frame and the second half frame are associated with the image data $D_2$ and the image data $D_3$ respectively. At the view point $A_8$, on the other hand, the first half frame and the second half frame are associated with the image data $D_8$ and the image data $D_7$ respectively.

In an image observed at the view point $A_2$, image information for the view point $A_2$ is mixed with image information for the view point $A_3$. In an image observed at the view point $A_8$, on the other hand, image information for the view point $A_8$ is mixed with image information for the view point $A_7$. It is thus possible to reduce the unnaturalness caused by the reverse-view relations between the view points $A_1$ and $A_2$ as well as between the view points $A_8$ and $A_9$

In the configuration described above, at the view point $A_1$, the first half frame and the second half frame are associated with the image data $D_1$ and the image data $D_9$ respectively. At the view point $A_9$, on the other hand, the first half frame and the second half frame are associated with the image data $D_9$ and the image data $D_1$ respectively. However, implementations of the sixth embodiment are by no means limited to this configuration. For example, as an alternative to the configuration described above, it is also possible to provide a configuration in which the image data $D_1$ and the image data $D_9$ are replaced with respectively the image data $D_2$ and the image data $D_8$ or the like or a configuration in which the image data $D_1$ and the image data $D_9$ are replaced with respectively the image data $D_3$ and the image data $D_7$ or the like. As another alternative, it is also possible to provide a configuration like one shown in Fig. 37. It is only necessary to properly select a combination of pieces of image data in accordance with the design of the three-dimensional image display apparatus.

In the operations explained above by referring to Figs. 33 to 37, progressive scanning is assumed. However, implementations of the sixth embodiment are by no means limited to this assumption. For example, it is also possible to provide a configuration in which interlace scanning is carried out. As an example, the following description explains an operation carried out by performing the operation described before by referring to Fig. 33 by adoption of the interlace scanning.

Fig. 38 is a diagram showing a model used for explaining a typical case in which the interlace scanning is carried out.

In a configuration wherein the interlace scanning is carried out, one frame is configured to include first and second fields as shown in Fig. 38. In such a configuration, it is only necessary to carry out an operation in which an odd-numbered row is scanned in the first field and an even-numbered row is scanned in the second field. It is also only necessary to properly set the so-called field frequency in accordance with the design of the three-dimensional image display apparatus.

The image observed at the view point $A_1$ is an image obtained as a result of superposing odd-numbered rows of the image data $D_1$ on even-numbered rows of the image data $D_9$. On the other hand, the image observed at the view point $A_9$ is an image obtained as a result of superposing odd-numbered rows of the image data $D_9$ on even-numbered

rows of the image data $D_1$. Since the two images observed at the view points $A_9$ and $A_1$ respectively are perceived as virtually the same image, there is essentially no disparity between the two images. Thus, in the same way as the operation described before by referring to Fig. 33, it is possible to reduce unnaturalness and a discomfort which are caused by a reverse-view phenomenon without a problem.

[10. Seventh embodiment]

A seventh embodiment also implements a three-dimensional image display apparatus according to the first embodiment of the present disclosure and a method for driving the three-dimensional image display apparatus.

Also in the case of the seventh embodiment, a pair of images are put in a reverse-view relation in the vicinity of an edge of an observation area. In order to solve this problem, both the images of the pair are displayed by making use of data different from pieces of image data provided for points of view. To put it more concretely, the pieces of image data having a plurality of types are pieces of image data provided for different points of view.

Fig. 39 is a diagram showing a model used for explaining an operation carried out to generate multi-view-point image display data in the seventh embodiment.

An outline of the operation carried out by the seventh embodiment to generate multi-view-point image display data is explained as follows. A view point $A_1$ is associated with the image data $D_2$ replacing the image data $D_1$. By the same token, a view point $A_9$ is associated with the image data $D_8$ replacing the image data $D_9$. It is to be noted that the view points $A_2$ to $A_8$ are associated with the image data $D_2$ to the image data $D_8$ respectively without modifying these pieces of image data. Then, multi-view-point image display data is generated in accordance with the flowchart shown in Fig. 14.

Thus, since the image data $D_1$ and the image data $D_9$ are not used, it is not necessary to supply these pieces of image data to the driving section 100. As a matter of fact, it is possible to omit the image data $D_1$ and the image data $D_9$.

Figs. 40A and 40B are diagrams showing top views of models used for explaining an image observed by the left eye of the image observer and an image observed by the right eye of the image observer when the left and right eyes are positioned at the view points $A_9$ and $A_1$ respectively.

As shown in Figs. 40A and 40B, when the left and right eyes of the image observer are positioned at view points $A_9$ and $A_1$ respectively, the image observer observes the image for the view point $A_8$ by making use of the left eye and the image for the view point $A_2$ by making use of the right eye. If the effect of the reverse view is not to be reduced, on the other hand, the image observer observes the image for the view point $A_8$ by making use of the left eye and the image for the view point $A_1$ by making use of the right eye as shown in Figs. 22A and 22B.

In this way, it is possible to decrease the absolute value of the magnitude of a disparity between the two images included in a pair as two images put in a reverse-view relation. Thus, in comparison with a case in which the effect of the reverse view is not to be reduced, it is possible to observe an image having a smaller effect of the reverse view phenomenon. As a result, it is possible to reduce unnaturalness and a discomfort which are caused by a reverse-view phenomenon.

When the left and right eyes of the image observer are positioned at view points $A_1$ and $A_2$ respectively or when the left and right eyes are positioned at the view points $A_8$ and $A_9$ respectively, the image observed by the left eye and the image observed by the right eye are the same image. Thus, to describe qualitatively, as the image observer moves toward the edge of the observation area, the observer feels less three-dimensionality of the image.

As described above, it is possible to provide a configuration in which the view point $A_1$ is associated with the image data $D_2$ and the view point $A_9$ is associated with the image data $D_8$. However, implementations of the seventh embodiment are by no means limited to such a configuration. For example, the view point $A_1$ can be associated with data obtained as a result of reworking the image data $D_2$ and the view point $A_9$ can be associated with data obtained as a result of reworking the image data $D_8$.

[11. Eighth embodiment]

An eighth embodiment also implements a three-dimensional image display apparatus according to the first embodiment of the present disclosure and a method for driving the three-dimensional image display apparatus. The eighth embodiment is obtained by modifying the seventh embodiment.

Fig. 41 is a diagram showing a model used for explaining an operation carried out to generate multi-view-point image display data in the eighth embodiment.

In the case of the seventh embodiment, the view point $A_1$ is associated with the image data $D_2$ and the view point $A_9$ is associated with the image data $D_8$. In the case of the eighth embodiment, on the other hand, the view point $A_1$ is associated with the image data $D_3$ and the view point $A_9$ is associated with the image data $D_7$. Then, multi-view-point image display data is generated in accordance with the flowchart shown in Fig. 14.

Thus, since the image data $D_1$ and the image data $D_9$ are not used also in the case of the eighth embodiment, it is not necessary to supply these pieces of image data to the driving section 100. As a matter of fact, it is possible to omit the image data $D_1$ and the image data $D_9$.

Figs. 42A and 42B are diagrams showing top views of models used for explaining an image observed by the left eye of the image observer and an image observed by the right eye of the image observer when the left and right eyes are positioned at the view points $A_9$ and $A_1$ respectively.

As shown in Figs. 42A and 42B, when the left and right eyes of the image observer are positioned at view points $A_9$ and $A_1$ respectively, the image observer observes the image for the view point $A_7$ by making use of the left eye and the image for the view point $A_3$ by making use of the right eye. If the effect of the reverse view is not to be reduced, on the other hand, the image observer observes the image for the view point $A_9$ by making use of the left eye and the image for the view point $A_1$ by making use of the right eye as shown in Figs. 22A and 22B.

Thus, in comparison with the seventh embodiment, it is possible to observe an image having an even smaller effect of the reverse view. As a result, it is possible to reduce unnaturalness and a discomfort which are caused by a reverse-view phenomenon.

It is to be noted that, in the case of the eighth embodiment, when the left and right eyes of the image observer are positioned at view points $A_1$ and $A_2$ respectively or when the left and right eyes are positioned at the view points $A_8$ and $A_9$ respectively, the image observed by the left eye is swapped with the image observed by the right eye.

Figs. 43A and 43B are diagrams showing top views of models used for explaining an image observed by the left eye of the image observer and an image observed by the right eye of the image observer when the left and right eyes are positioned at the view points $A_1$ and $A_2$ respectively. On the other hand, Figs. 44A and 44B are diagrams showing top views of models used for explaining an image observed by the left eye of the image observer and an image observed by the right eye of the image observer when the left and right eyes are positioned at the view points $A_8$ and $A_9$ respectively.

In the states shown in Figs. 43 and 44, images observed by the image observer as images having a disparity between them are put in a reverse view condition. Since the reverse view condition is a condition of a degree at which images for adjacent points of view are swapped with each other, however, the image observer generally never strongly feels unnaturalness and a discomfort which are caused by the reverse-view state.

[12. Ninth embodiment]

A ninth embodiment also implements a three-dimensional image display apparatus according to the first embodiment of the present disclosure and a method for driving the three-dimensional image display apparatus. The ninth embodiment is obtained by modifying the eighth embodiment.

Fig. 45 is a diagram showing a model used for explaining an operation carried out to generate multi-view-point image display data in a ninth embodiment.

In the case of the eighth embodiment, the view point $A_1$ is associated with the image data $D_3$ and the view point $A_9$ is associated with the image data $D_7$. In the case of the ninth embodiment, on the other hand, in addition to this operation carried out by the eighth embodiment, the view point $A_2$ is associated with the image data $D_3$ in the same way as the view point $A_1$ and the view point $A_8$ is associated with the image data $D_7$ in the same way as the view point $A_9$. Then, multi-view-point image display data is generated in accordance with the flowchart shown in Fig. 14.

Since the image data $D_1$, the image data $D_2$, the image data $D_8$ and the image data $D_9$ are not used in the case of the eighth embodiment, it is not necessary to supply these pieces of image data to the driving section 100. As a matter of fact, it is possible to omit the image data $D_1$, the image data $D_2$, the image data $D_8$ and the image data $D_9$.

In the case of the ninth embodiment, when the left and right eyes of the image observer are positioned at view points $A_1$ and $A_2$ respectively or when the left and right eyes are positioned at the view points $A_8$ and $A_9$ respectively, the image observed by the left eye and the image observed by the right eye are the same image. Thus, unlike the eighth embodiment, the image observer never sees images having a disparity between the images in a reverse-view state.

[13. Tenth embodiment]

A tenth embodiment also implements a three-dimensional image display apparatus according to the first embodiment of the present disclosure and a method for driving the three-dimensional image display apparatus. The tenth embodiment is obtained by modifying the first embodiment.

Also in the tenth embodiment, a pair of images are put in a reverse-view relation in the vicinity of an edge of an observation area. In order to solve this problem, one of the images of the pair is displayed by making use of data different from pieces of image data provided for points of view. The data different from pieces of image data provided for points of view is data obtained by combining pieces of image data having a plurality of types. To put it more concretely, the pieces of image data having a plurality of types are pieces of image data provided for different points of view. In an image displayed on the basis of data obtained by combining pieces of image data having a plurality of types, components of the pieces of image data having a plurality of types are alternately laid out to create a stripe state.

Fig. 46 is a diagram showing a model used for explaining an operation carried out to generate multi-view-point image display data in the tenth embodiment.

In the case of the first embodiment, both the view points $A_1$ and $A_9$ are associated with the data $D_{S1}$. In the case of the tenth embodiment, on the other hand, only the view point $A_1$ is associated with the data $D_{S1}$. In addition, the view points $A_2$ to $A_9$ are associated with image data $D_2$ to image data $D_9$ respectively without modifying these pieces of image data. Then, multi-view-point image display data is generated in accordance with the flowchart shown in Fig. 14.

A method for generating the data $D_{S1}$ (j, k) is the same as the method explained earlier by referring to Fig. 23A in the description of the first embodiment. Thus, the method for generating the data $D_{S1}$ (j, k) is not described again.

Figs. 47A and 47B are diagrams showing top views of models used for explaining an image observed by the left eye of the image observer and an image observed by the right eye of the image observer when the left and right eyes are positioned at the view points $A_9$ and $A_1$ respectively.

As shown in Fig. 47B, in the image observed at the view point $A_1$, components of two images, that is, the images for the view points $A_1$ and $A_9$, are alternately laid out to create a stripe state. In this way, it is possible to decrease the absolute value of the magnitude of a disparity between the images forming a pair of images put in a reverse-view relation. As a result, it is possible to lower the degree of the reverse view in comparison with a case of observing images shown in Figs. 22A and 22B.

As described above, only the view point $A_1$ is associated with the data $D_{S1}$. However, it is also possible to provide a configuration in which only the view point $A_9$ is associated with the data $D_{S1}$. As another alternative, in place of the data $D_{S1}$, it is also possible to make use of the data $D_{S2}$ explained before in the description of the third embodiment.

[14. Eleventh embodiment]

An eleventh embodiment also implements a three-dimensional image display apparatus according to the first embodiment of the present disclosure and a method for driving the three-dimensional image display apparatus. The eleventh embodiment is obtained by modifying the third embodiment.

Also in the eleventh embodiment, a pair of images are put in a reverse-view relation in the vicinity of an edge of an observation area. In order to solve this problem, one of the images of the pair is displayed by making use of data different from pieces of image data provided for points of view. The data different from pieces of image data provided for points of view is data obtained by combining pieces of image data having a plurality of types. To put it more concretely, the pieces of image data having a plurality of types are pieces of image data provided for different points of view. In an image displayed on the basis of data obtained by combining pieces of image data having a plurality of types, components of the pieces of image data having a plurality of types are laid out to form a checker board pattern.

Fig. 48 is a diagram showing a model used for explaining an operation carried out to generate multi-view-point image display data in the eleventh embodiment.

In the case of the third embodiment, both the view points $A_1$ and $A_9$ are associated with the data $D_{C1}$. In the case of the eleventh embodiment, on the other hand, only the view point $A_1$ is associated with the data $D_{C1}$. In addition, the view points $A_2$ to $A_9$ are associated with image data $D_2$ to image data $D_9$ respectively without modifying these pieces of image data. Then, multi-view-point image display data is generated in accordance with the flowchart shown in Fig. 14.

A method for generating the data $D_{C1}$ (j, k) is the same as the method explained earlier by referring to Fig. 27A in the description of the third embodiment. Thus, the method for generating the data $D_{C1}$ (j, k) is not described again.

Figs. 49A and 49B are diagrams showing top views of models used for explaining an image observed by the left eye of the image observer and an image observed by the right eye of the image observer when the left and right eyes are positioned at the view points $A_9$ and $A_1$ respectively.

As shown in Fig. 49B, in the image observed at the view point $A_1$, components of two images, that is, the images for the view points $A_1$ and $A_9$, are alternately laid out to form a checker board pattern. As a result, it is possible to lower the degree of the reverse view in comparison with a case of observing images shown in Figs. 22A and 22B.

As described above, only the view point $A_1$ is associated with the data $D_{C1}$. However, it is also possible to provide a configuration in which only the view point $A_9$ is associated with the data $D_{C1}$. As another alternative, in place of the data $D_{C1}$, it is also possible to make use of the data $D_{C2}$ explained before in the description of the fourth embodiment.

[15. Twelfth embodiment]

A twelfth embodiment also implements a three-dimensional image display apparatus according to an embodiment of the present disclosure and a method for driving the three-dimensional image display apparatus. The twelfth embodiment is obtained by modifying the fifth embodiment.

Also in the twelfth embodiment, a pair of images are put in a reverse-view relation in the vicinity of an edge of an observation area. In order to solve this problem, one of the images of the pair is displayed by making use of image data provided for at least two points of view. To put it more concretely, one of the images of the pair is displayed on the basis of data representing an arithmetic average of pieces of image data provided for at least two points of view.

Fig. 50 is a diagram showing a model used for explaining an operation carried out to generate multi-view-point image display data in the twelfth embodiment.

In the case of the fifth embodiment, both the view points $A_1$ and $A_9$ are associated with the data $D_{av}$. In the case of the twelfth embodiment, on the other hand, only the view point $A_1$ is associated with the data $D_{av}$. In addition, the view points $A_2$ to $A_9$ are associated with image data $D_2$ to image data $D_9$ respectively without modifying these pieces of image data. Then, multi-view-point image display data is generated in accordance with the flowchart shown in Fig. 14.

A method for generating the data $D_{av}$ (j, k) is the same as the method explained earlier by referring to Fig. 31A in the description of the fifth embodiment. Thus, the method for generating the data $D_{av}$ (j, k) is not described again.

Figs. 51A and 51B are diagrams showing top views of models used for explaining an image observed by the left eye of the image observer and an image observed by the right eye of the image observer when the left and right eyes are positioned at the view points $A_9$ and $A_1$ respectively.

For an image shown in Fig. 51B, an arithmetic average is computed from components of two images, that is, the images for the view points $A_1$ and $A_9$. Thus, it is possible to decrease the absolute value of the magnitude of a disparity between the images forming a pair of images put in a reverse-view relation. As a result, it is possible to lower the degree of the reverse view in comparison with a case of observing images shown in Figs. 22A and 22B.

As described above, only the view point $A_1$ is associated with the data $D_{av}$. However, it is also possible to provide a configuration in which only the view point $A_9$ is associated with the data $D_{av}$.

[16. Thirteenth embodiment]

A thirteenth embodiment also implements a three-dimensional image display apparatus according to the second embodiment of the present disclosure and a method for driving the three-dimensional image display apparatus. The thirteenth embodiment is obtained by modifying the sixth embodiment.

Also in the case of the thirteenth embodiment, a pair of images are put in a reverse-view relation in the vicinity of an edge of an observation area. In order to solve this problem, one of the images of the pair is created by displaying a plurality of pieces of image data having different types on a time-division basis. The pieces of image data are pieces of image data for different points of view.

Fig. 52 is a diagram showing a model used for explaining an operation carried out to generate multi-view-point image display data in the thirteenth embodiment.

A displayed image is configured from a pair including a first half frame and a second half frame. In the case of the sixth embodiment, the first-half and second-half frames of the image for each of the view points $A_1$ and $A_9$ are associated with pieces of image data having different type. In the case of the thirteenth embodiment, on the other hand, the first-half and second-half frames of the image for only the view point $A_1$ are associated with the image data $D_1$ and the image data $D_9$ respectively. It is to be noted that, for the view points $A_2$ to $A_9$, both the first half frame and the second half frame are associated with the image data $D_2$ to the image data $D_9$ respectively without modifying these pieces of image data. In this way, the image for the view point $A_1$ is created by displaying a plurality of pieces of image data for a plurality of view points on a time-division basis.

Since essential effects provided by the thirteenth embodiment are approximately the same as those provided by the eleventh and the twelfth embodiments, the effects provided by the thirteenth embodiment are not described. As explained above, the first-half and second-half frames of the image for only the view point $A_1$ are associated with different pieces of image data which are the image data $D_1$ and the image data $D_9$ respectively. However, it is also possible to provide a configuration in which the first-half and second-half frames of the image for only the view point $A_9$ are associated with different pieces of image data which are the image data $D_1$ and the image data $D_9$ respectively. In addition, it is also possible to provide a configuration in which the image data $D_2$ and the image data $D_8$ are used in place of the image data $D_1$ and the image data $D_9$ respectively or a configuration in which the image data $D_3$ and the image data $D_7$ are used in place of the image data $D_1$ and the image data $D_9$ respectively. On top of that, it is also possible to provide a configuration in which the interlace scanning is carried out as explained earlier by referring to Fig. 38.

[17. Fourteenth embodiment]

A fourteenth embodiment also implements a three-dimensional image display apparatus according to the first embodiment of the present disclosure and a method for driving the three-dimensional image display apparatus. The fourteenth embodiment is obtained by modifying the seventh embodiment.

Also in the case of the fourteenth embodiment, a pair of images are put in a reverse-view relation in the vicinity of an edge of an observation area. In order to solve this problem, one of the images of the pair is displayed by making use of data different from pieces of image data provided for points of view. To put it more concretely, the data different from pieces of image data provided for points of view is image data provided for another point of view.

Fig. 53 is a diagram showing a model used for explaining an operation carried out to generate multi-view-point image display data in the fourteenth embodiment.

In the case of the seventh embodiment, the view point $A_1$ is associated with the data image $D_2$ and the view point $A_9$ is associated with the data image $D_8$. In the case of the fourteenth embodiment, on the other hand, the view point $A_1$ is associated with typically the data image $D_5$ in place of the data image $D_1$. It is to be noted that the view points $A_2$ to $A_9$ are associated with image data $D_2$ to image data $D_9$ respectively without modifying these pieces of image data. Then, multi--view-point image display data is generated in accordance with the flowchart shown in Fig. 14.

Since the image data $D_1$ is not used also in the case of the fourteenth embodiment, it is not necessary to supply the image data $D_1$ to the driving section 100. As a matter of fact, it is possible to omit the image data $D_1$.

Figs. 54A and 54B are diagrams showing top views of models used for explaining an image observed by the left eye of the image observer and an image observed by the right eye of the image observer when the left and right eyes are positioned at the view points $A_9$ and $A_1$ respectively.

As shown in Figs. 54A and 54B, when the left and right eyes of the image observer are positioned at view points $A_9$ and $A_1$ respectively, the image observer observes the image for the view point $A_9$ by making use of the left eye and the image for typically the view point $A_5$ by making use of the right eye. If the effect of the reverse view is not to be reduced, on the other hand, the image observer observes the image for the view point $A_9$ by making use of the left eye and the image for the view point $A_1$ by making use of the right eye as shown in Figs. 22A and 22B. In this way, it is possible to decrease the absolute value of the magnitude of a disparity between the images forming a pair of images put in a reverse-view relation.

Thus, in comparison with a configuration in which the effect of the reverse view is not to be reduced, it is possible to observe an image having an even smaller effect of the reverse view. As a result, it is possible to reduce unnaturalness and a discomfort which are caused by a reverse-view phenomenon.

As described above, only the view point $A_1$ is associated with the image data for another point of view. However, it is also possible to provide a configuration in which only the view point $A_9$ is associated with the image data for another point of view. Further, as described above, the view point $A_1$ is associated with the image data $D_5$. However, it is also possible to provide a configuration in which the view point $A_1$ is associated with another image data.

Embodiments of the present disclosure have been described in concrete terms. However, implementations of the present disclosure are not limited to these embodiments. That is to say, it is possible to make any changes to the embodiments as long as the changes are based on the technological concepts of the present disclosure.

For example, in a configuration wherein the value of DP is set at 32.5 mm, when the left and right eyes of the image observer are positioned at view points $A_8$ and $A_1$ respectively to form reverse relation 1 shown in Fig. 55 or the left and right eyes of the image observer are positioned at view points $A_5$ and $A_2$ respectively to form reverse relation 2 shown in the same figure, a reverse view relation is established. In the description of the embodiments, an operation explained for a combination of the view points $A_9$ and $A_1$ can be properly interpreted as an operation explained for a combination of the view points $A_8$ and $A_1$ or a combination of the view points $A_9$ and $A_2$.

In addition, as shown in Fig. 56, the three-dimensional image display apparatus can also be typically configured into a slit shape having continuous apertures on the optical separation section. In this case, a relation between the positions of the apertures and the sub-pixels is shown in Fig. 57.

As an alternative, it is also possible to provide a configuration in which every aperture of the optical separation section is stretched in the vertical direction as shown in Fig. 58. In such a configuration, every pixel of an image for each point of view has three sub-pixels laid out in row direction. In this case, a relation between the positions of the apertures and the sub-pixels is shown in Fig. 59.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

The present disclosure contains subject matter related to that disclosed in Japanese Priority Patent Application JP 2010-293219 filed in the Japan Patent Office on December 28, 2010, the entire content of which is hereby incorporated by reference.

## Claims

1. A three-dimensional image display apparatus in which an image for each of a plurality of view points in each of a plurality of observation areas can be observed, wherein
the three-dimensional image display apparatus displays one or two images pertaining to a pair of images put in a reverse-view relation in the vicinity of an edge of the observation areas by making use of data different from image data for the view points.

2. The three-dimensional image display apparatus according to claim 1,
wherein the data different from image data for the view points is data obtained as a result of combining pieces of image data having a variety of types.

3. The three-dimensional image display apparatus according to claim 2,
wherein the pieces of image data having a variety of types are each image data for one of the different view points.

4. The three-dimensional image display apparatus according to claim 2,
wherein an image displayed on the basis of the data obtained as a result of combining pieces of image data having a variety of types is an image in which components of the pieces of image data having a variety of types are alternately laid out to create a stripe state.

5. The three-dimensional image display apparatus according to claim 2,
wherein an image displayed on the basis of the data obtained as a result of combining pieces of image data having a variety of types is an image in which components of the pieces of image data having a variety of types are laid out to create a checker board pattern.

6. The three-dimensional image display apparatus according to claim 1,
wherein the data different from image data for the view points is data obtained as a result of averaging pieces of image data having a variety of types.

7. The three-dimensional image display apparatus according to claim 6,
wherein the pieces of image data having a variety of types are each image data for one of the different view points.

8. The three-dimensional image display apparatus according to claim 1,
wherein the data different from image data for the view points is image data for another view point.

9. The three-dimensional image display apparatus according to claim 1,
wherein pieces of the data different from image data for the view points are pieces of image data with a disparity having an absolute value smaller than the absolute value of a disparity between the images pertaining to the pair of images put in a reverse-view relation.

10. A three-dimensional image display apparatus in which an image for each of view points in each of a plurality of observation areas can be observed, wherein
the three-dimensional image display apparatus creates one or two images pertaining to a pair of images put in a reverse-view relation in the vicinity of an edge of the observation areas by displaying pieces of image data having a variety of types on a time-division basis.

11. The three-dimensional image display apparatus according to claim 10,
wherein the pieces of image data having a variety of types are each image data for one of the different view points.

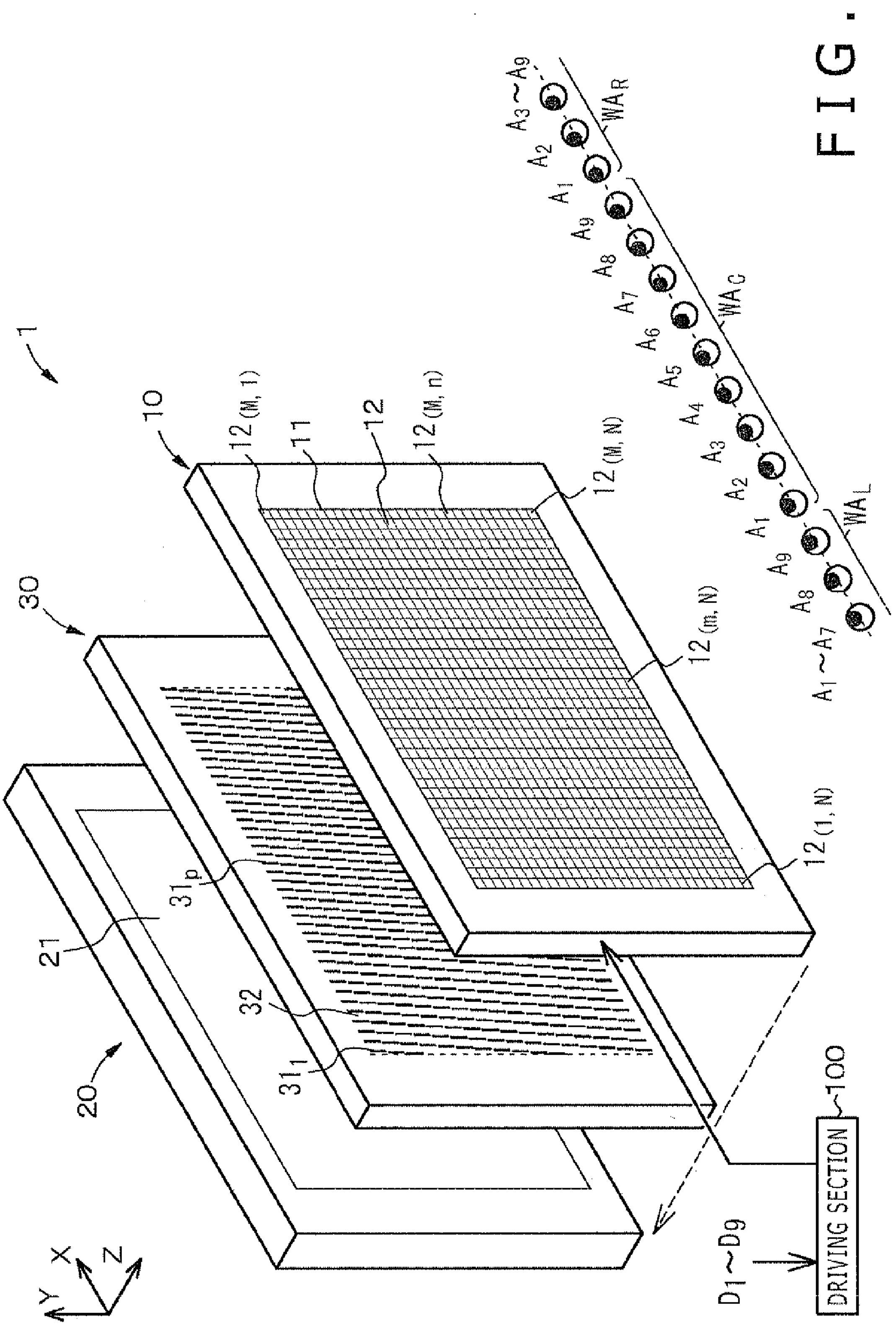
1
10
20
21
30
$31_p$
$31_1$
32
11
12
$12_{(M, 1)}$
$12_{(M, n)}$
$12_{(M, N)}$
$12_{(m, N)}$
$12_{(1, N)}$
$A_3$~$A_9$
$A_2$
$A_1$
$A_9$
$A_8$
$A_7$
$A_6$
$A_5$
$A_4$
$A_3$
$A_2$
$A_1$
$A_9$
$A_8$
$A_1$~$A_7$
$WA_R$
$WA_G$
$WA_L$
$D_1$~$D_9$
DRIVING SECTION
100
X
Y
Z

FIG. 1

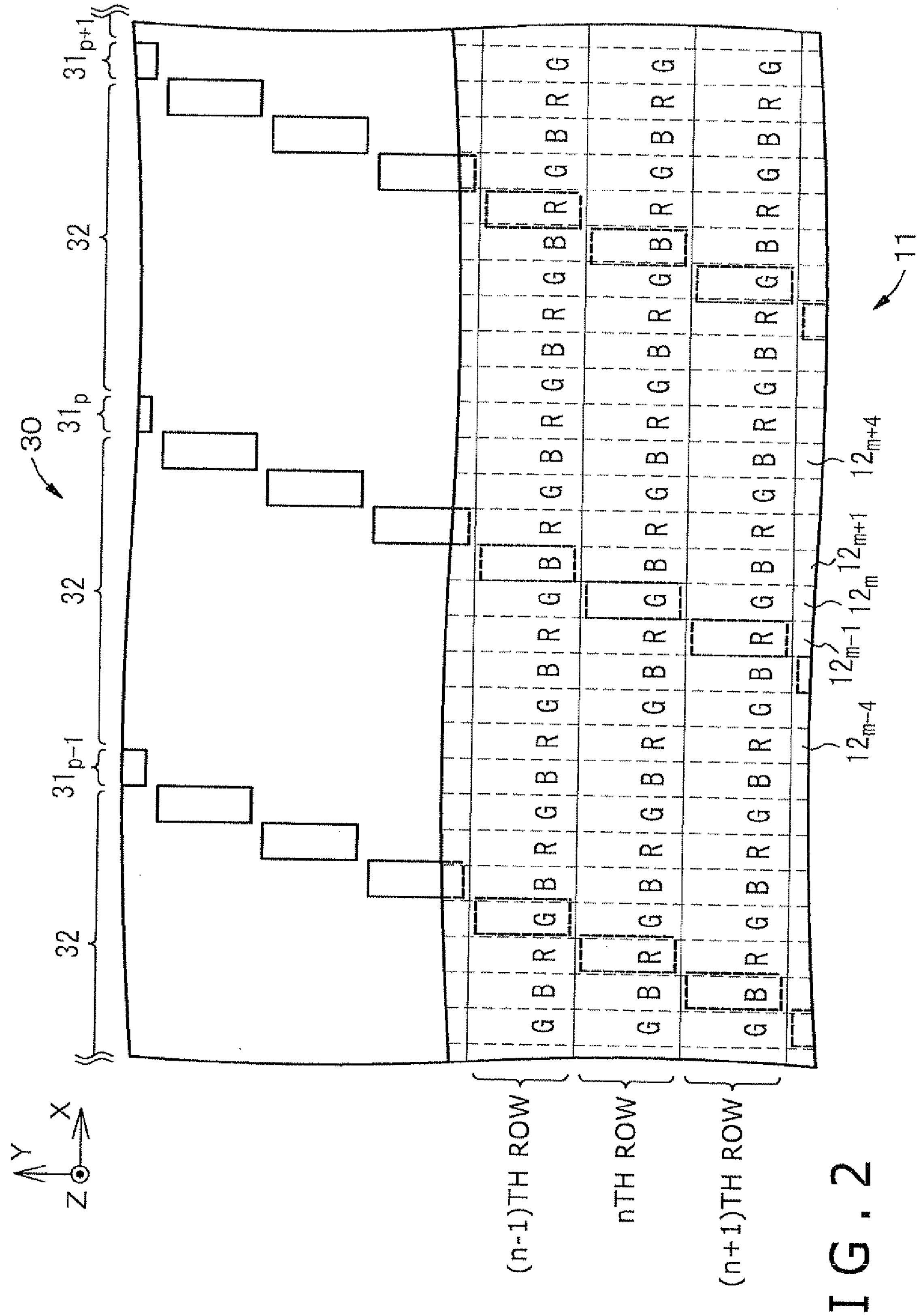

30
$31_{p+1}$
32
$31_p$
32
$31_{p-1}$
32
X
Y
Z
(n-1)TH ROW
nTH ROW
(n+1)TH ROW
11
$12_{m+4}$
$12_{m+1}$
$12_m$
$12_{m-1}$
$12_{m-4}$
R
G
B


FIG. 2

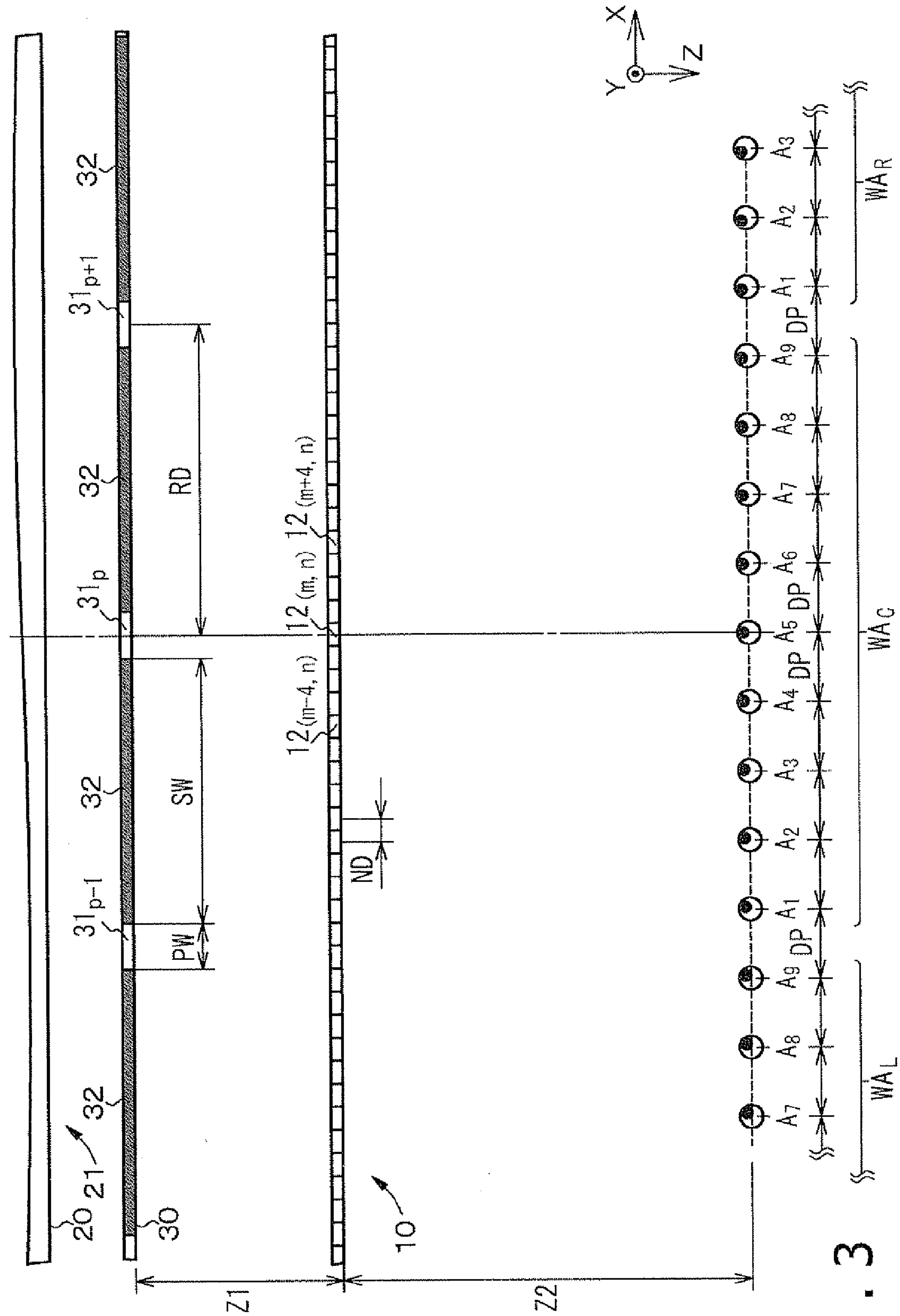
X
Y
Z
20
21
30
32
$31_{p-1}$
$31_p$
$31_{p+1}$
PW
SW
RD
$12_{(m-4, n)}$
$12_{(m, n)}$
$12_{(m+4, n)}$
ND
10
Z1
Z2
$A_1$ $A_2$ $A_3$ $A_4$ $A_5$ $A_6$ $A_7$ $A_8$ $A_9$
DP
$WA_L$
$WA_C$
$WA_R$

FIG. 3

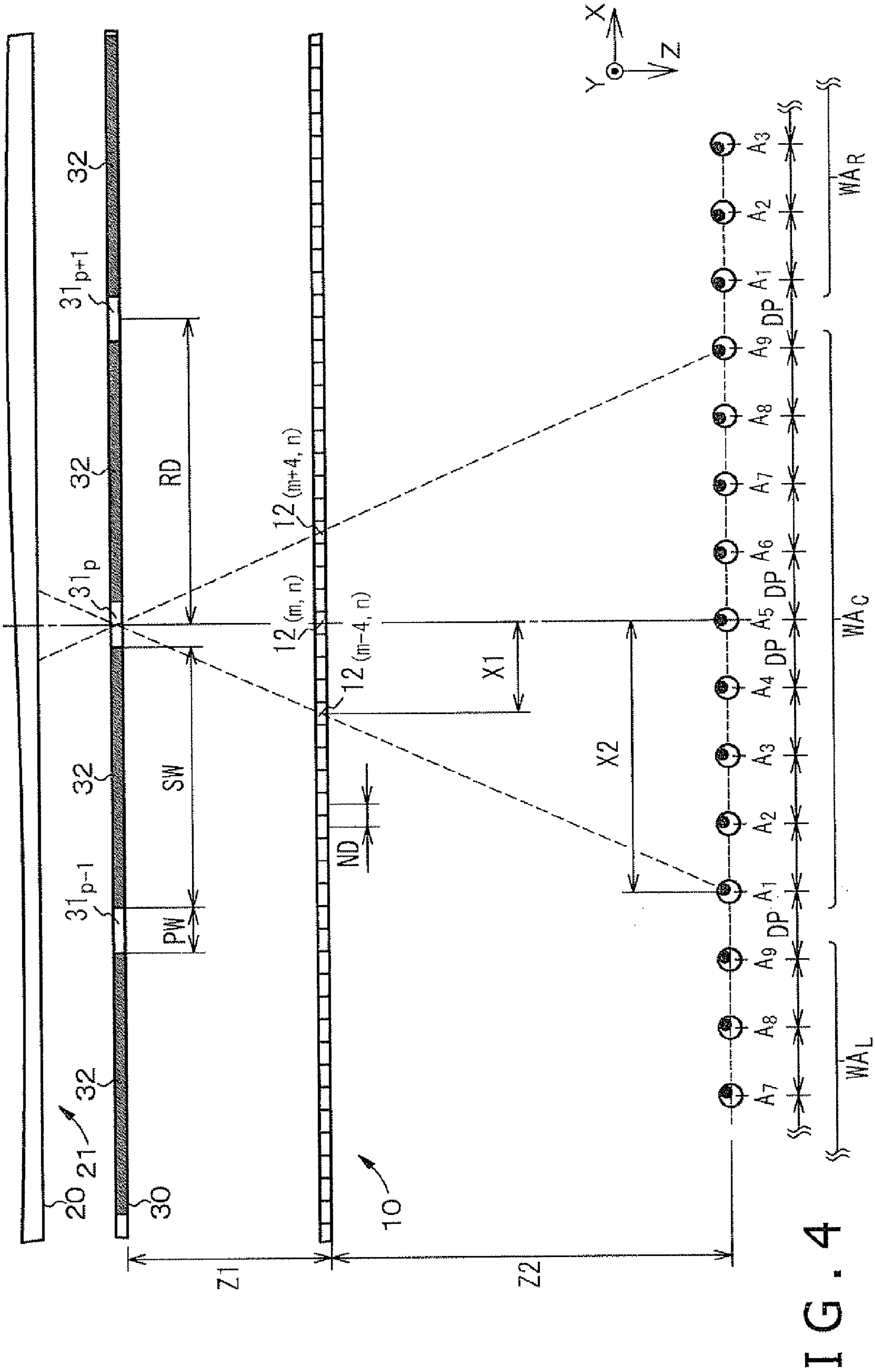
X
Y
Z
20
21
30
32
$31_{p+1}$
$31_p$
$31_{p-1}$
RD
SW
PW
$12_{(m+4, n)}$
$12_{(m, n)}$
$12_{(m-4, n)}$
ND
10
X1
X2
Z1
Z2
$A_1$ $A_2$ $A_3$ $A_4$ $A_5$ $A_6$ $A_7$ $A_8$ $A_9$
DP
$WA_R$
$WA_C$
$WA_L$

FIG. 4

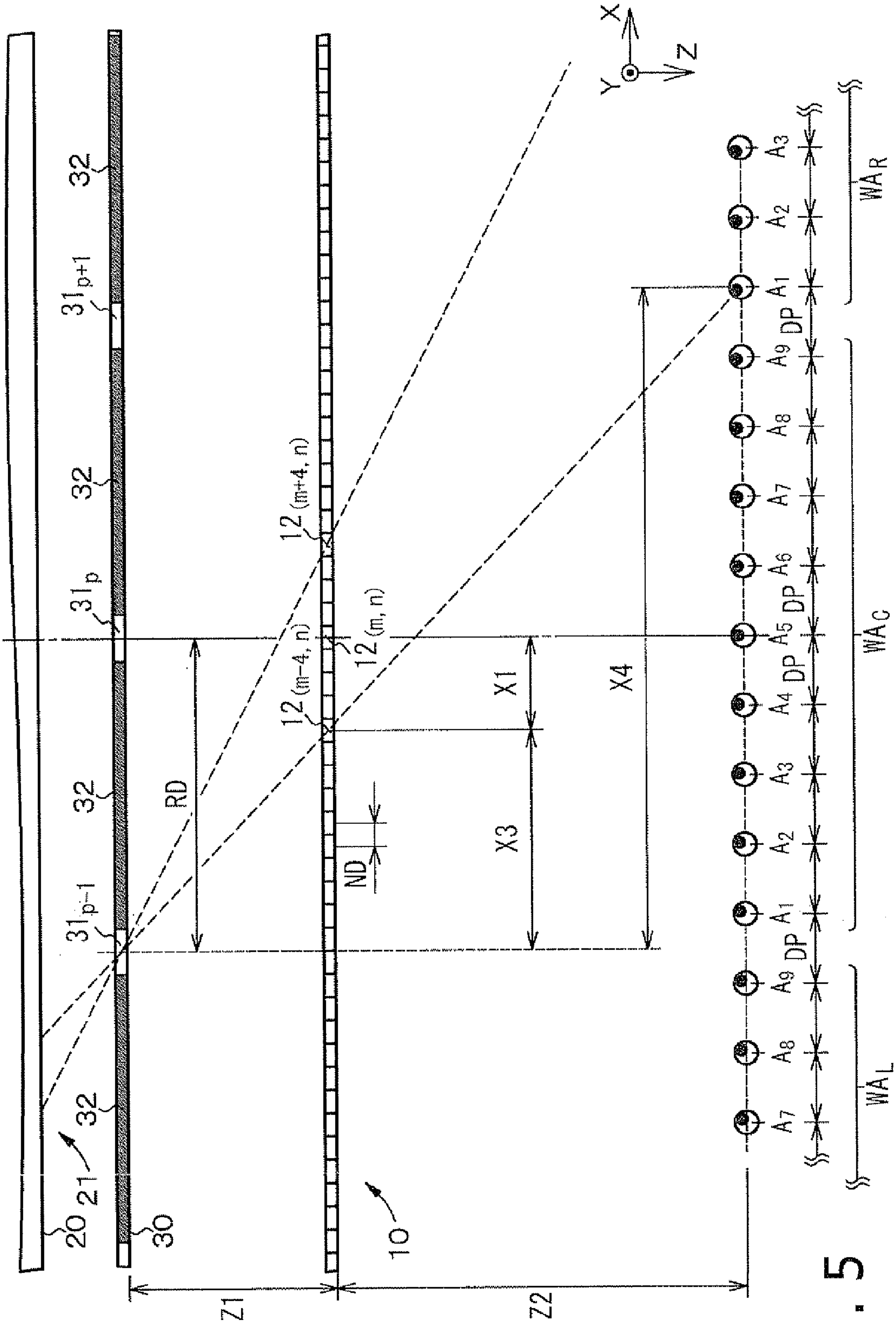

X
Y
Z
20
21
30
32
$31_{p-1}$
$31_p$
$31_{p+1}$
10
12 (m-4, n)
12 (m, n)
12 (m+4, n)
RD
ND
X1
X3
X4
Z1
Z2
$A_1$ $A_2$ $A_3$ $A_4$ $A_5$ $A_6$ $A_7$ $A_8$ $A_9$
DP
$WA_L$
$WA_C$
$WA_R$


FIG. 5

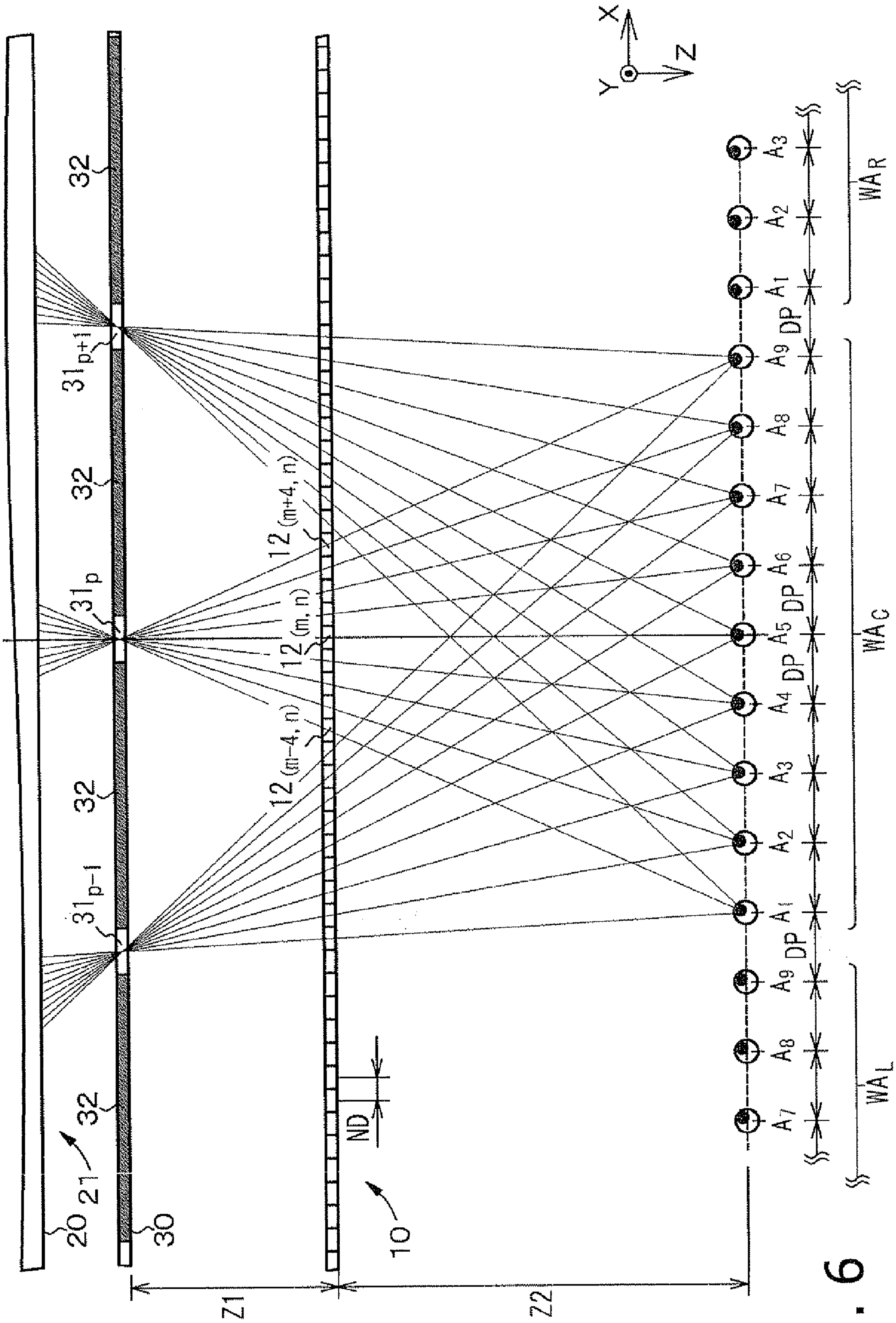
X
Y
Z
20
21
30
32
31p-1
31p
31p+1
12(m-4, n)
12(m, n)
12(m+4, n)
10
ND
Z1
Z2
A1
A2
A3
A4
A5
A6
A7
A8
A9
DP
WAL
WAC
WAR

FIG. 6

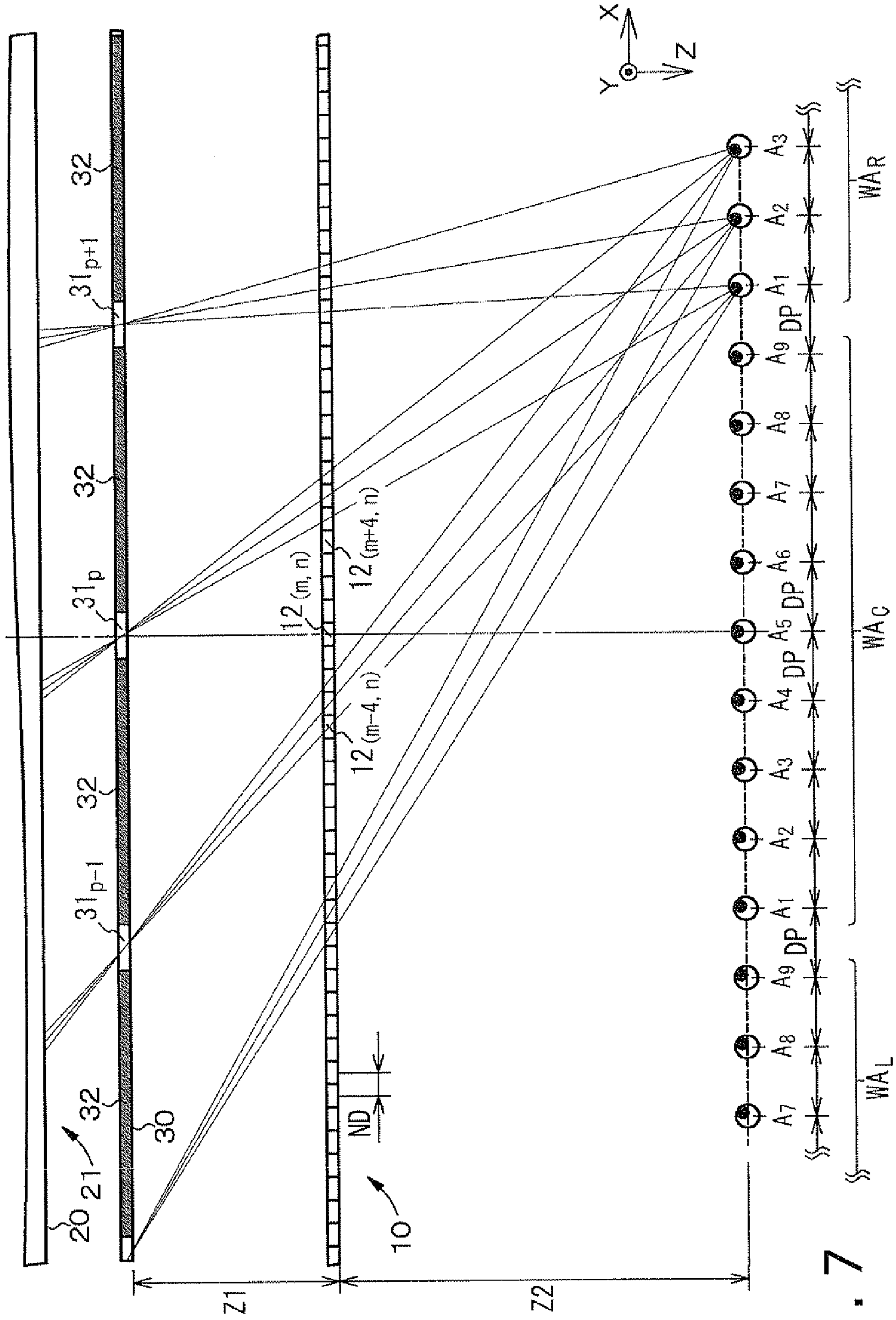
X
Y
Z
32
$31_{p+1}$
32
$31_p$
32
$31_{p-1}$
32
30
21
20
12 (m, n)
12 (m+4, n)
12 (m−4, n)
ND
10
Z1
Z2
$A_3$
$A_2$
$A_1$
DP
$A_9$
$A_8$
$A_7$
$A_6$
DP
$A_5$
DP
$A_4$
$A_3$
$A_2$
$A_1$
DP
$A_9$
$A_8$
$A_7$
$WA_R$
$WA_C$
$WA_L$

FIG. 7

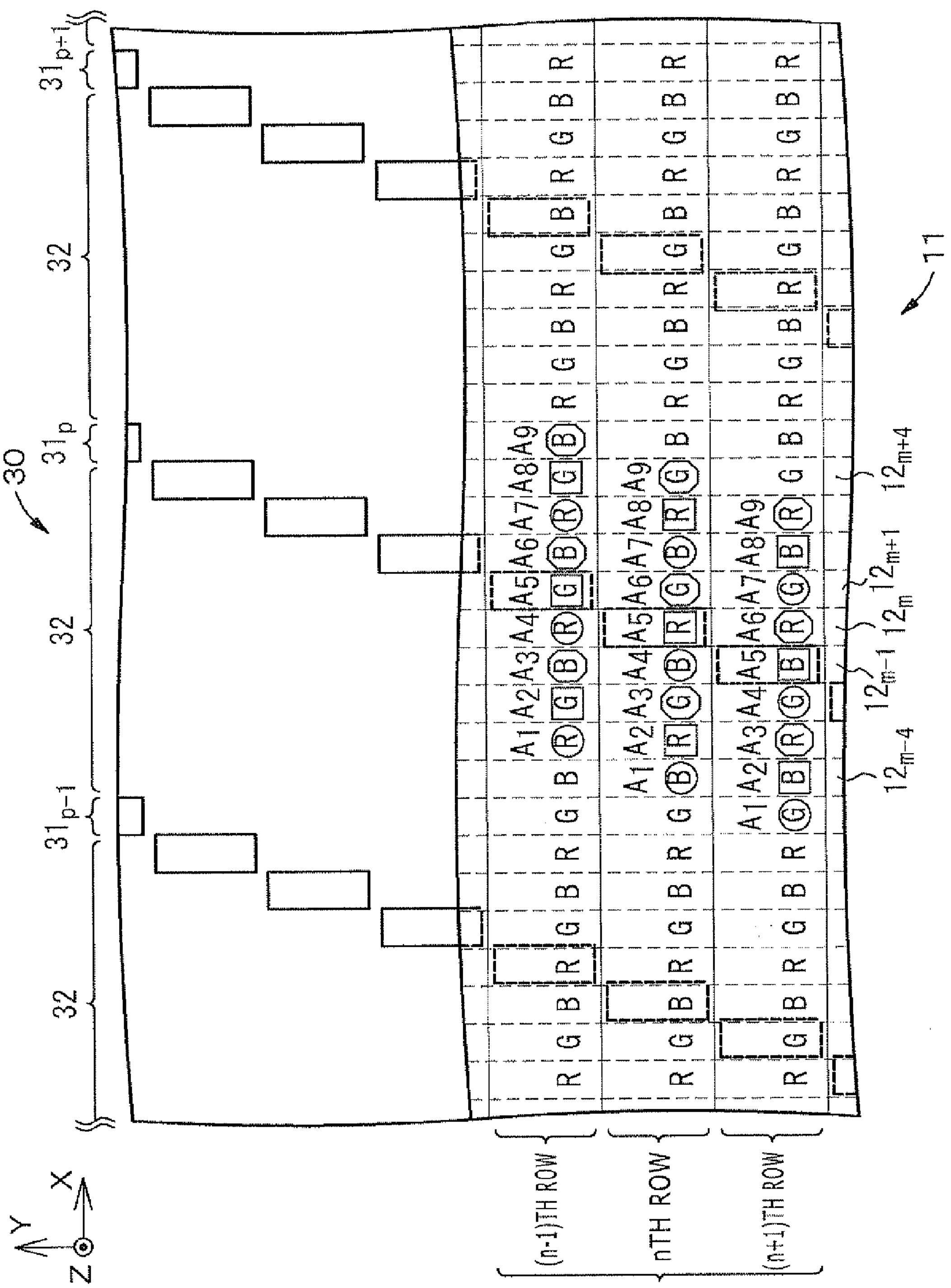
30
$31_{p+1}$
32
$31_p$
$31_{p-1}$
11
$12_{m-4}$
$12_{m-1}$
$12_m$
$12_{m+1}$
$12_{m+4}$
A1 A2 A3 A4 A5 A6 A7 A8 A9
PIXEL ROWS
(n-1)TH ROW
nTH ROW
(n+1)TH ROW
X
Y
Z

FIG. 8

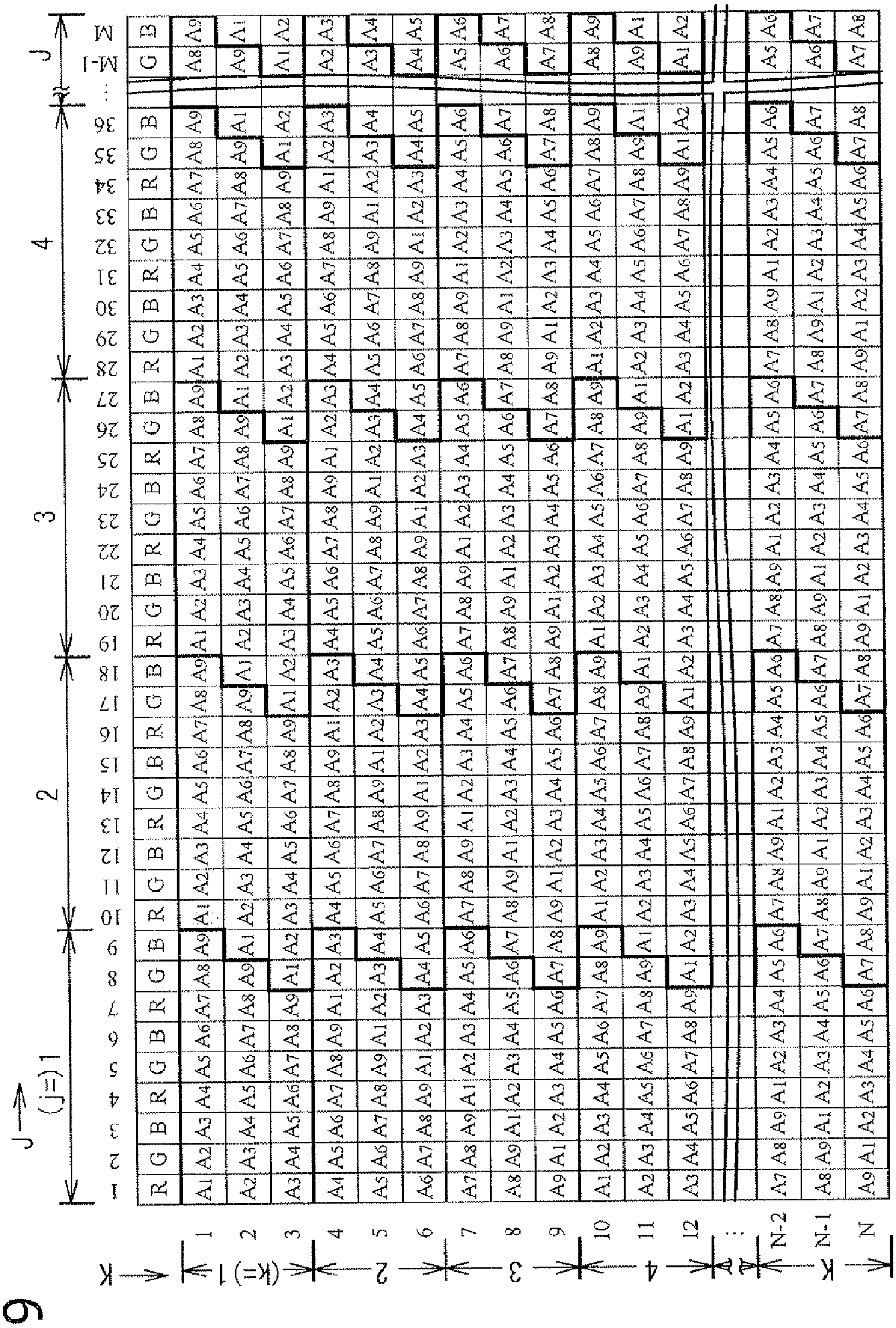

FIG. 9

FIG. 10

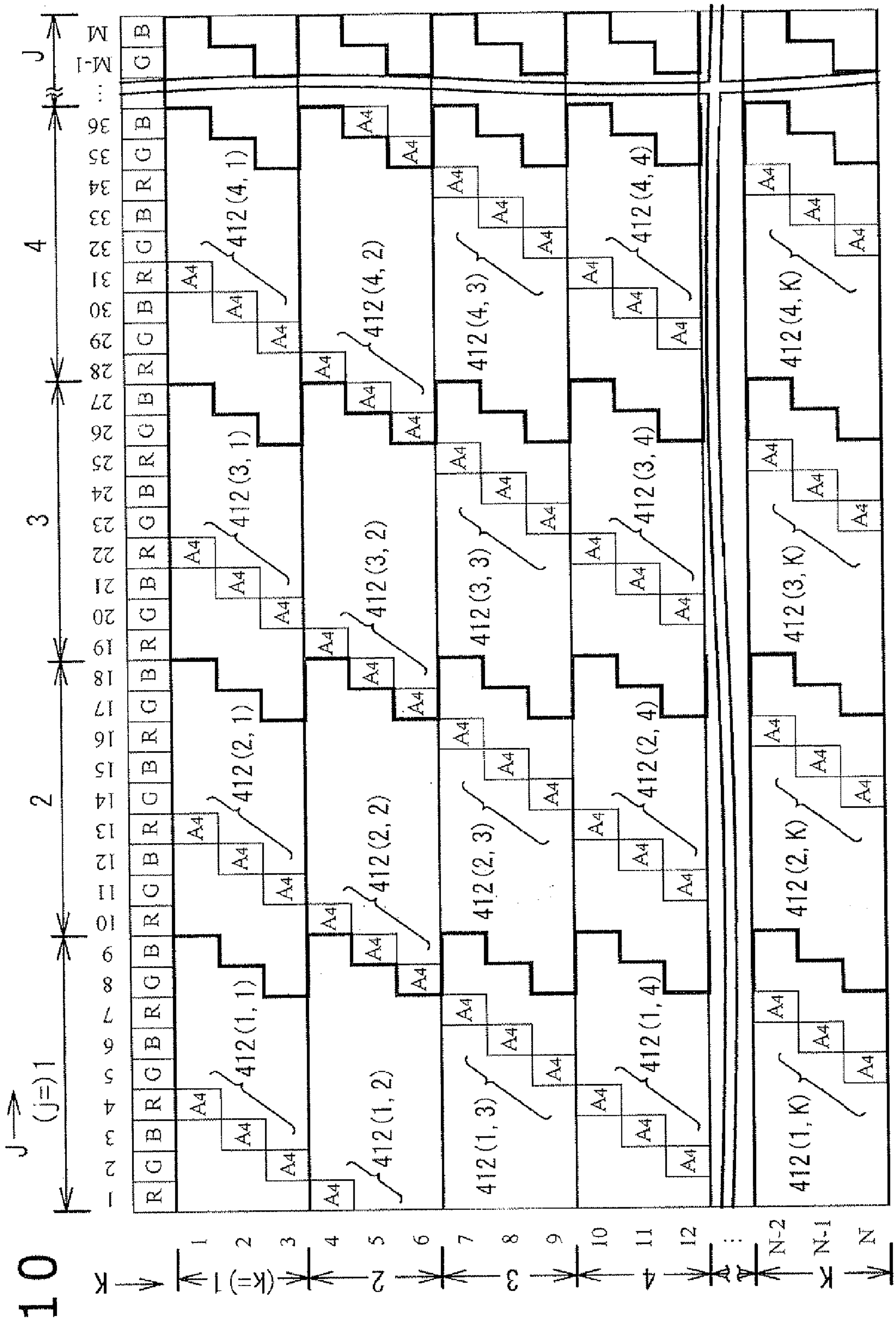
J
(j=)1
2
3
4
K
(k=)1
N-2
N-1
N
M-1
M
R
G
B
A4
412 (1, 1)
412 (2, 1)
412 (3, 1)
412 (4, 1)
412 (1, 2)
412 (2, 2)
412 (3, 2)
412 (4, 2)
412 (1, 3)
412 (2, 3)
412 (3, 3)
412 (4, 3)
412 (1, 4)
412 (2, 4)
412 (3, 4)
412 (4, 4)
412 (1, K)
412 (2, K)
412 (3, K)
412 (4, K)

FIG. 11

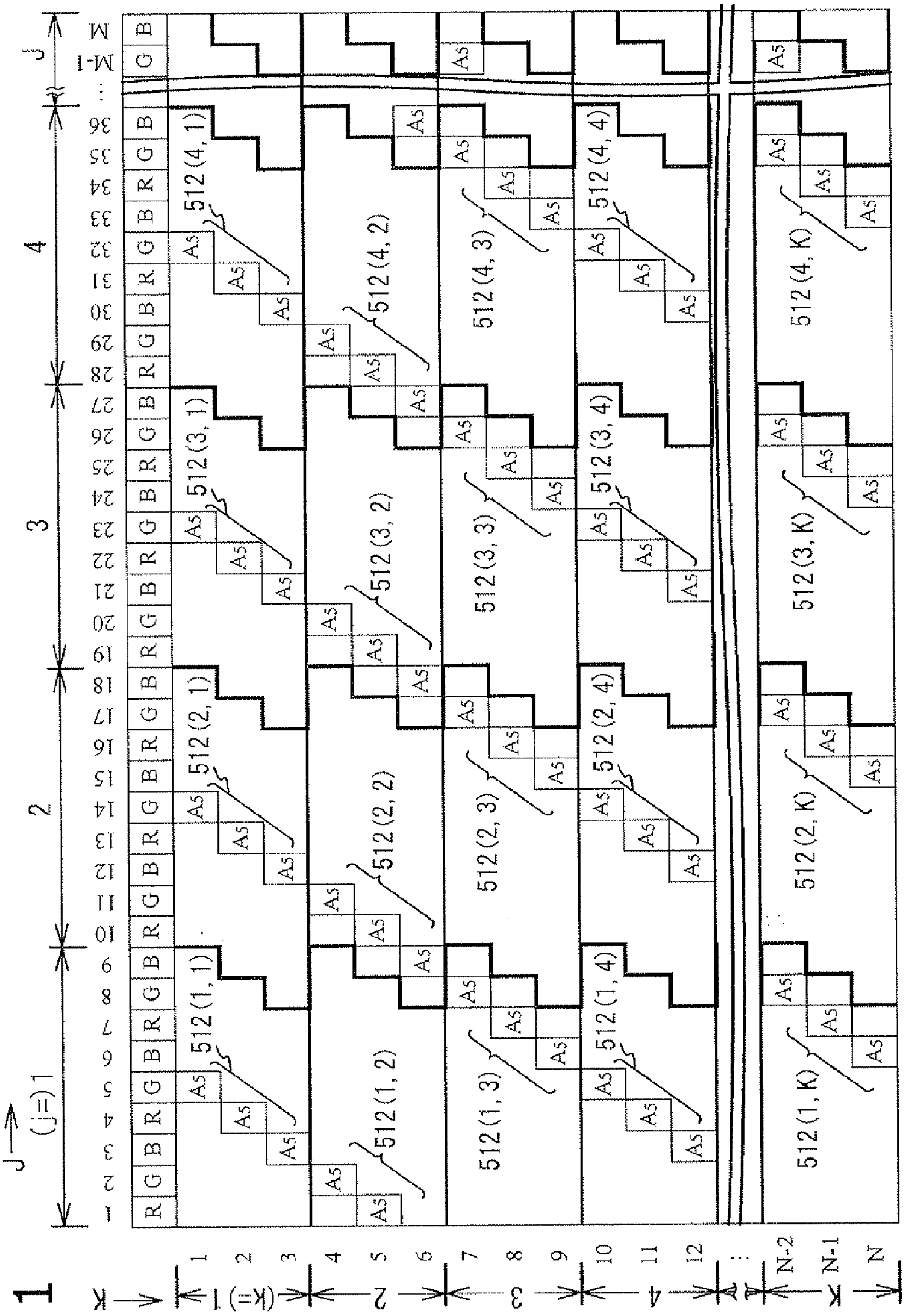
J
(j=)1
2
3
4
J
K
(K=)1
2
3
4
K
R
G
B
M-1
M
N-2
N-1
N
A5
512(1, 1)
512(1, 2)
512(1, 3)
512(1, 4)
512(1, K)
512(2, 1)
512(2, 2)
512(2, 3)
512(2, 4)
512(2, K)
512(3, 1)
512(3, 2)
512(3, 3)
512(3, 4)
512(3, K)
512(4, 1)
512(4, 2)
512(4, 3)
512(4, 4)
512(4, K)

FIG.12A

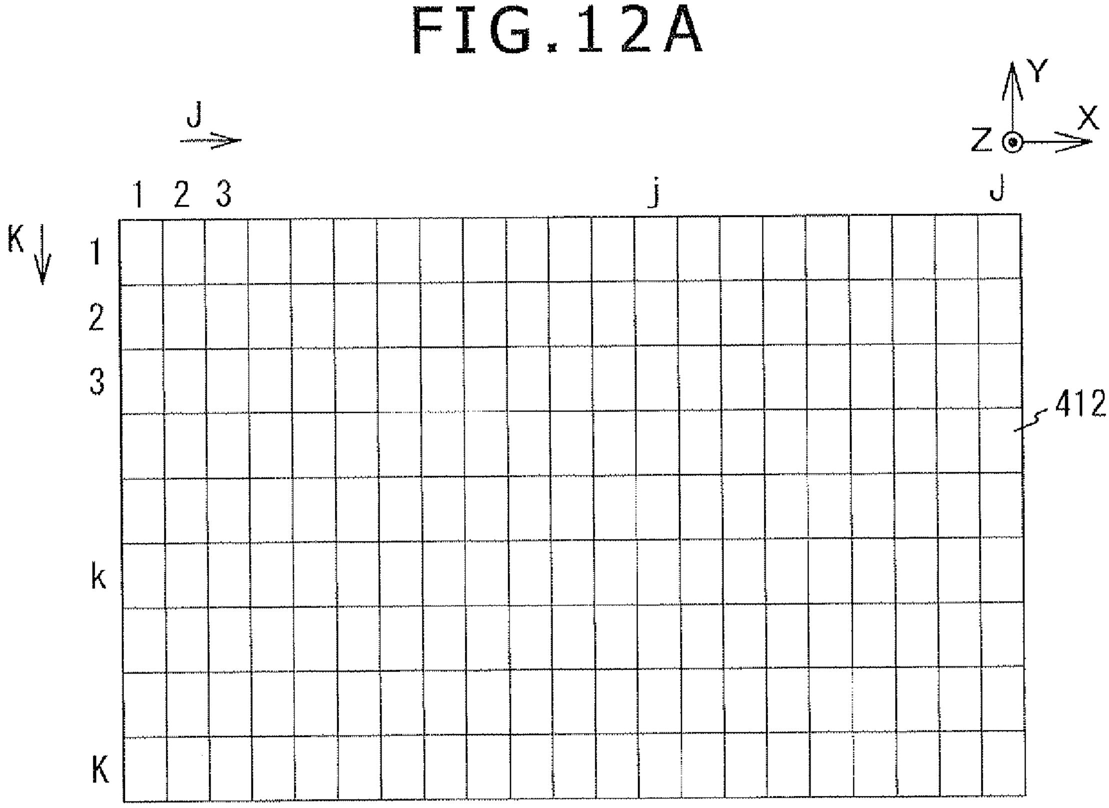


FIG.12B

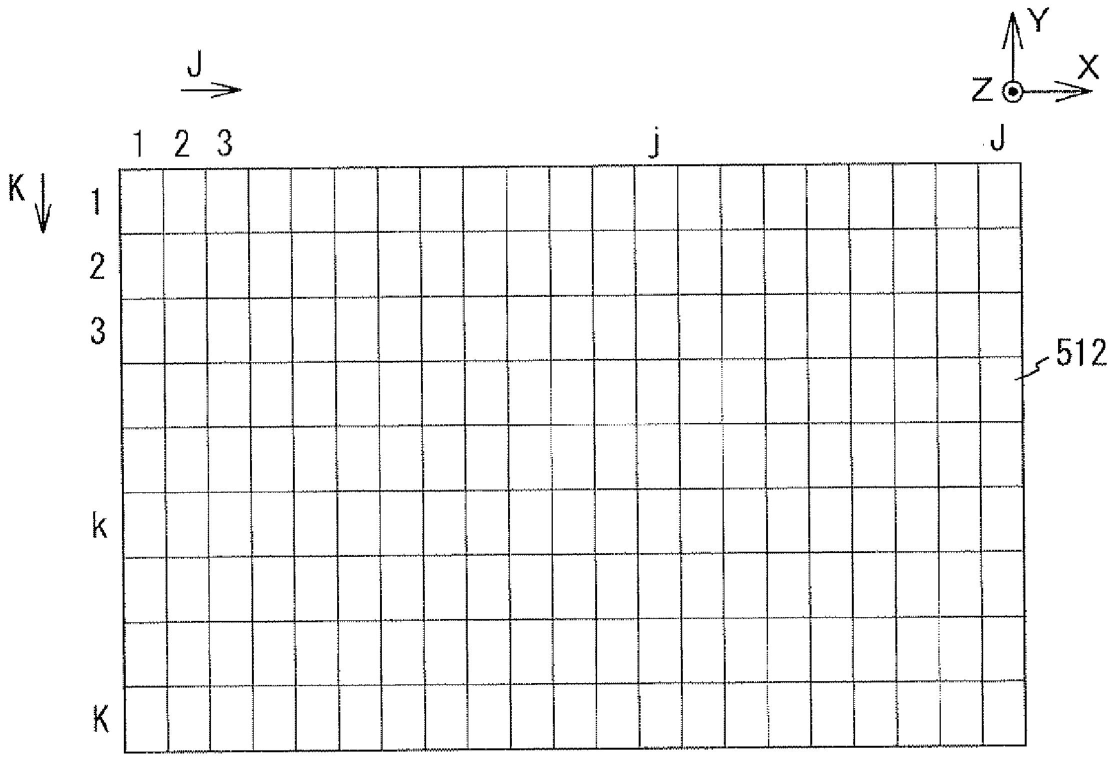

FIG.13

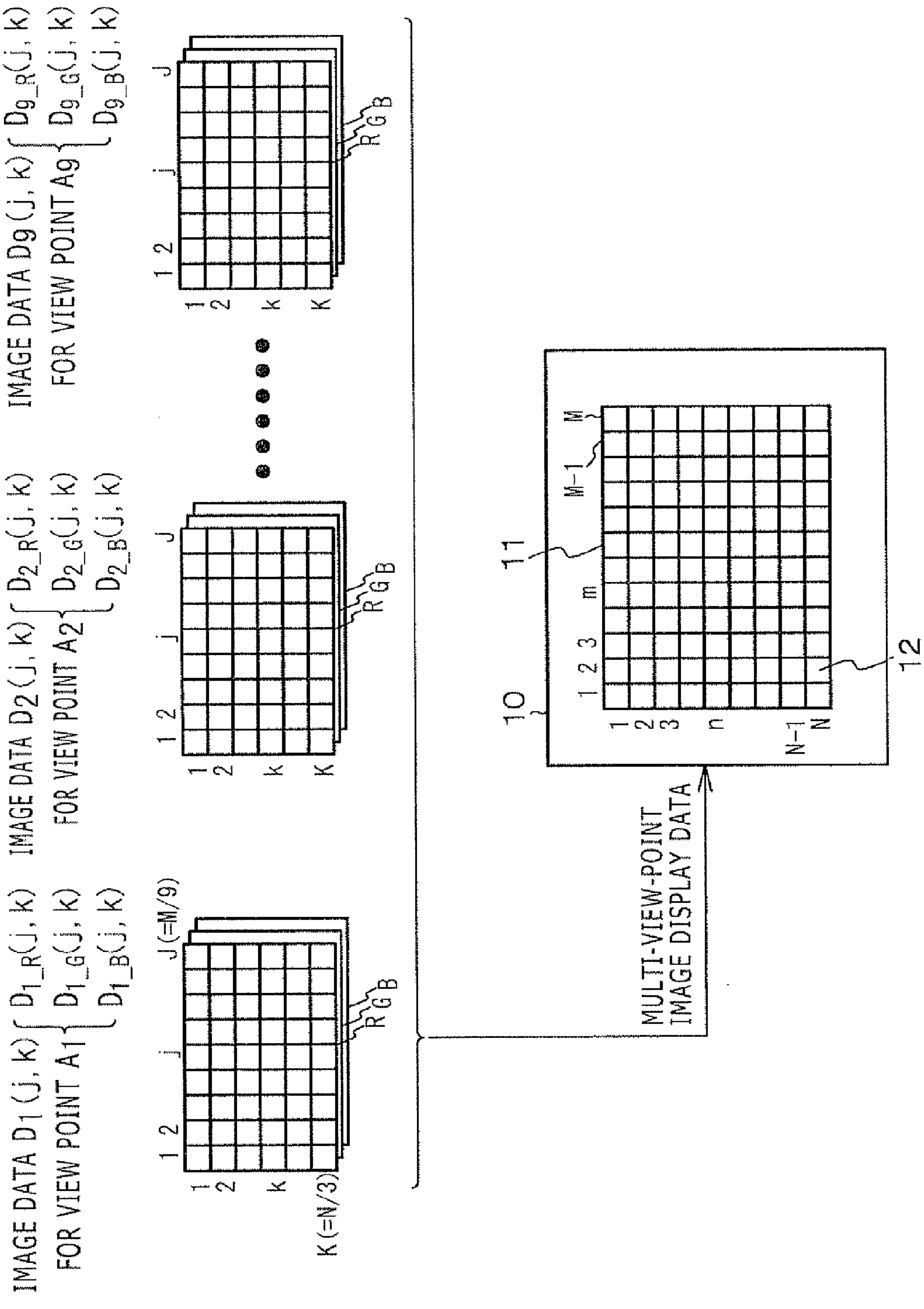

IMAGE DATA $D_1(j, k)$ FOR VIEW POINT $A_1$
$D_{1_R}(j, k)$
$D_{1_G}(j, k)$
$D_{1_B}(j, k)$
IMAGE DATA $D_2(j, k)$ FOR VIEW POINT $A_2$
$D_{2_R}(j, k)$
$D_{2_G}(j, k)$
$D_{2_B}(j, k)$
IMAGE DATA $D_9(j, k)$ FOR VIEW POINT $A_9$
$D_{9_R}(j, k)$
$D_{9_G}(j, k)$
$D_{9_B}(j, k)$
J(=M/9)
K(=N/3)
R G B
MULTI-VIEW-POINT IMAGE DISPLAY DATA
10
11
12
M-1
M
N-1
N

FIG.14 METHOD FOR SELECTING IMAGE DATA FOR SUB-PIXEL $12_{(m, n)}$

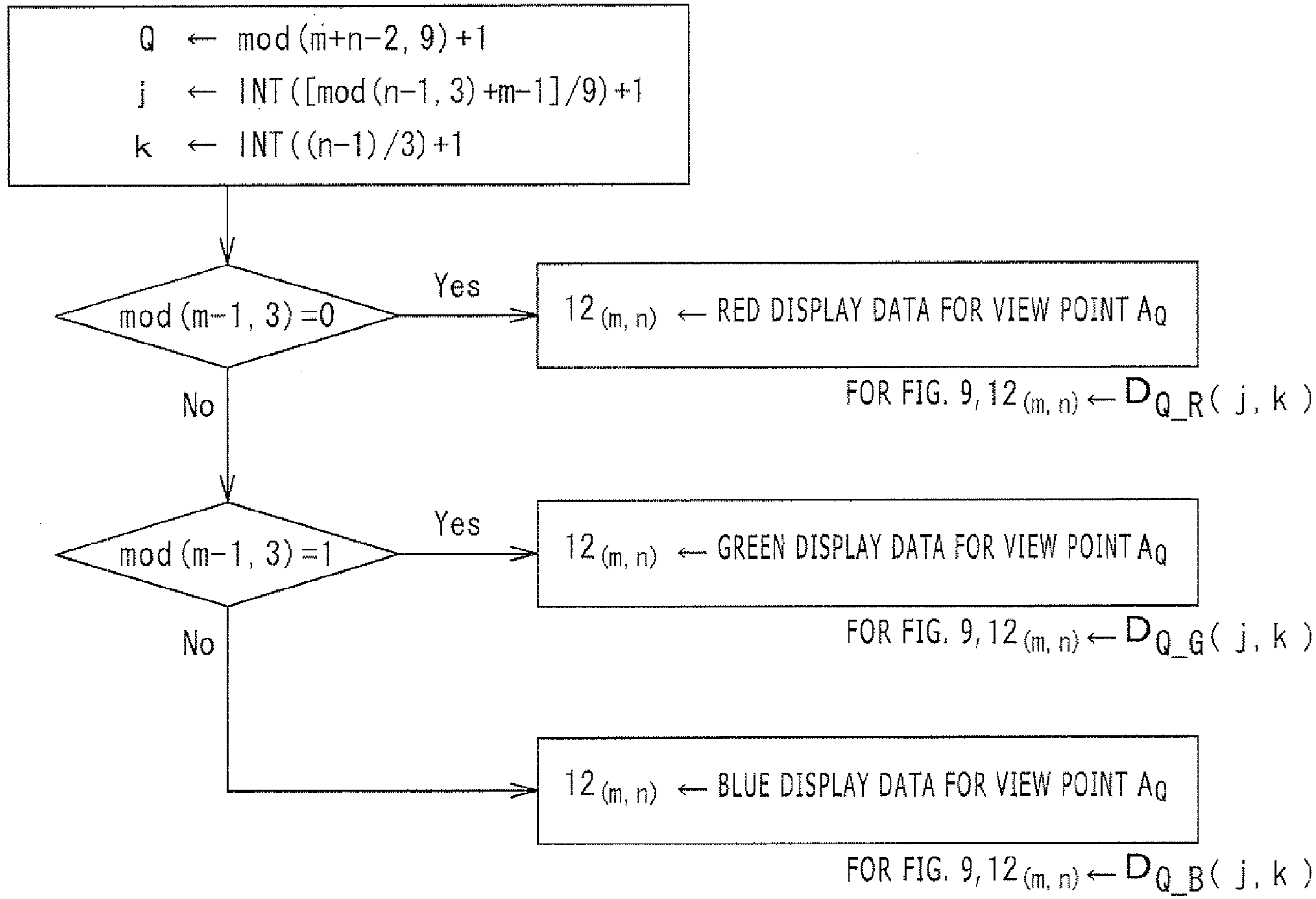

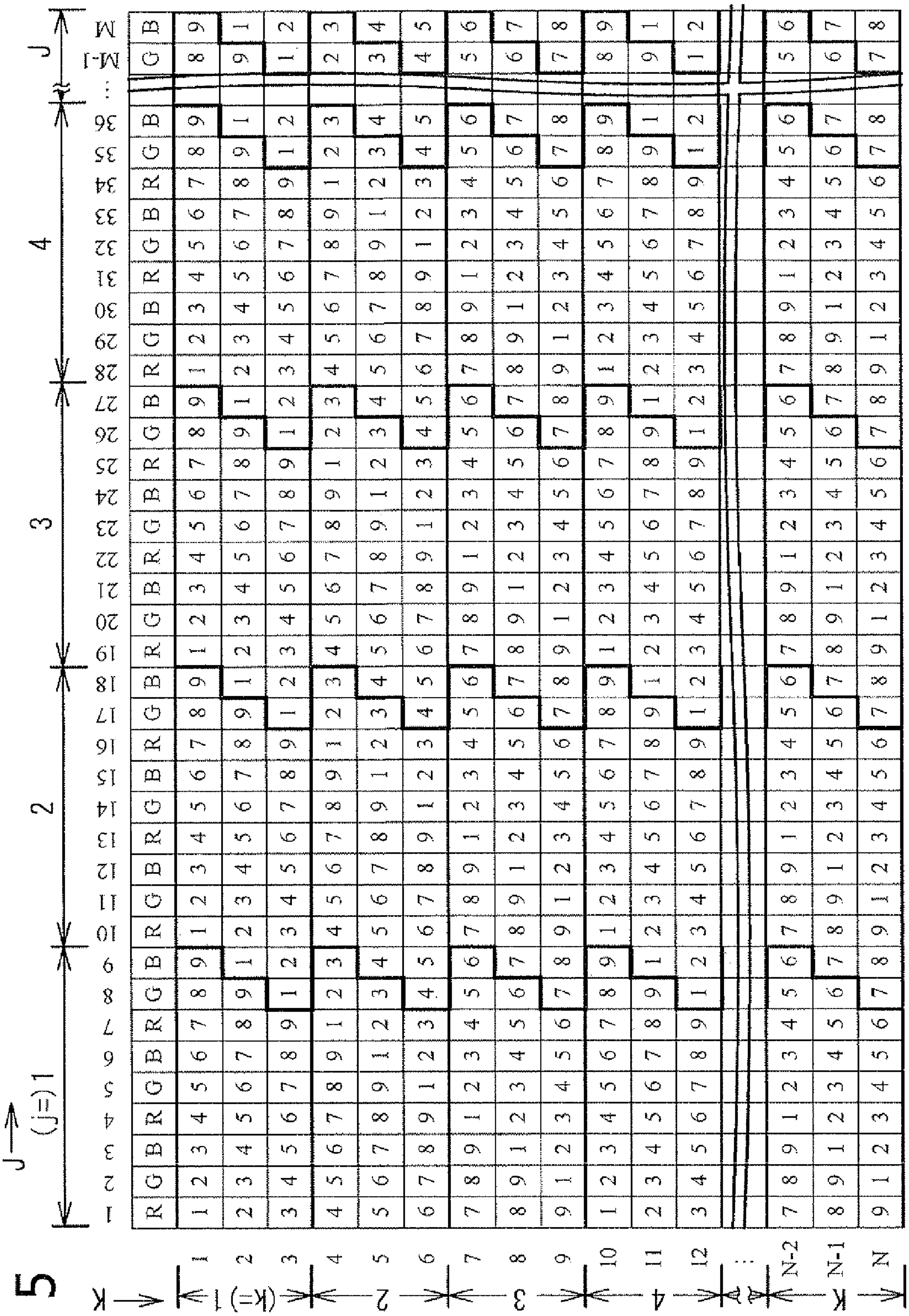

FIG.15

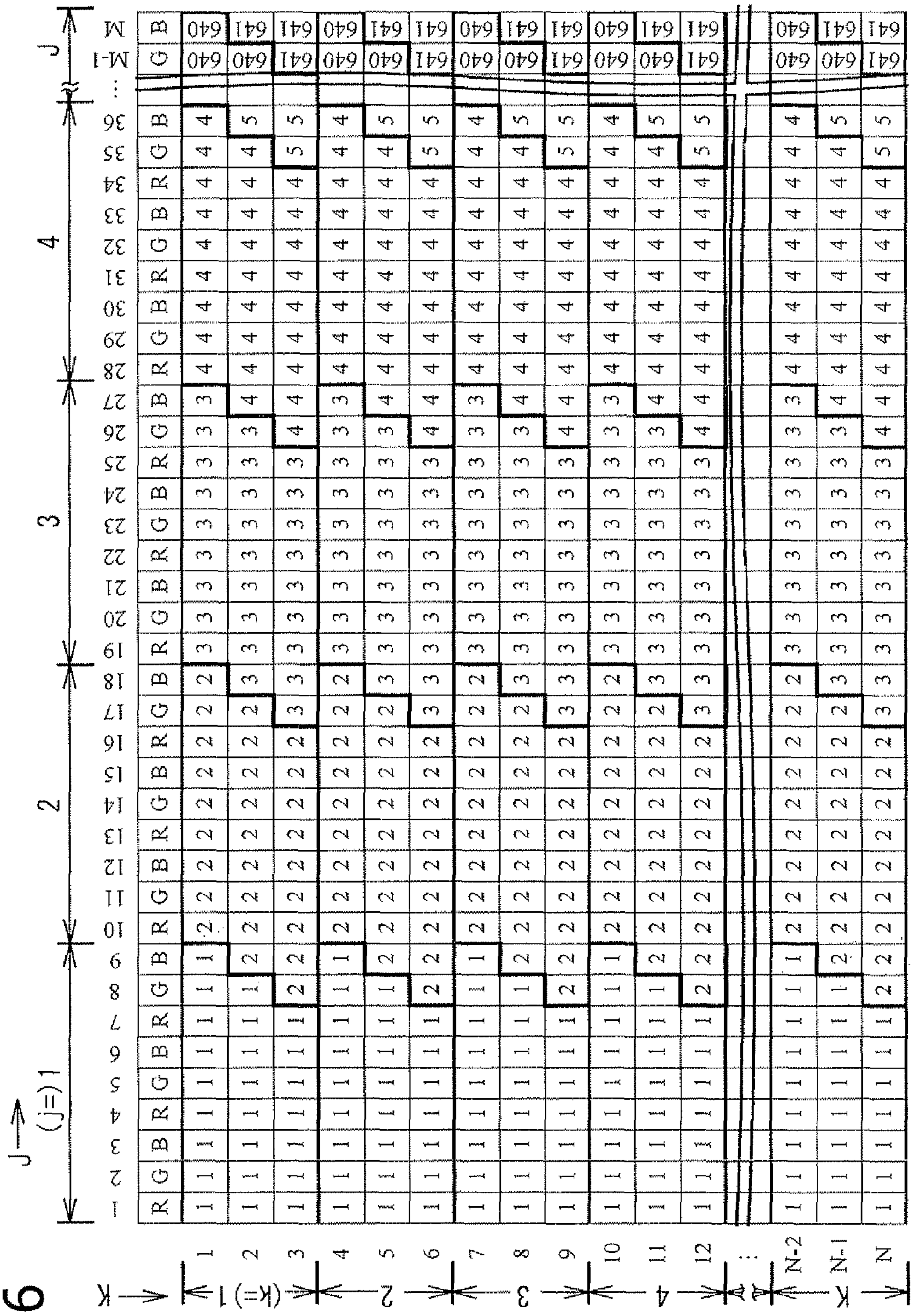


FIG.16

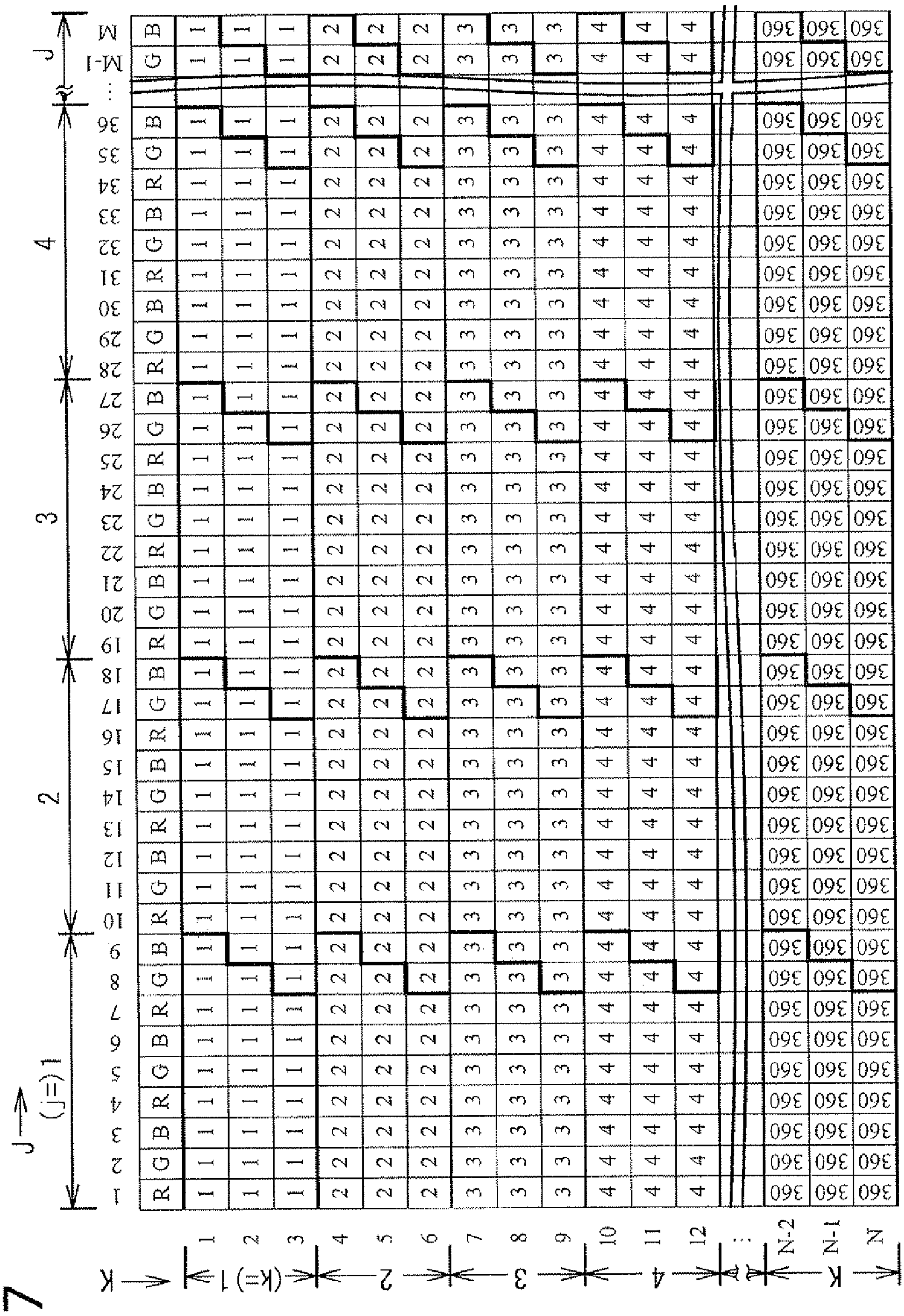


FIG. 17

FIG. 18

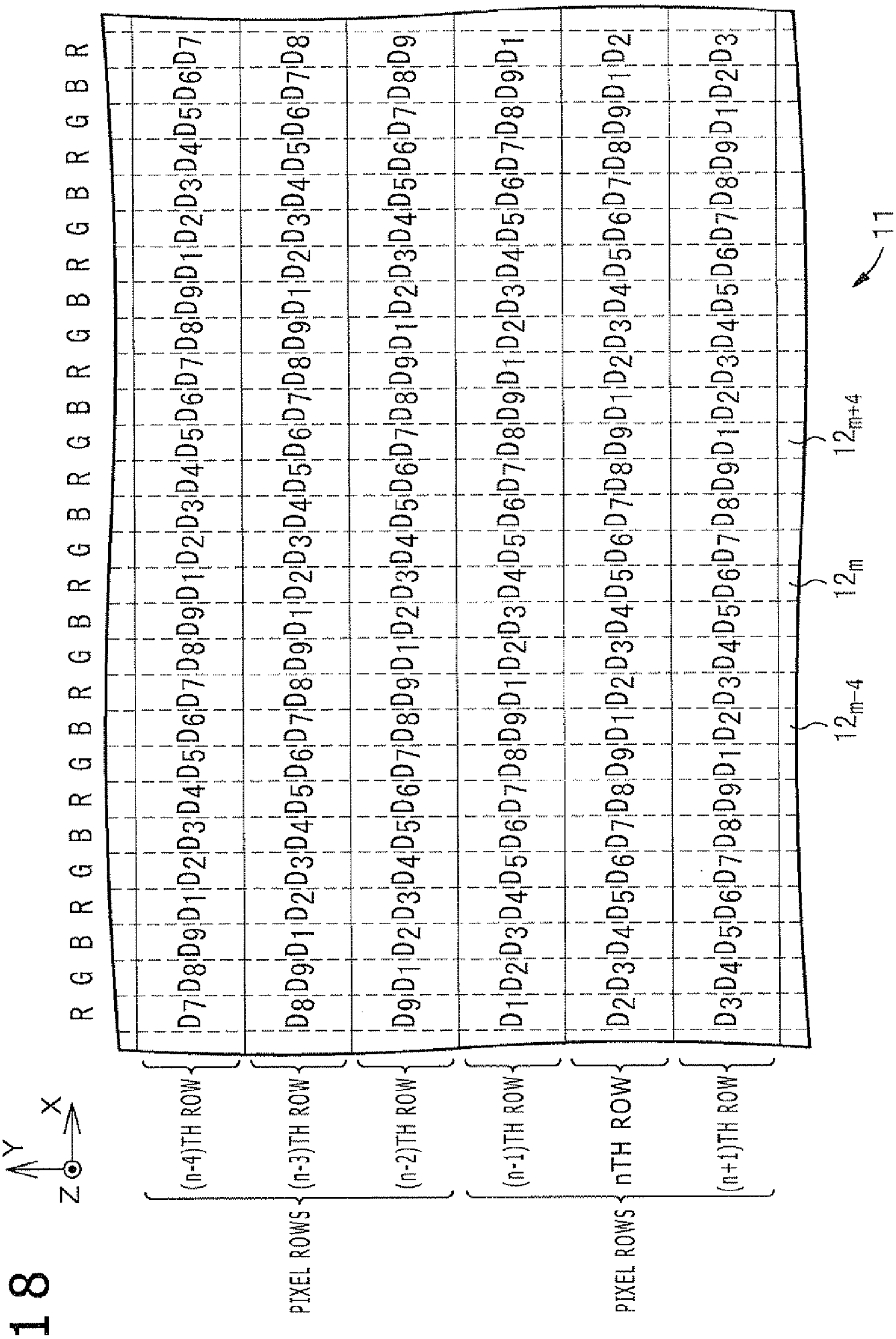
R G B R G B R G B R G B R G B R G B R G B R G B R G B R
D7 D8 D9 D1 D2 D3 D4 D5 D6 D7 D8 D9 D1 D2 D3 D4 D5 D6 D7 D8 D9 D1 D2 D3 D4 D5 D6 D7
D8 D9 D1 D2 D3 D4 D5 D6 D7 D8 D9 D1 D2 D3 D4 D5 D6 D7 D8 D9 D1 D2 D3 D4 D5 D6 D7 D8
D9 D1 D2 D3 D4 D5 D6 D7 D8 D9 D1 D2 D3 D4 D5 D6 D7 D8 D9 D1 D2 D3 D4 D5 D6 D7 D8 D9
D1 D2 D3 D4 D5 D6 D7 D8 D9 D1 D2 D3 D4 D5 D6 D7 D8 D9 D1 D2 D3 D4 D5 D6 D7 D8 D9 D1
D2 D3 D4 D5 D6 D7 D8 D9 D1 D2 D3 D4 D5 D6 D7 D8 D9 D1 D2 D3 D4 D5 D6 D7 D8 D9 D1 D2
D3 D4 D5 D6 D7 D8 D9 D1 D2 D3 D4 D5 D6 D7 D8 D9 D1 D2 D3 D4 D5 D6 D7 D8 D9 D1 D2 D3
Y
X
Z
(n-4)TH ROW
(n-3)TH ROW
(n-2)TH ROW
(n-1)TH ROW
nTH ROW
(n+1)TH ROW
PIXEL ROWS
PIXEL ROWS
12m-4
12m
12m+4
11

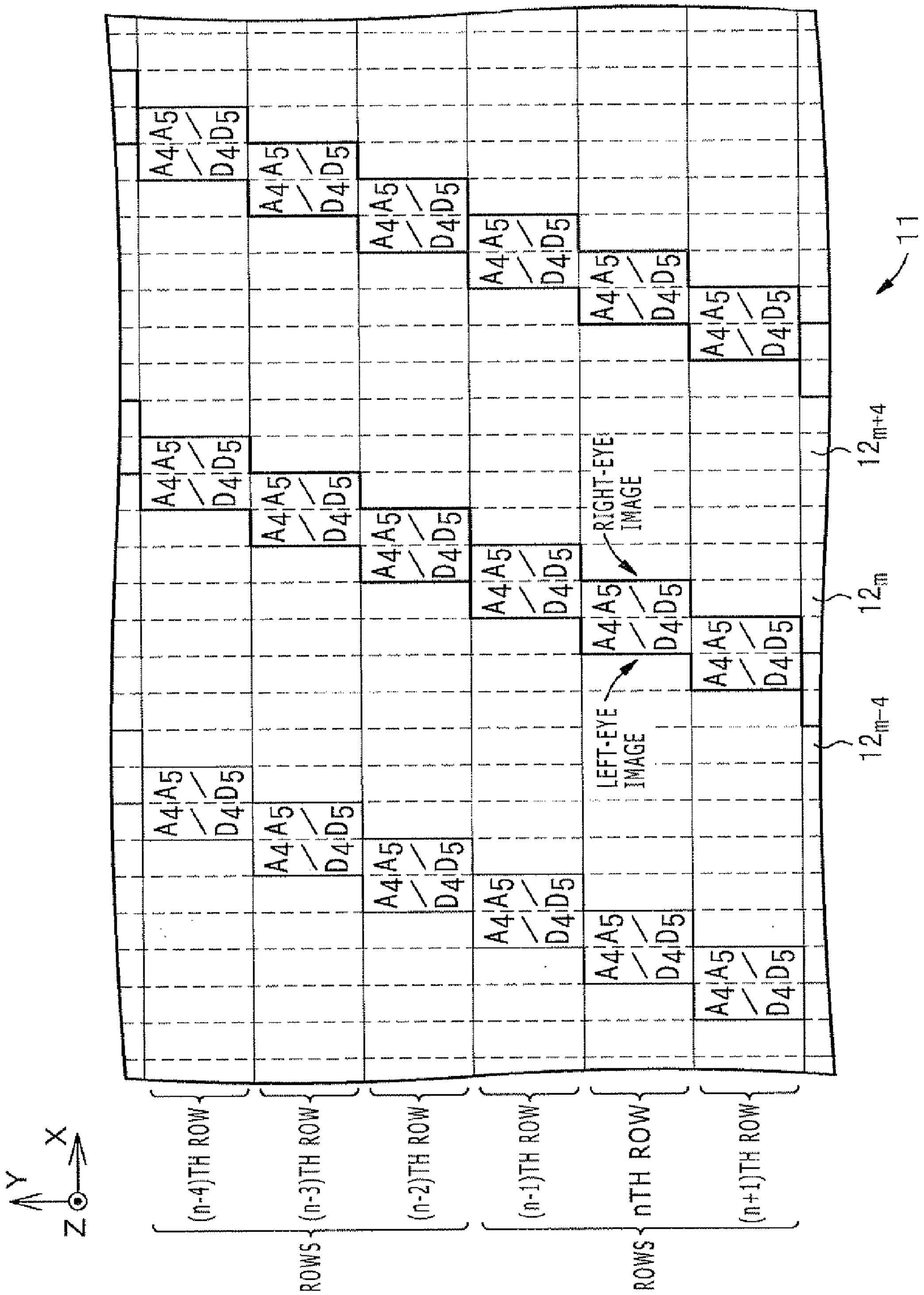

A4 A5 / D4 D5
RIGHT-EYE IMAGE
LEFT-EYE IMAGE
11
$12_{m+4}$
$12_m$
$12_{m-4}$
(n-4)TH ROW
(n-3)TH ROW
(n-2)TH ROW
(n-1)TH ROW
nTH ROW
(n+1)TH ROW
PIXEL ROWS
PIXEL ROWS
X
Y
Z


FIG.19

FIG.20A

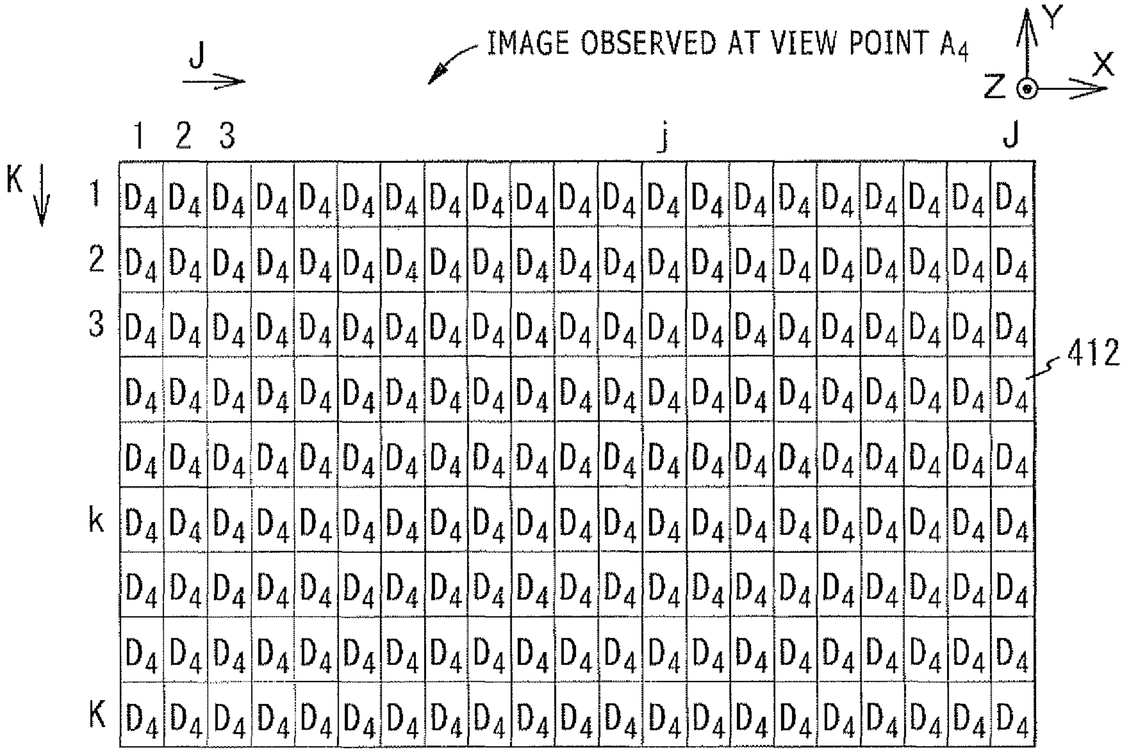


FIG.20B

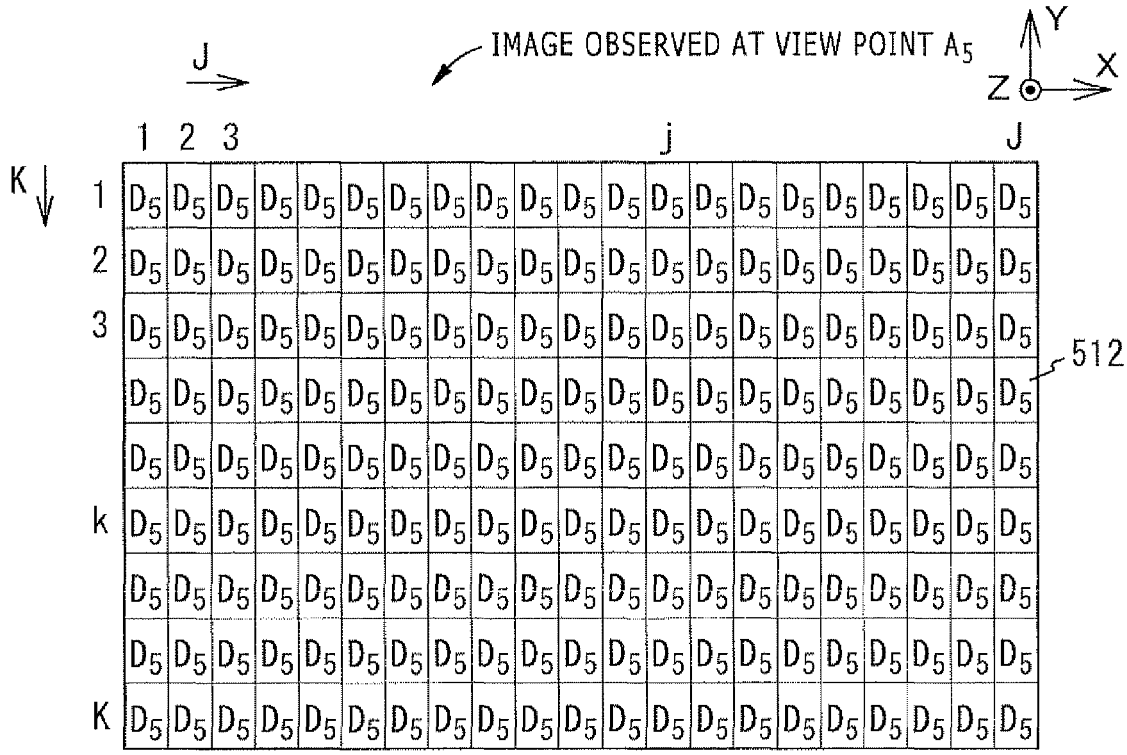

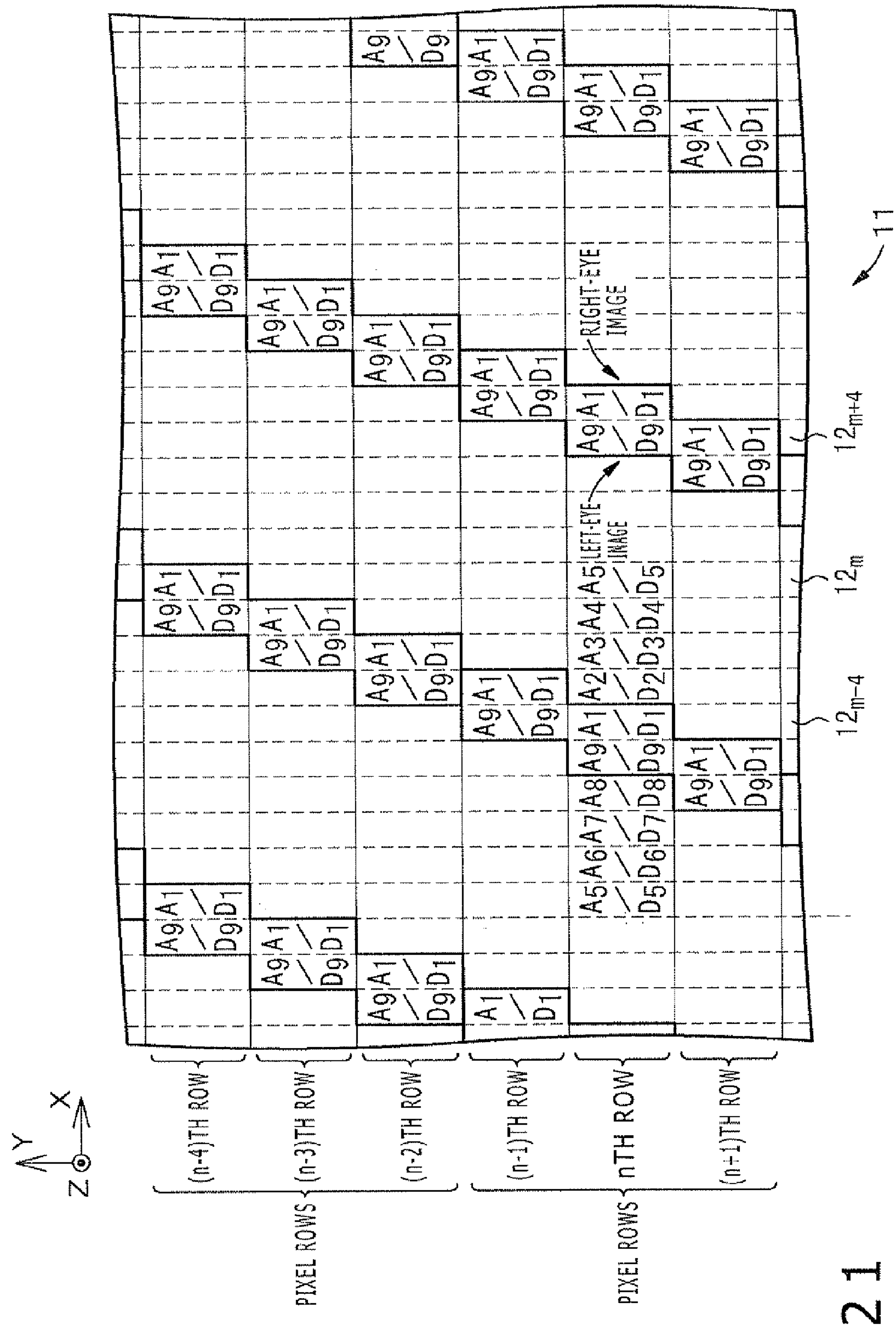

PIXEL ROWS
(n-4)TH ROW
(n-3)TH ROW
(n-2)TH ROW
PIXEL ROWS
(n-1)TH ROW
nTH ROW
(n+1)TH ROW
RIGHT-EYE IMAGE
LEFT-EYE IMAGE
11
12m-4
12m
12m+4
X
Y
Z


FIG. 21

# FIG.22A

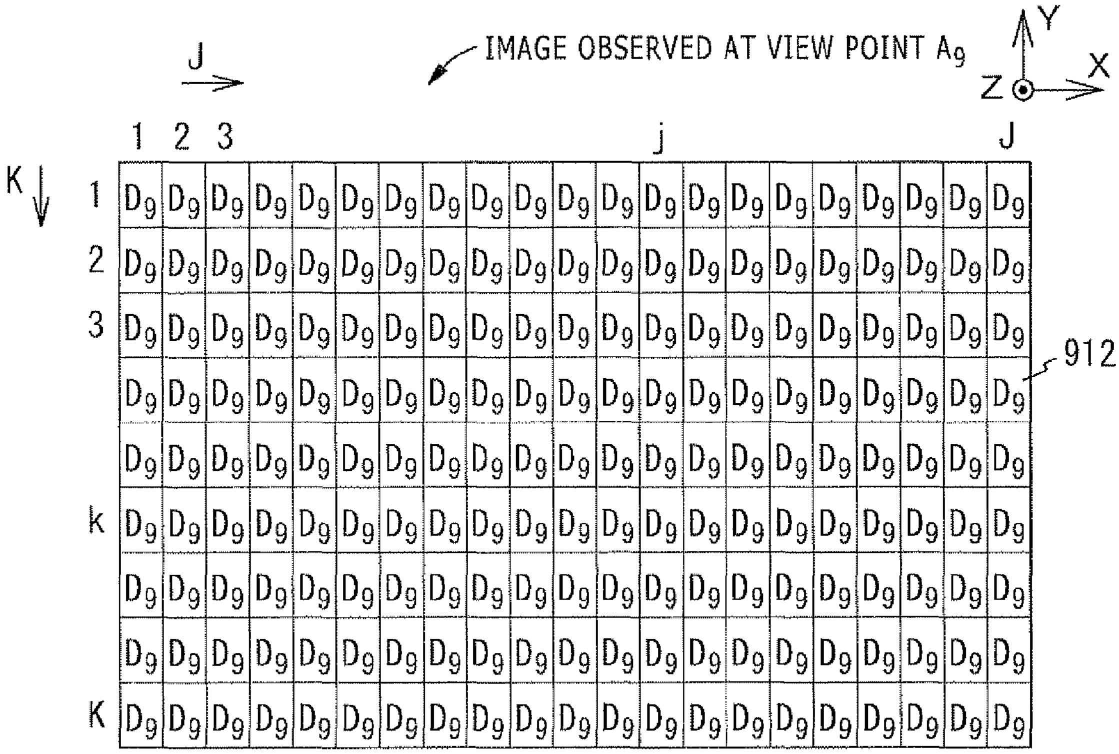


# FIG.22B

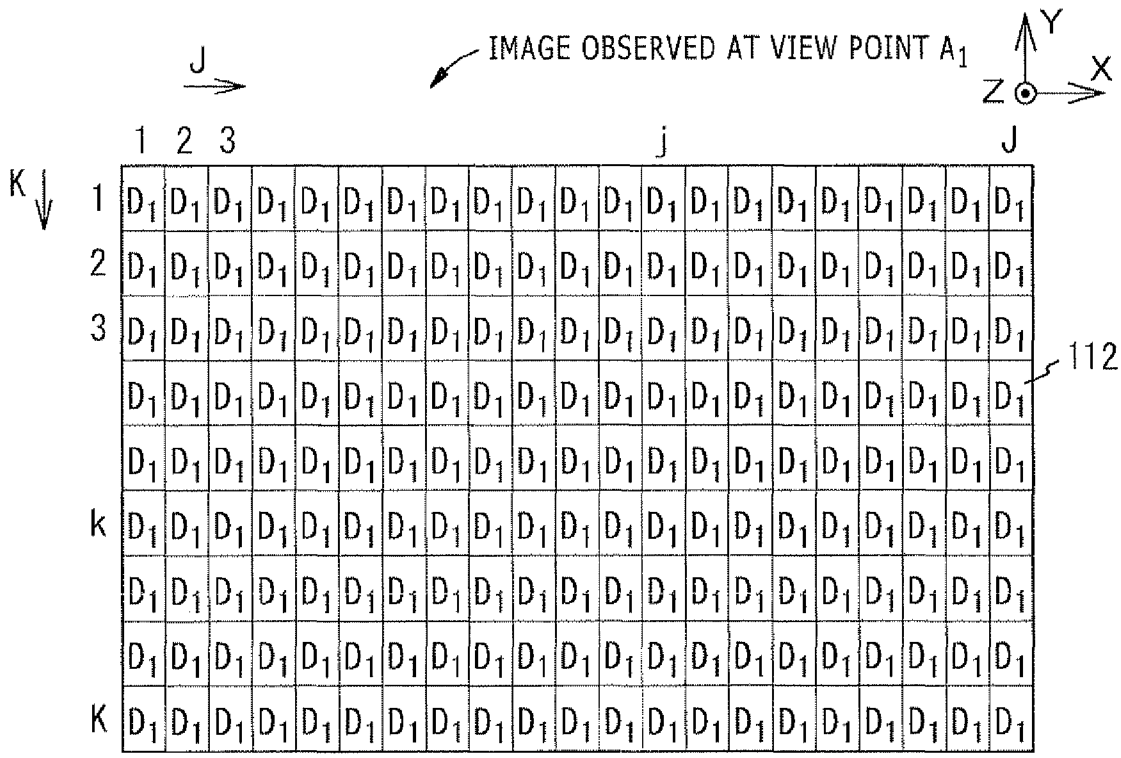

FIG.23A

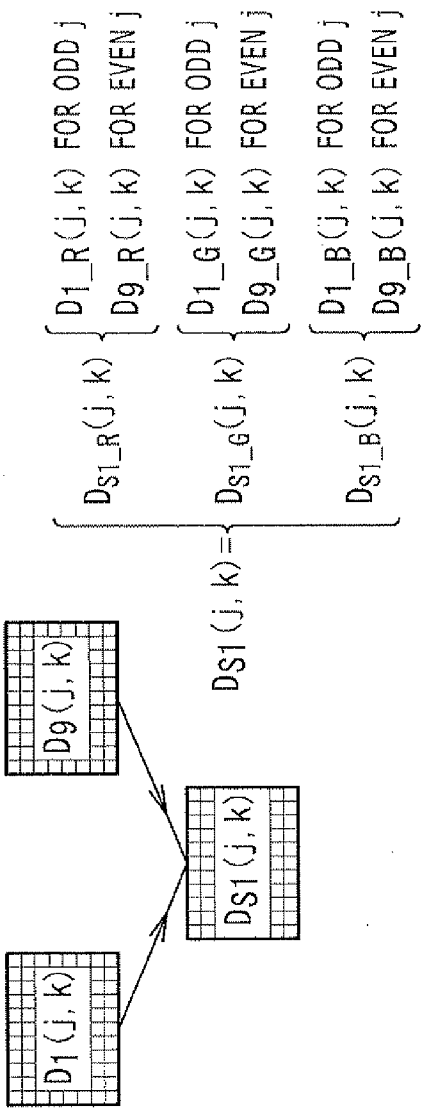


FIG.23B

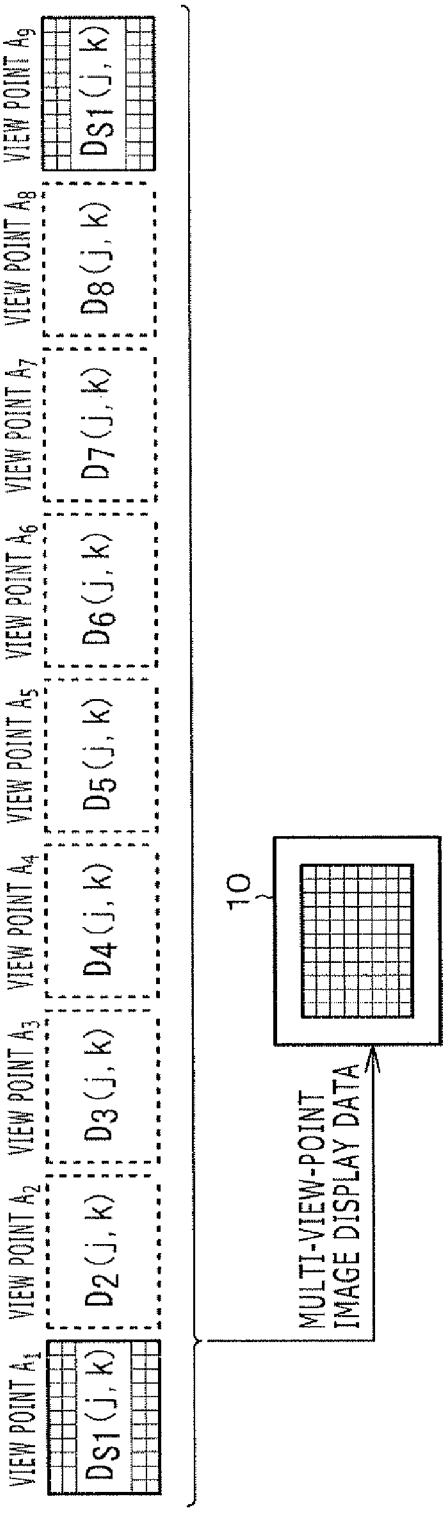

FIG.24A

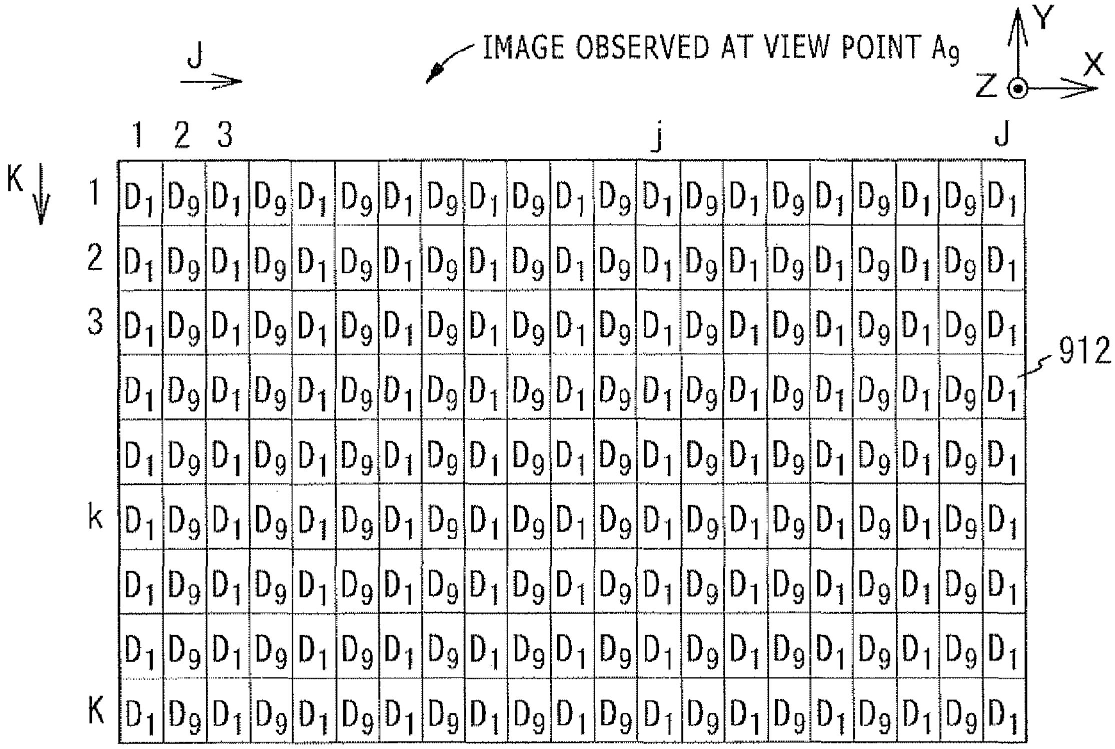


FIG.24B

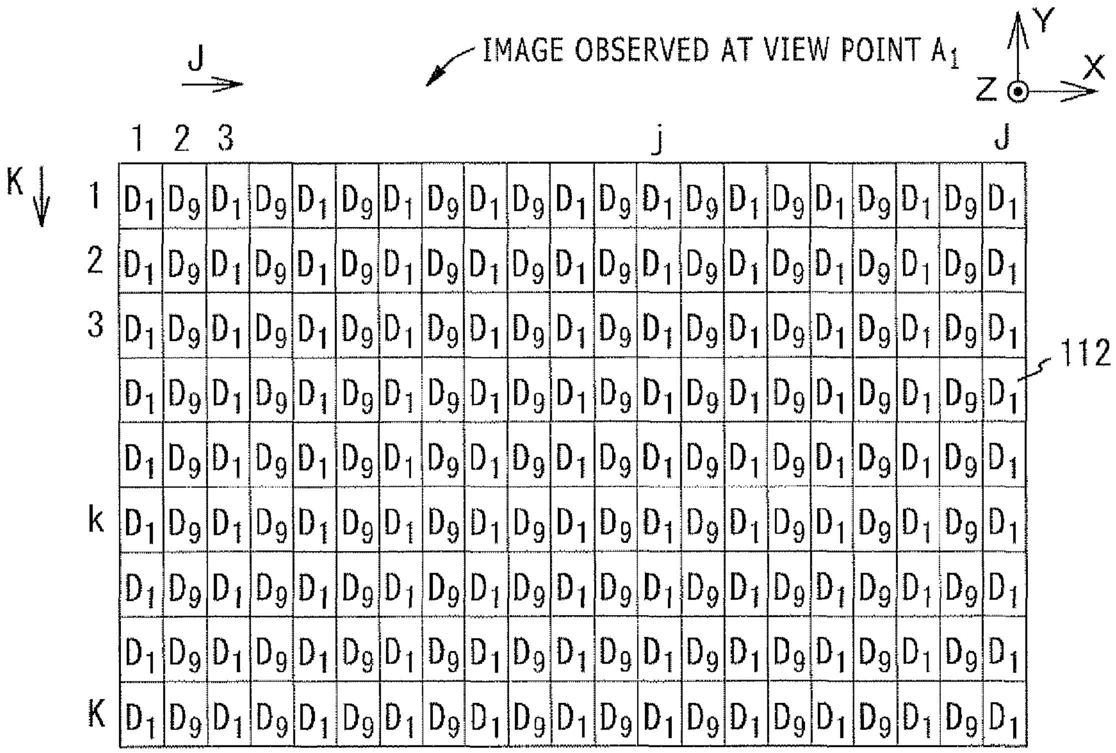

FIG.25A

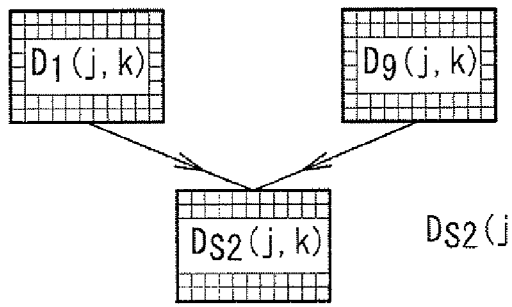


$$D_{S2}(j,k)=\begin{cases} D_{S2_R}(j,k) \begin{cases} D_{9_R}(j,k) & \text{FOR ODD } j \\ D_{1_R}(j,k) & \text{FOR EVEN } j \end{cases} \\ D_{S2_G}(j,k) \begin{cases} D_{9_G}(j,k) & \text{FOR ODD } j \\ D_{1_G}(j,k) & \text{FOR EVEN } j \end{cases} \\ D_{S2_B}(j,k) \begin{cases} D_{9_B}(j,k) & \text{FOR ODD } j \\ D_{1_B}(j,k) & \text{FOR EVEN } j \end{cases} \end{cases}$$

FIG.25B

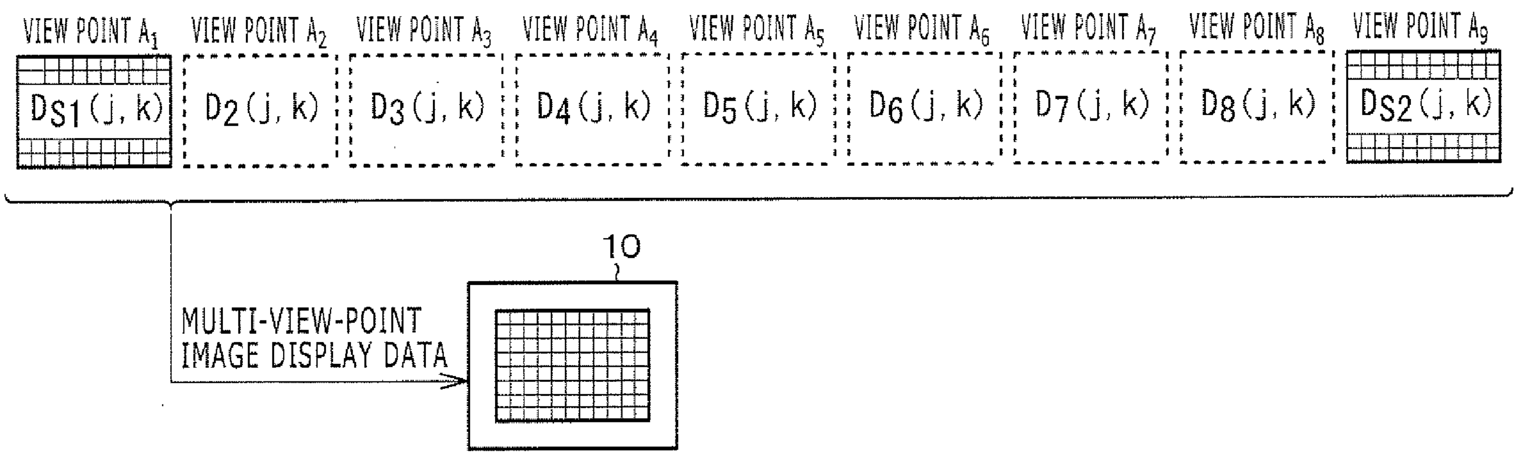

FIG.26A

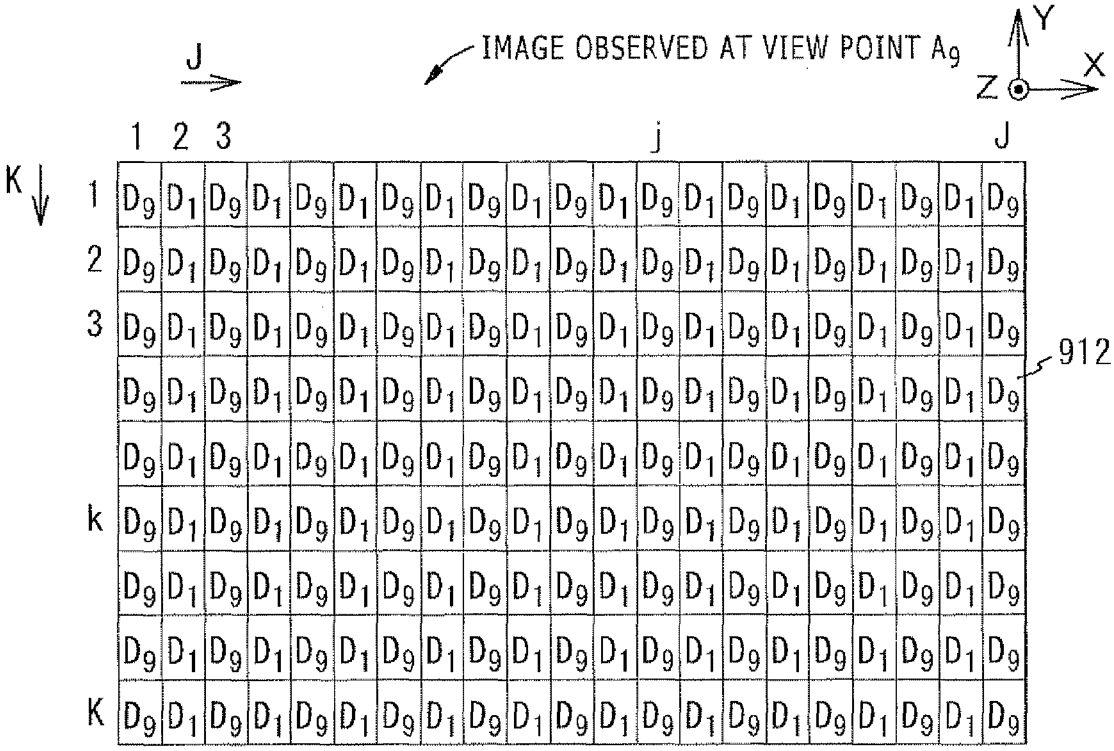


FIG.26B

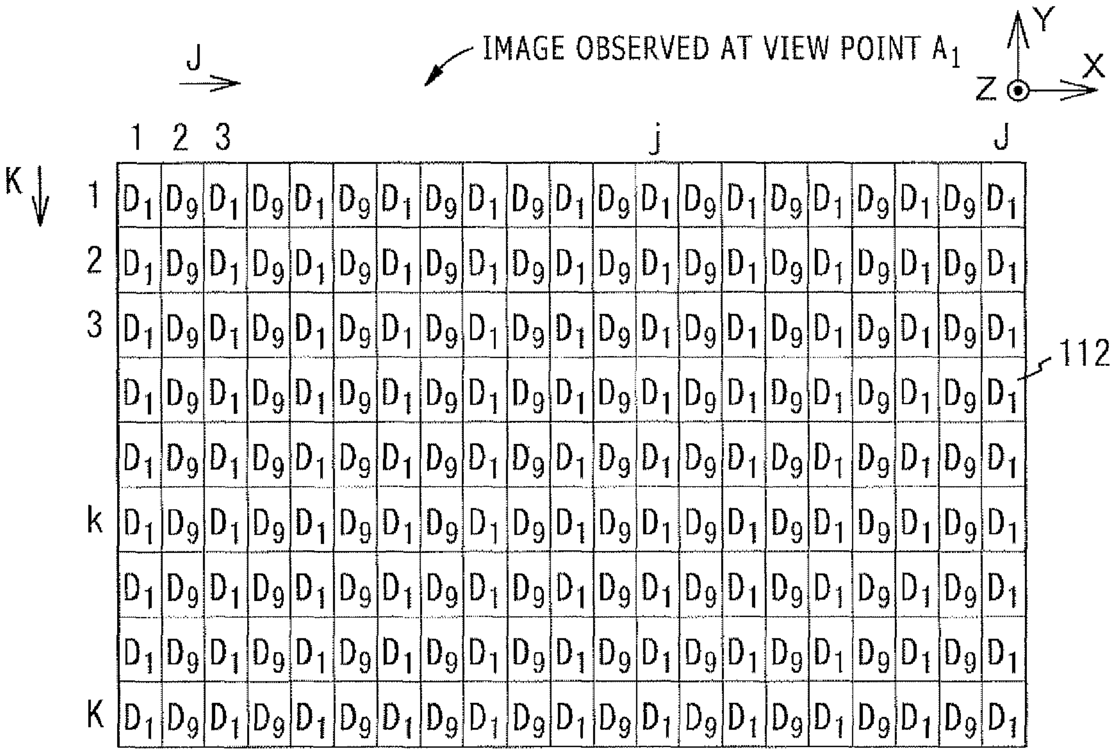

FIG.27A

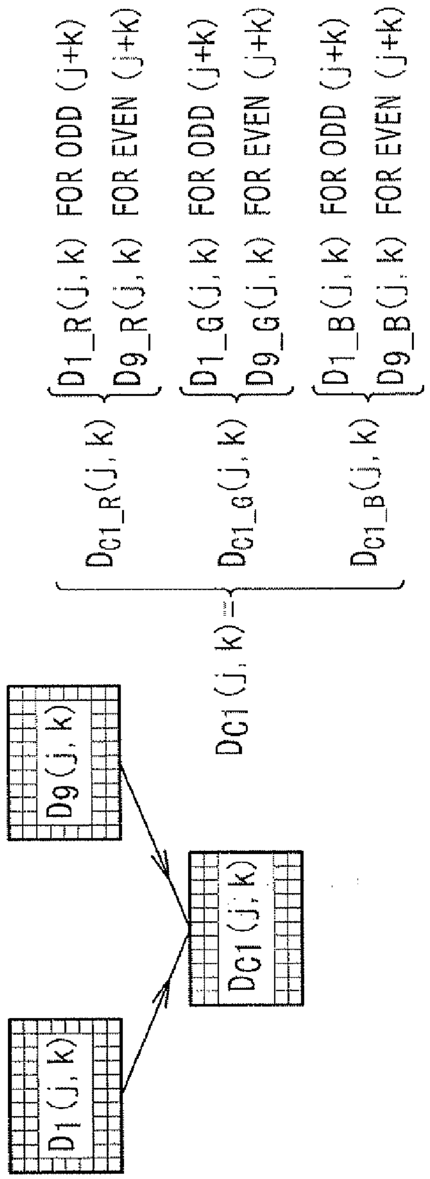


FIG.27B

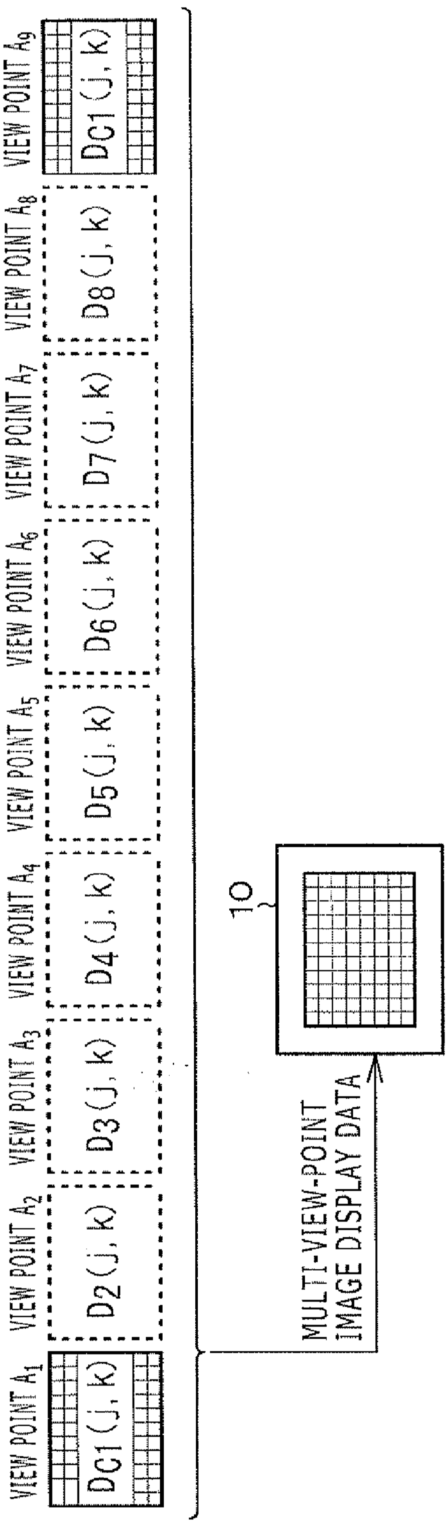

# FIG.28A

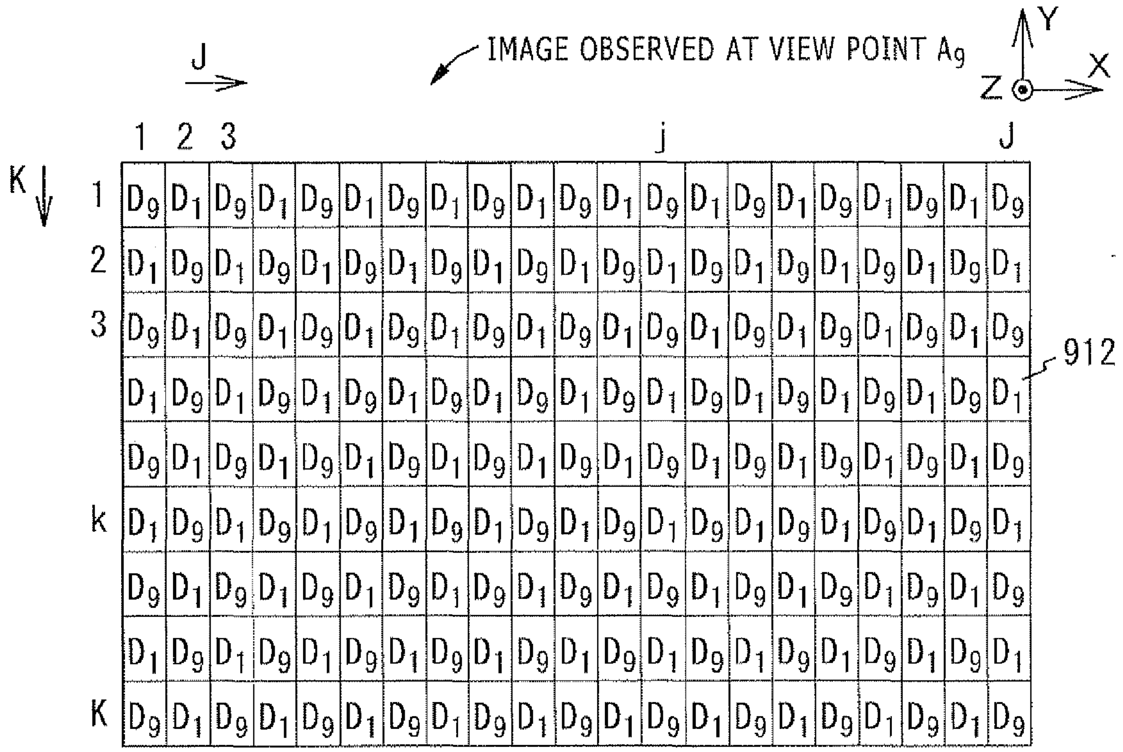


# FIG.28B

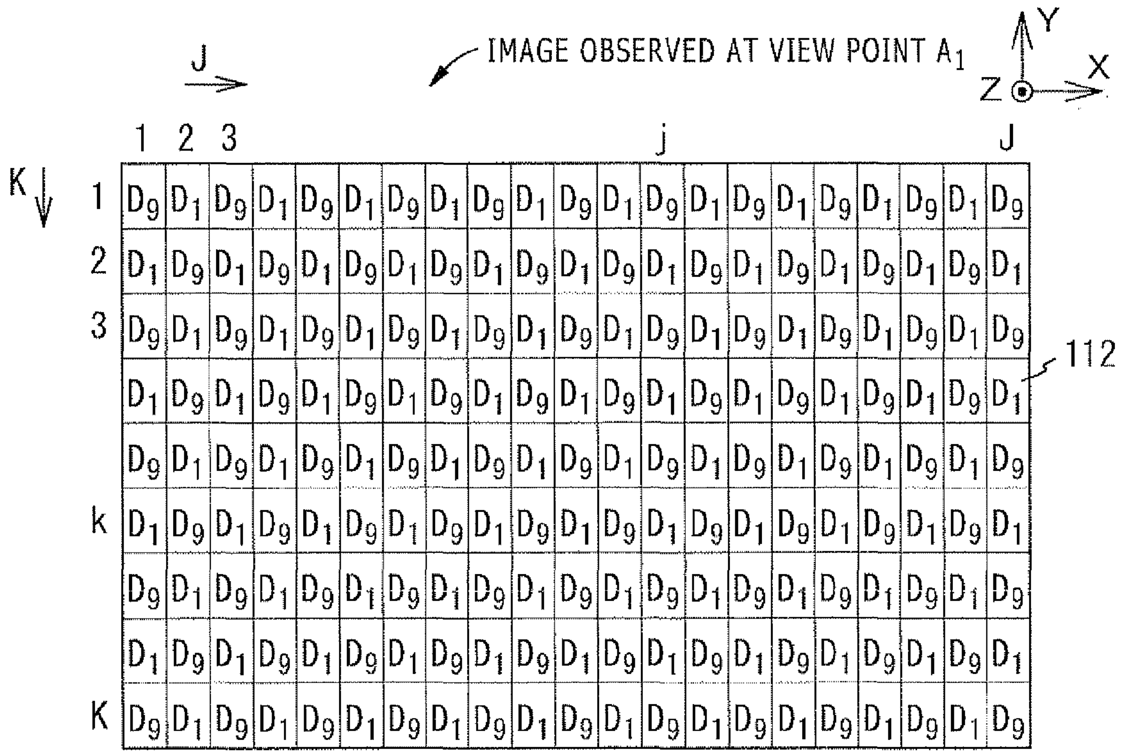

FIG.29A

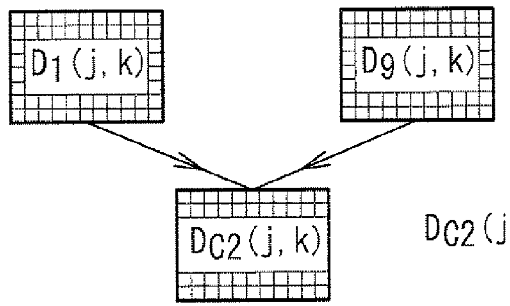


$$D_{C2}(j,k)=\begin{cases} D_{C2_R}(j,k) \begin{cases} D9_R(j,k) \text{ FOR ODD } (j+k) \\ D1_R(j,k) \text{ FOR EVEN } (j+k) \end{cases} \\ D_{C2_G}(j,k) \begin{cases} D9_G(j,k) \text{ FOR ODD } (j+k) \\ D1_G(j,k) \text{ FOR EVEN } (j+k) \end{cases} \\ D_{C2_B}(j,k) \begin{cases} D9_B(j,k) \text{ FOR ODD } (j+k) \\ D1_B(j,k) \text{ FOR EVEN } (j+k) \end{cases} \end{cases}$$

FIG.29B

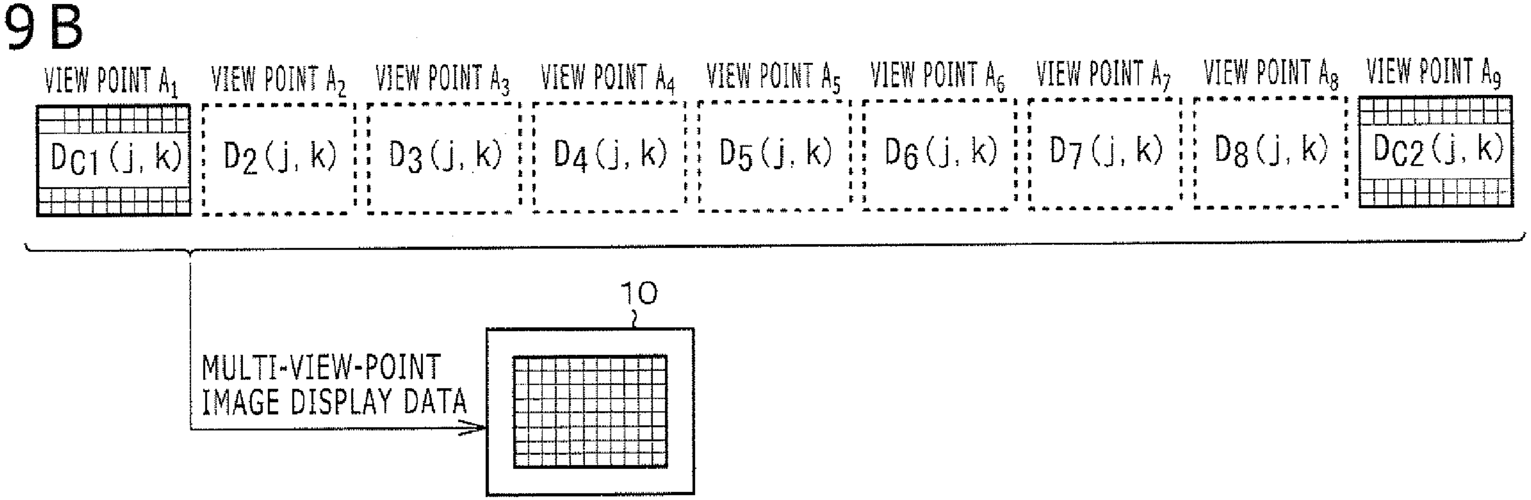

FIG.30A

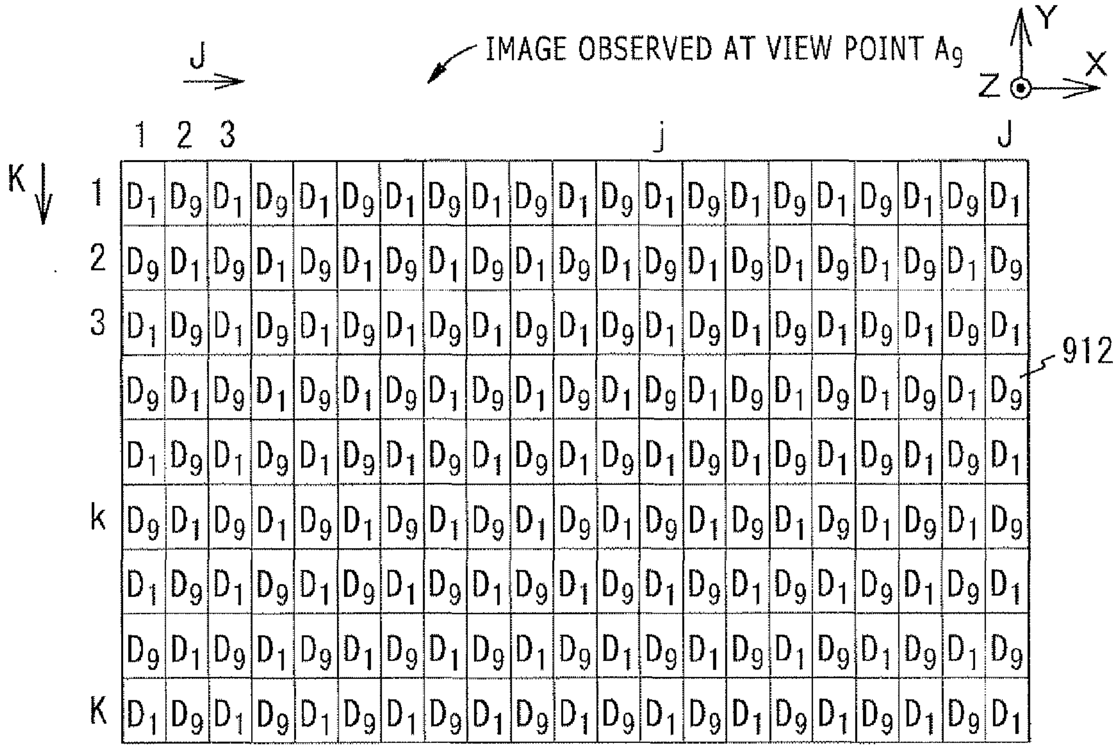


FIG.30B

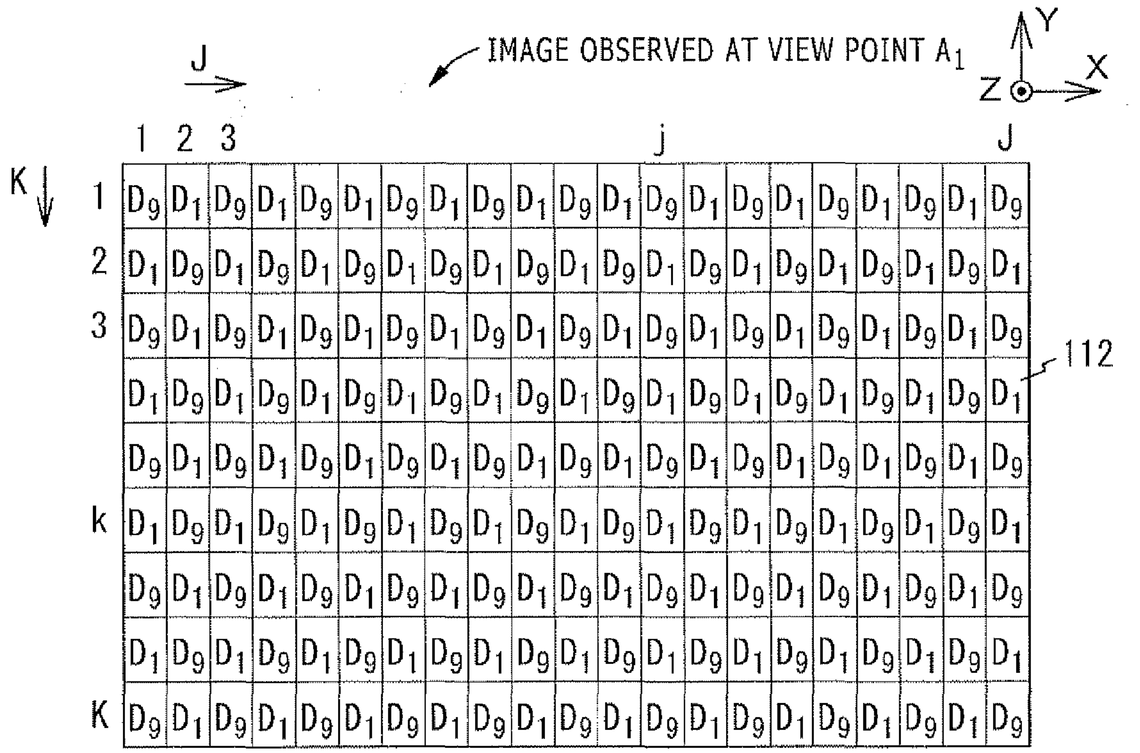

FIG.31A

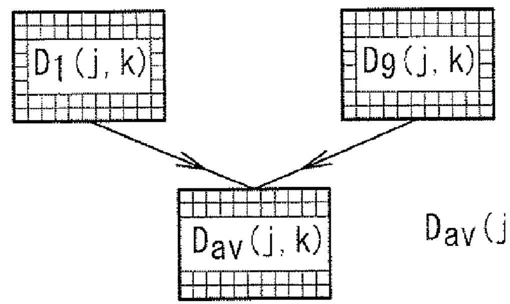


$$D_{av}(j,k)=\begin{cases} D_{av_R}(j,k)=\frac{1}{2}\left(D1_R(j,k)+D9_R(j,k)\right) \\ D_{av_G}(j,k)=\frac{1}{2}\left(D1_R(j,k)+D9_R(j,k)\right) \\ D_{av_B}(j,k)=\frac{1}{2}\left(D1_R(j,k)+D9_R(j,k)\right) \end{cases}$$

FIG.31B

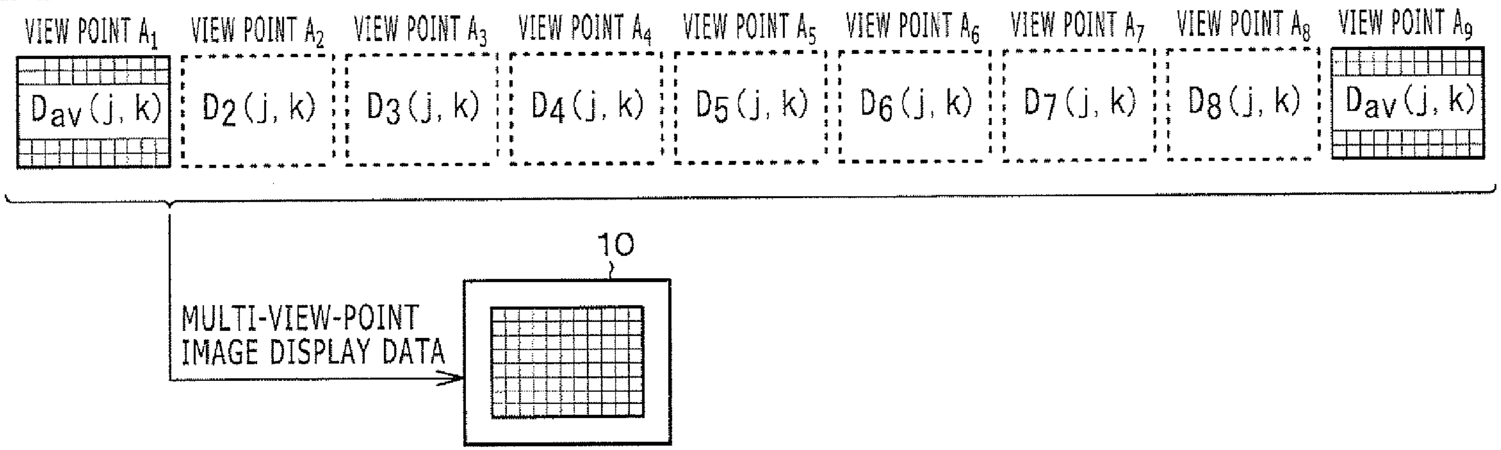

# FIG.32A

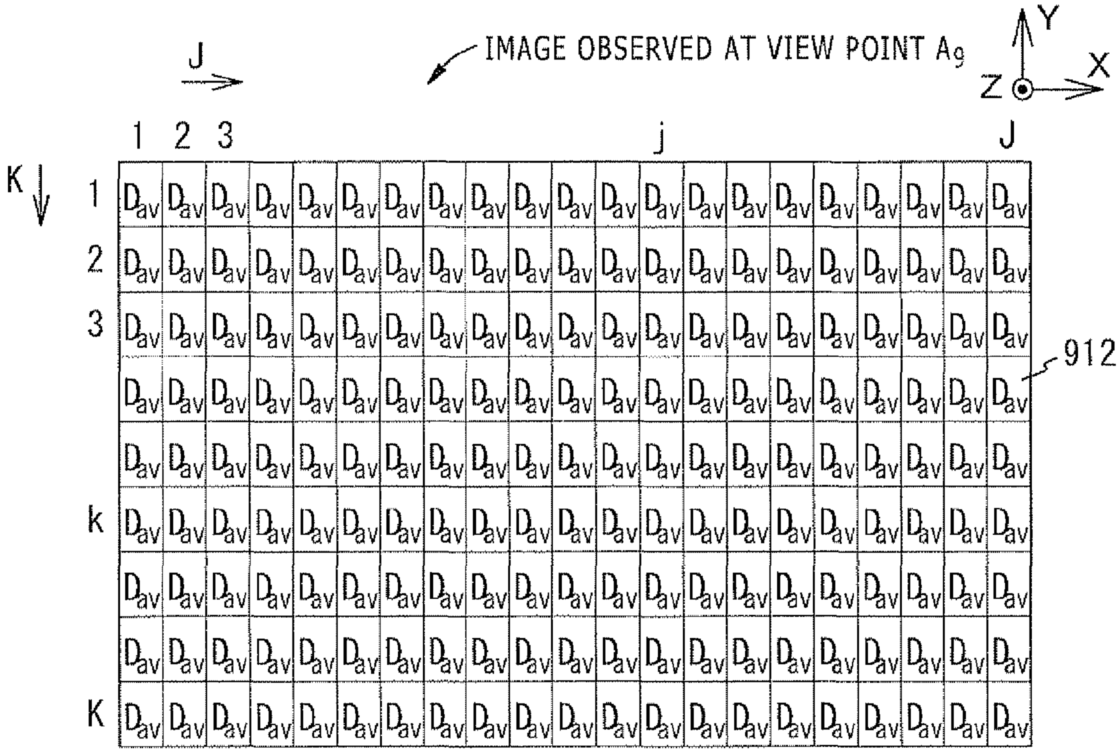


# FIG.32B

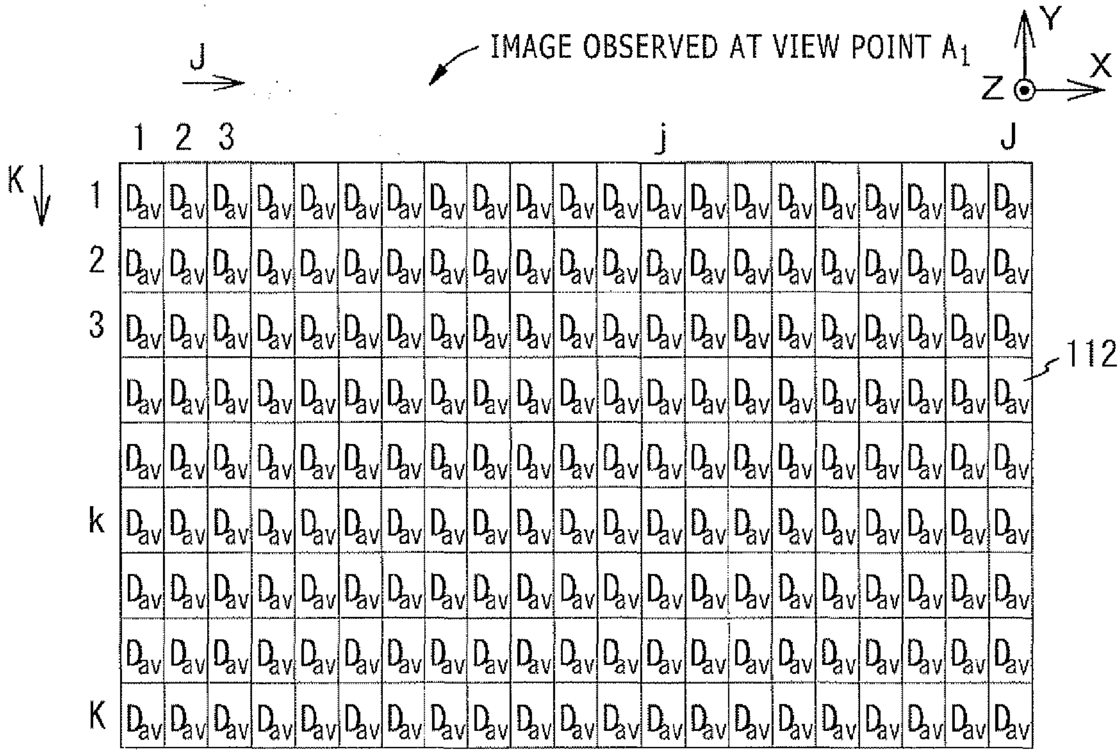

FIG. 33

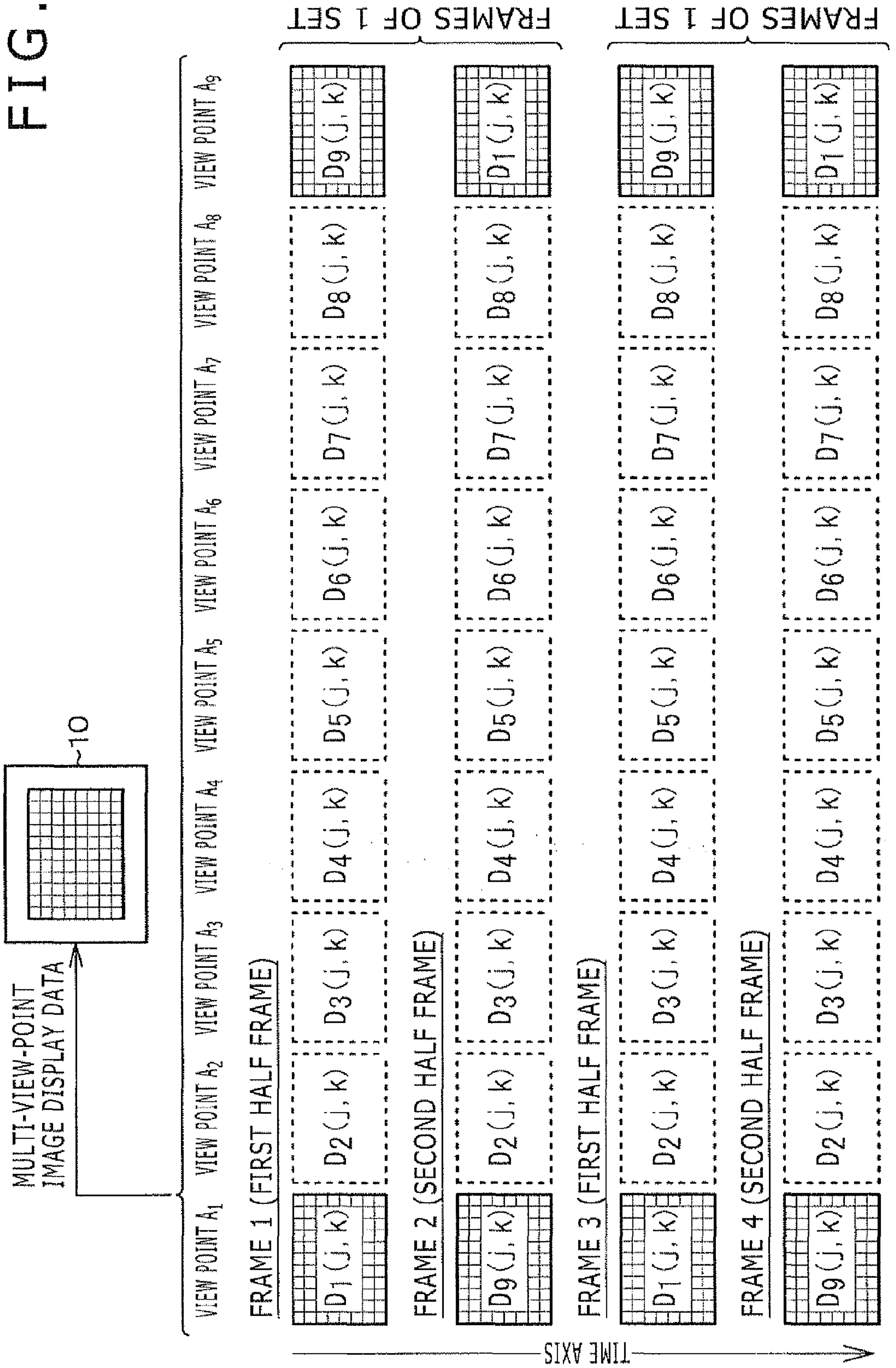
MULTI-VIEW-POINT IMAGE DISPLAY DATA
10
VIEW POINT A1
VIEW POINT A2
VIEW POINT A3
VIEW POINT A4
VIEW POINT A5
VIEW POINT A6
VIEW POINT A7
VIEW POINT A8
VIEW POINT A9
FRAME 1 (FIRST HALF FRAME)
D1(j, k)
D2(j, k)
D3(j, k)
D4(j, k)
D5(j, k)
D6(j, k)
D7(j, k)
D8(j, k)
D9(j, k)
FRAME 2 (SECOND HALF FRAME)
D9(j, k)
D2(j, k)
D3(j, k)
D4(j, k)
D5(j, k)
D6(j, k)
D7(j, k)
D8(j, k)
D1(j, k)
FRAMES OF 1 SET
FRAME 3 (FIRST HALF FRAME)
D1(j, k)
D2(j, k)
D3(j, k)
D4(j, k)
D5(j, k)
D6(j, k)
D7(j, k)
D8(j, k)
D9(j, k)
FRAME 4 (SECOND HALF FRAME)
D9(j, k)
D2(j, k)
D3(j, k)
D4(j, k)
D5(j, k)
D6(j, k)
D7(j, k)
D8(j, k)
D1(j, k)
FRAMES OF 1 SET
TIME AXIS

FIG.34A

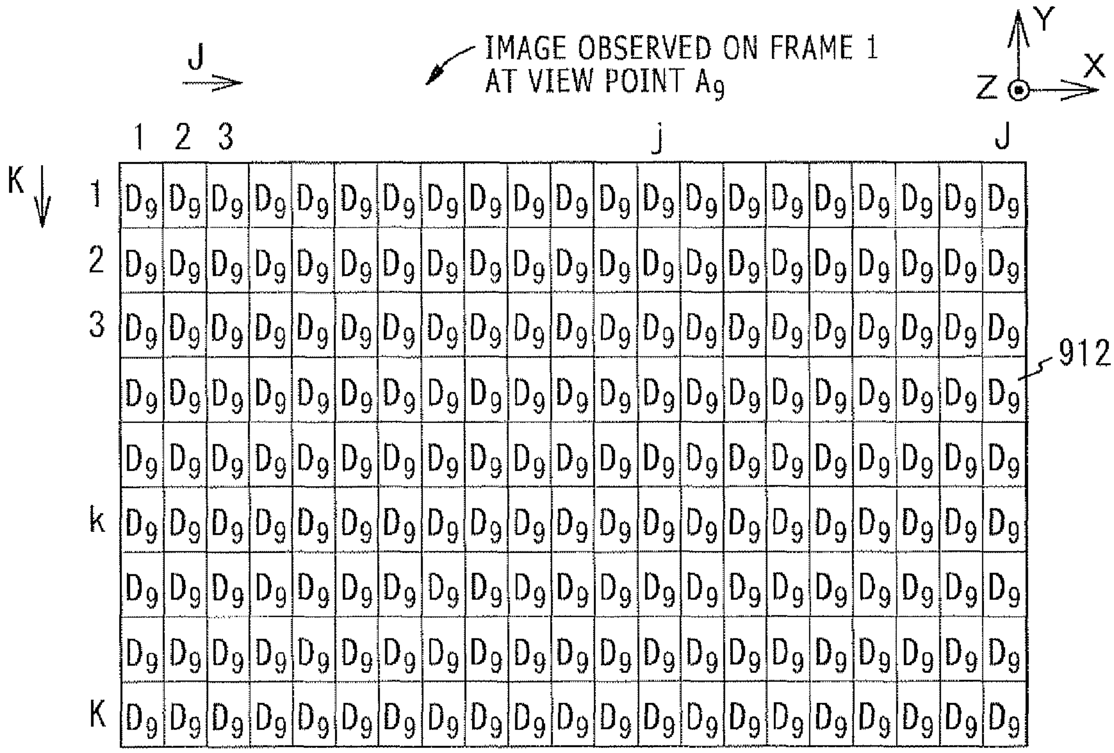


FIG.34B

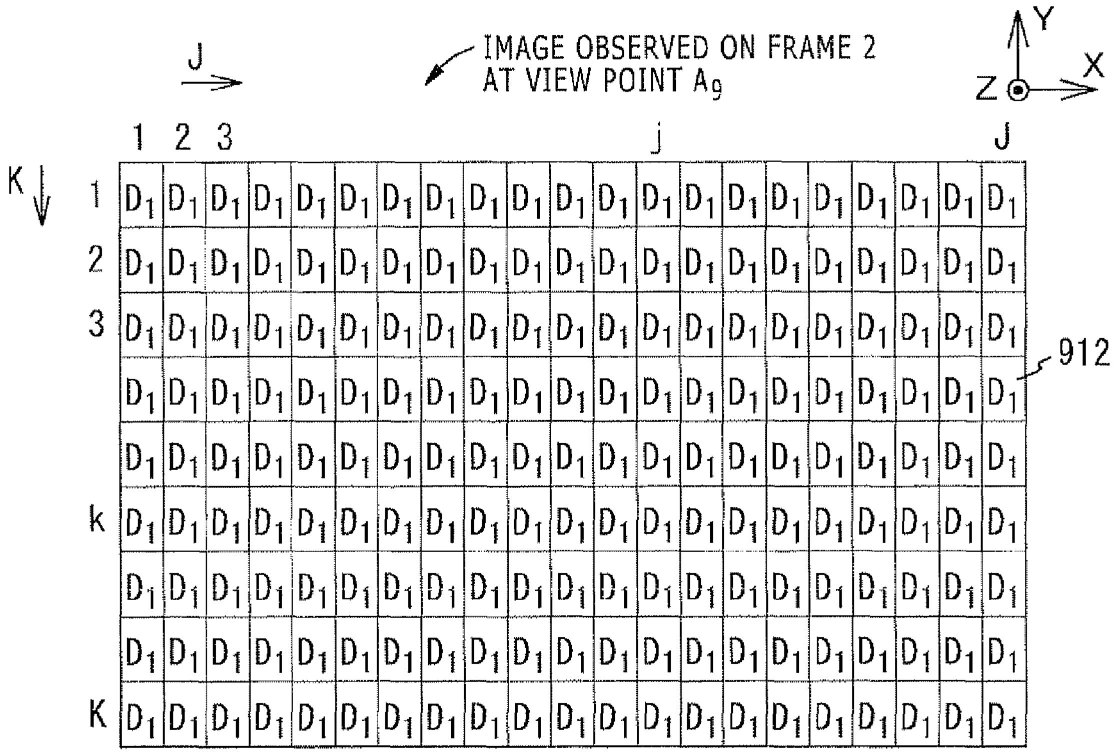

FIG.35A

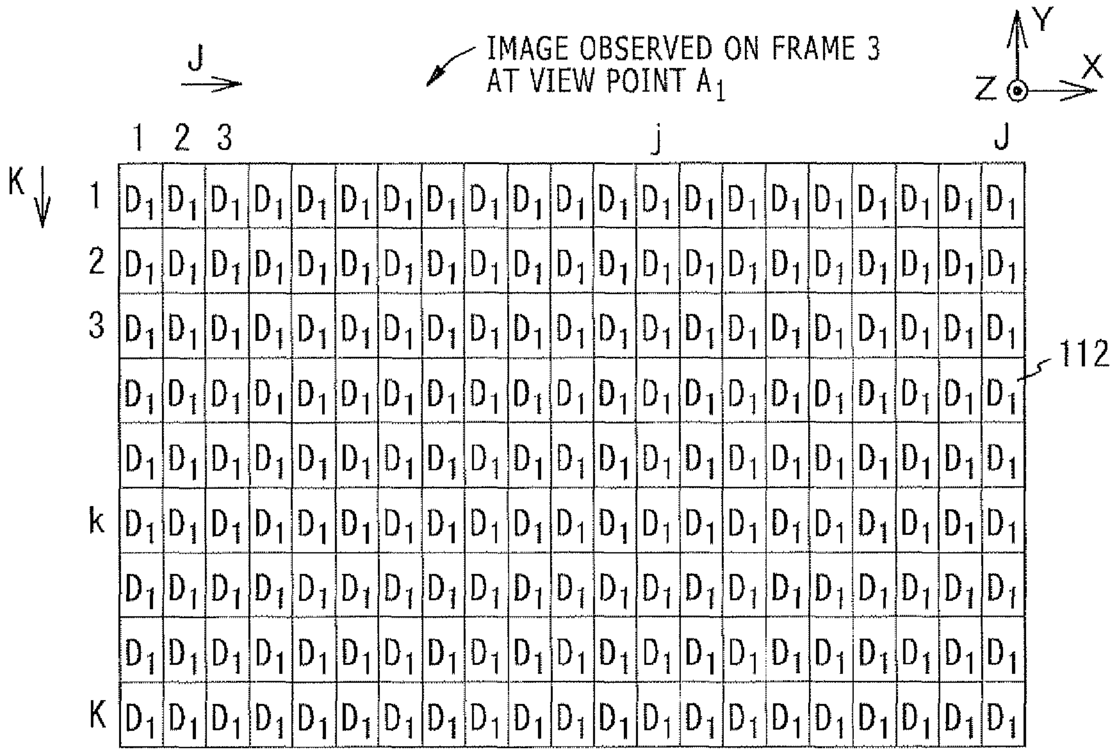


FIG.35B

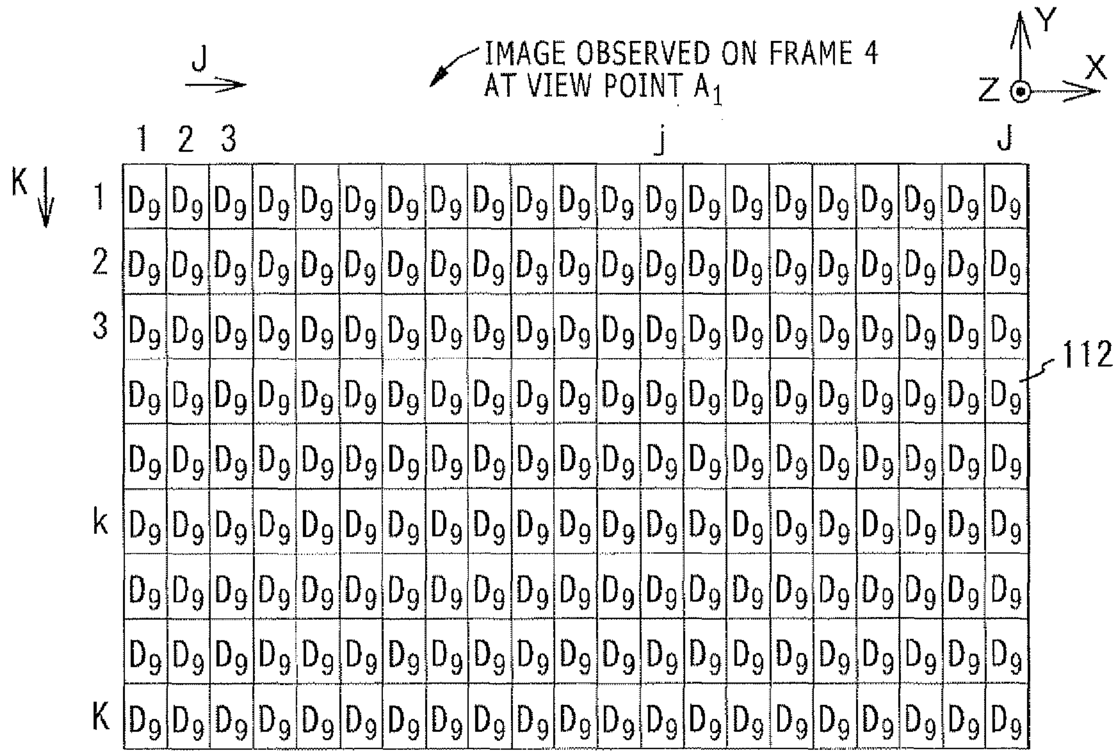

FIG. 36

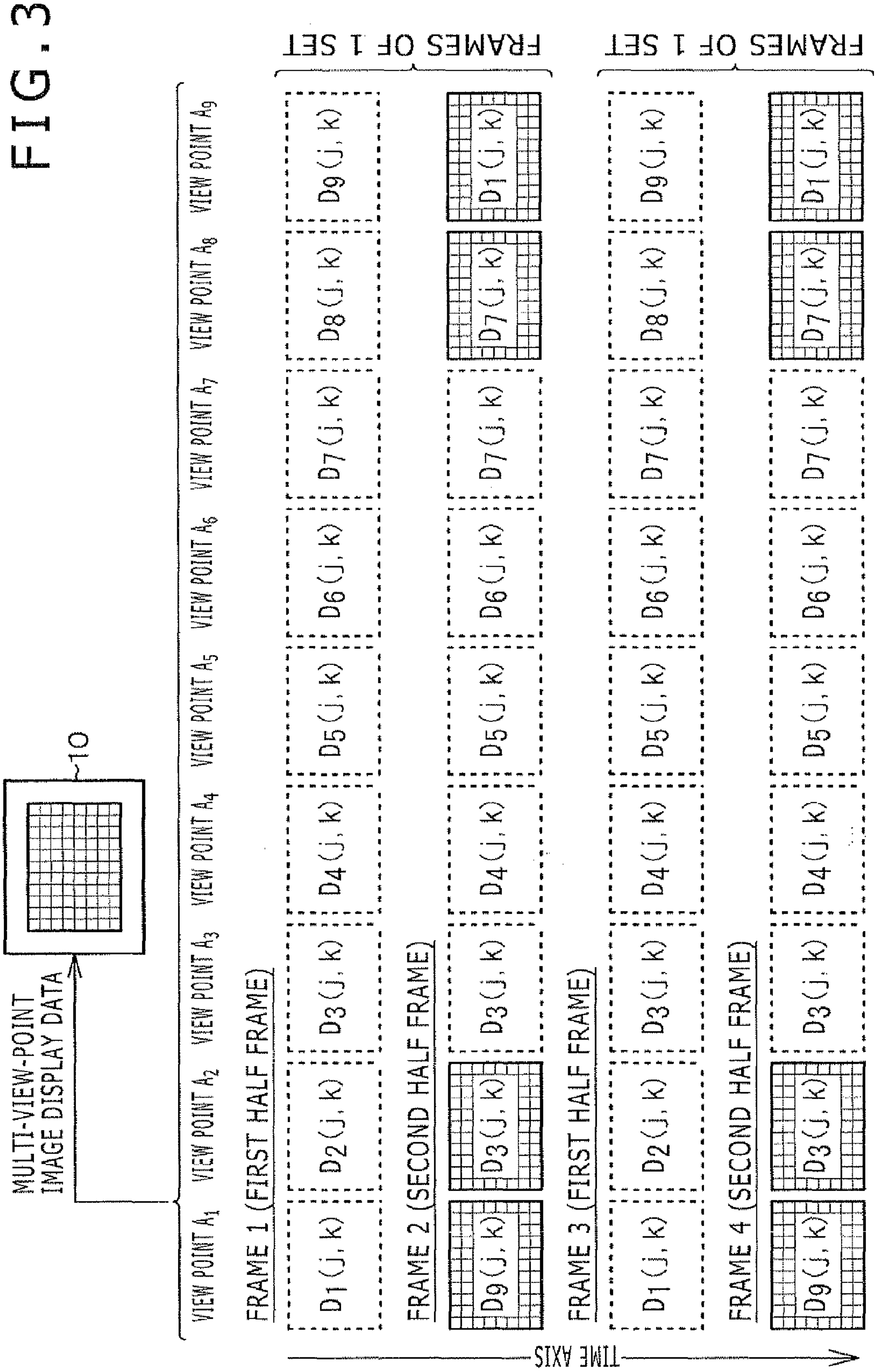

MULTI-VIEW-POINT IMAGE DISPLAY DATA
10
VIEW POINT $A_1$
VIEW POINT $A_2$
VIEW POINT $A_3$
VIEW POINT $A_4$
VIEW POINT $A_5$
VIEW POINT $A_6$
VIEW POINT $A_7$
VIEW POINT $A_8$
VIEW POINT $A_9$
FRAME 1 (FIRST HALF FRAME)
$D_1(j, k)$ $D_2(j, k)$ $D_3(j, k)$ $D_4(j, k)$ $D_5(j, k)$ $D_6(j, k)$ $D_7(j, k)$ $D_8(j, k)$ $D_9(j, k)$
FRAME 2 (SECOND HALF FRAME)
$D_9(j, k)$ $D_3(j, k)$ $D_3(j, k)$ $D_4(j, k)$ $D_5(j, k)$ $D_6(j, k)$ $D_7(j, k)$ $D_7(j, k)$ $D_1(j, k)$
FRAME 3 (FIRST HALF FRAME)
$D_1(j, k)$ $D_2(j, k)$ $D_3(j, k)$ $D_4(j, k)$ $D_5(j, k)$ $D_6(j, k)$ $D_7(j, k)$ $D_8(j, k)$ $D_9(j, k)$
FRAME 4 (SECOND HALF FRAME)
$D_9(j, k)$ $D_3(j, k)$ $D_3(j, k)$ $D_4(j, k)$ $D_5(j, k)$ $D_6(j, k)$ $D_7(j, k)$ $D_7(j, k)$ $D_1(j, k)$
FRAMES OF 1 SET
FRAMES OF 1 SET
TIME AXIS

FIG. 37

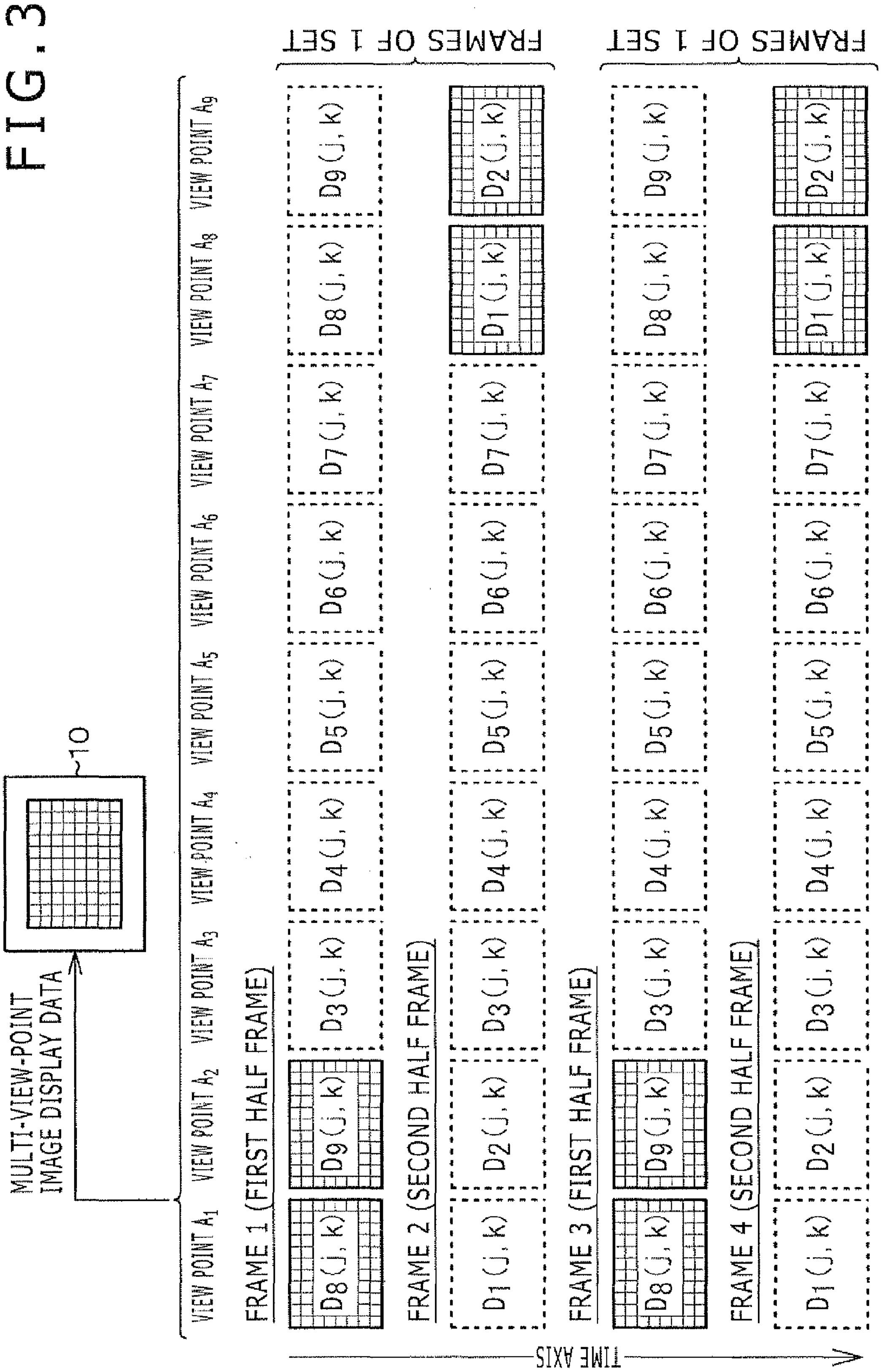
MULTI-VIEW-POINT IMAGE DISPLAY DATA
10
VIEW POINT $A_1$
VIEW POINT $A_2$
VIEW POINT $A_3$
VIEW POINT $A_4$
VIEW POINT $A_5$
VIEW POINT $A_6$
VIEW POINT $A_7$
VIEW POINT $A_8$
VIEW POINT $A_9$
FRAME 1 (FIRST HALF FRAME)
D8(j, k)
D9(j, k)
D3(j, k)
D4(j, k)
D5(j, k)
D6(j, k)
D7(j, k)
D8(j, k)
D9(j, k)
FRAME 2 (SECOND HALF FRAME)
D1(j, k)
D2(j, k)
D3(j, k)
D4(j, k)
D5(j, k)
D6(j, k)
D7(j, k)
D1(j, k)
D2(j, k)
FRAME 3 (FIRST HALF FRAME)
D8(j, k)
D9(j, k)
D3(j, k)
D4(j, k)
D5(j, k)
D6(j, k)
D7(j, k)
D8(j, k)
D9(j, k)
FRAME 4 (SECOND HALF FRAME)
D1(j, k)
D2(j, k)
D3(j, k)
D4(j, k)
D5(j, k)
D6(j, k)
D7(j, k)
D1(j, k)
D2(j, k)
FRAMES OF 1 SET
FRAMES OF 1 SET
TIME AXIS

FIG. 38

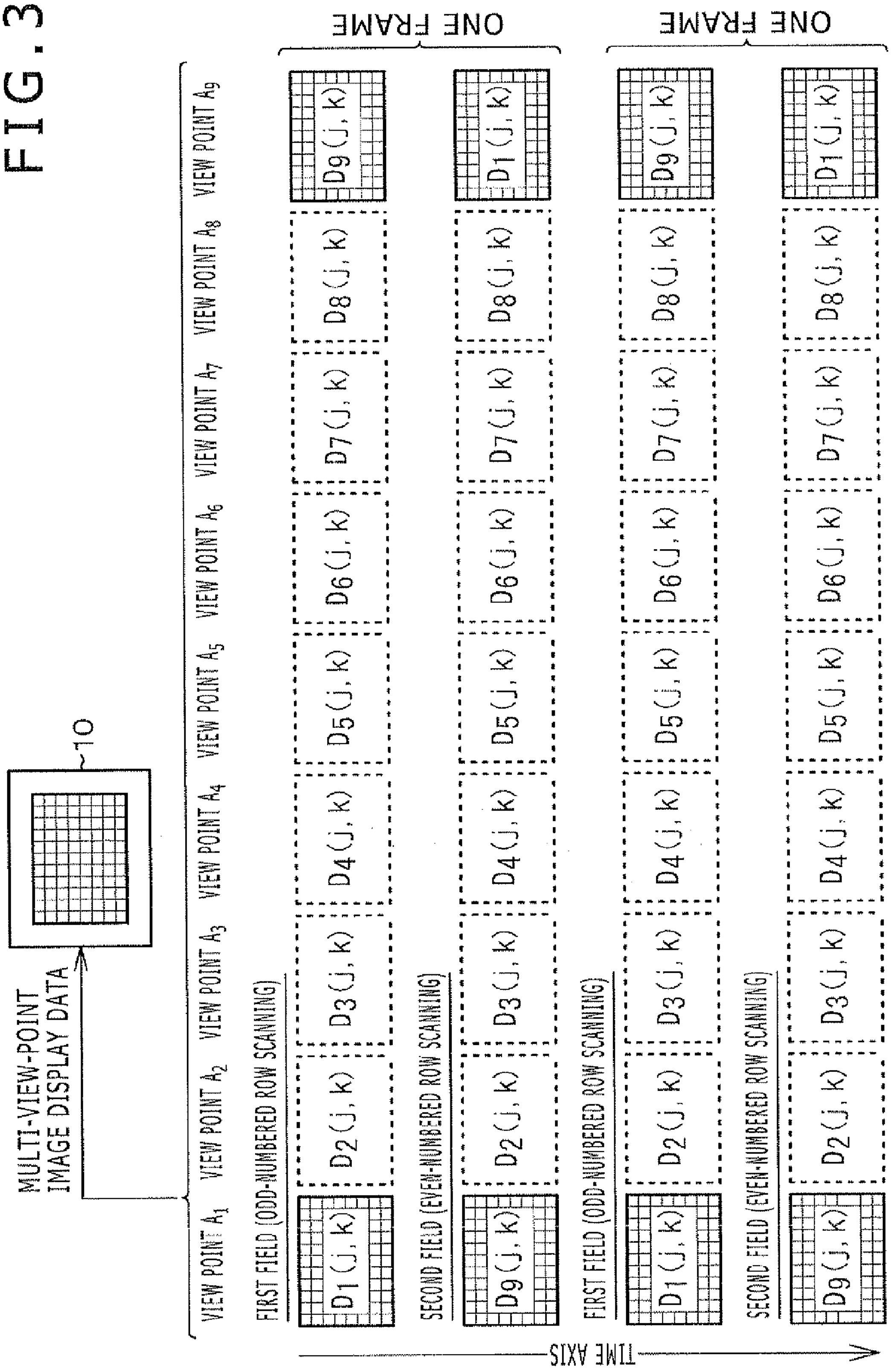
MULTI-VIEW-POINT IMAGE DISPLAY DATA
10
VIEW POINT $A_1$
VIEW POINT $A_2$
VIEW POINT $A_3$
VIEW POINT $A_4$
VIEW POINT $A_5$
VIEW POINT $A_6$
VIEW POINT $A_7$
VIEW POINT $A_8$
VIEW POINT $A_9$
FIRST FIELD (ODD-NUMBERED ROW SCANNING)
SECOND FIELD (EVEN-NUMBERED ROW SCANNING)
FIRST FIELD (ODD-NUMBERED ROW SCANNING)
SECOND FIELD (EVEN-NUMBERED ROW SCANNING)
$D_1(j, k)$
$D_2(j, k)$
$D_3(j, k)$
$D_4(j, k)$
$D_5(j, k)$
$D_6(j, k)$
$D_7(j, k)$
$D_8(j, k)$
$D_9(j, k)$
ONE FRAME
ONE FRAME
TIME AXIS

FIG.39

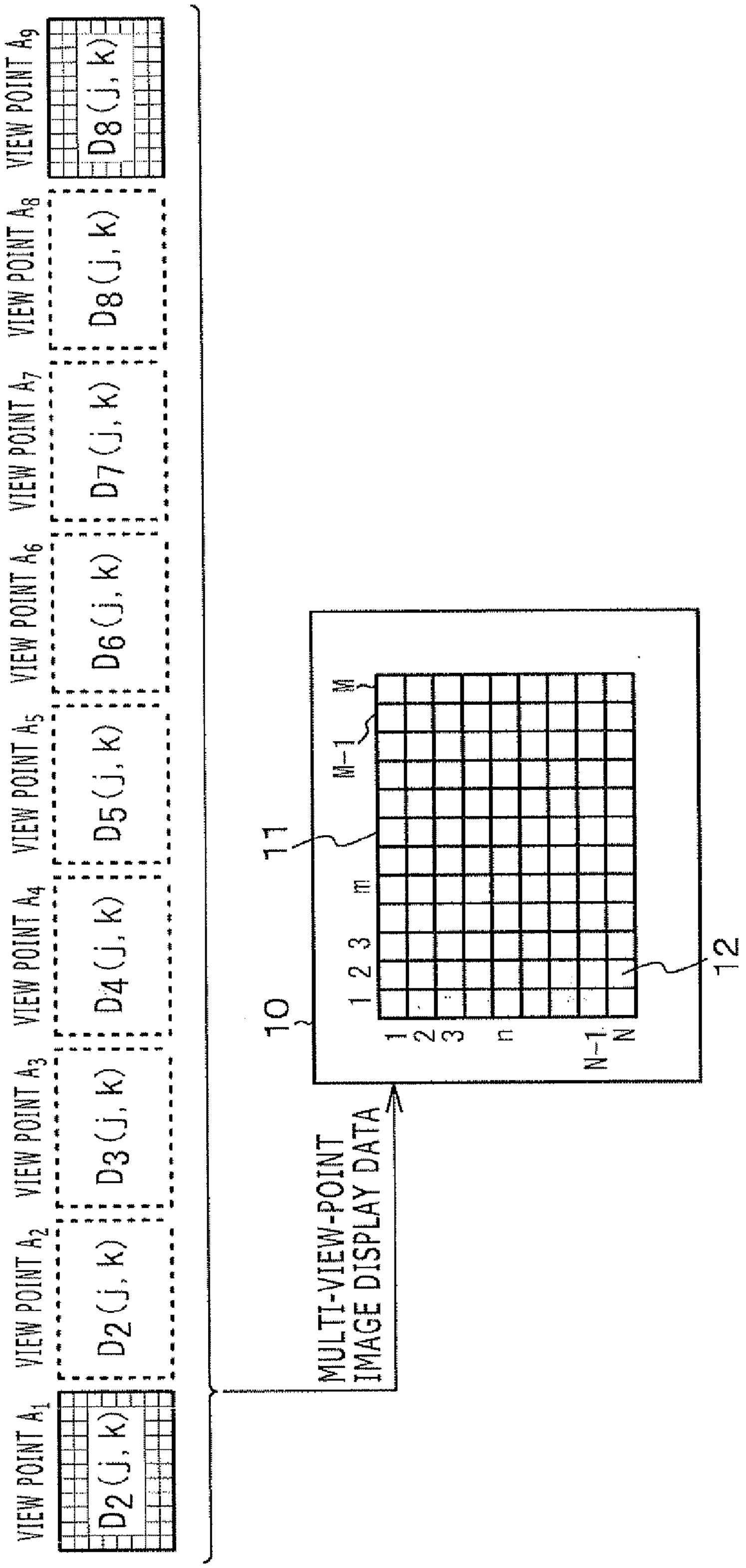
VIEW POINT A1
D2(j, k)
VIEW POINT A2
D2(j, k)
VIEW POINT A3
D3(j, k)
VIEW POINT A4
D4(j, k)
VIEW POINT A5
D5(j, k)
VIEW POINT A6
D6(j, k)
VIEW POINT A7
D7(j, k)
VIEW POINT A8
D8(j, k)
VIEW POINT A9
D8(j, k)
MULTI-VIEW-POINT IMAGE DISPLAY DATA
10
11
12
1 2 3 m M-1 M
1 2 3 n N-1 N

FIG.40A

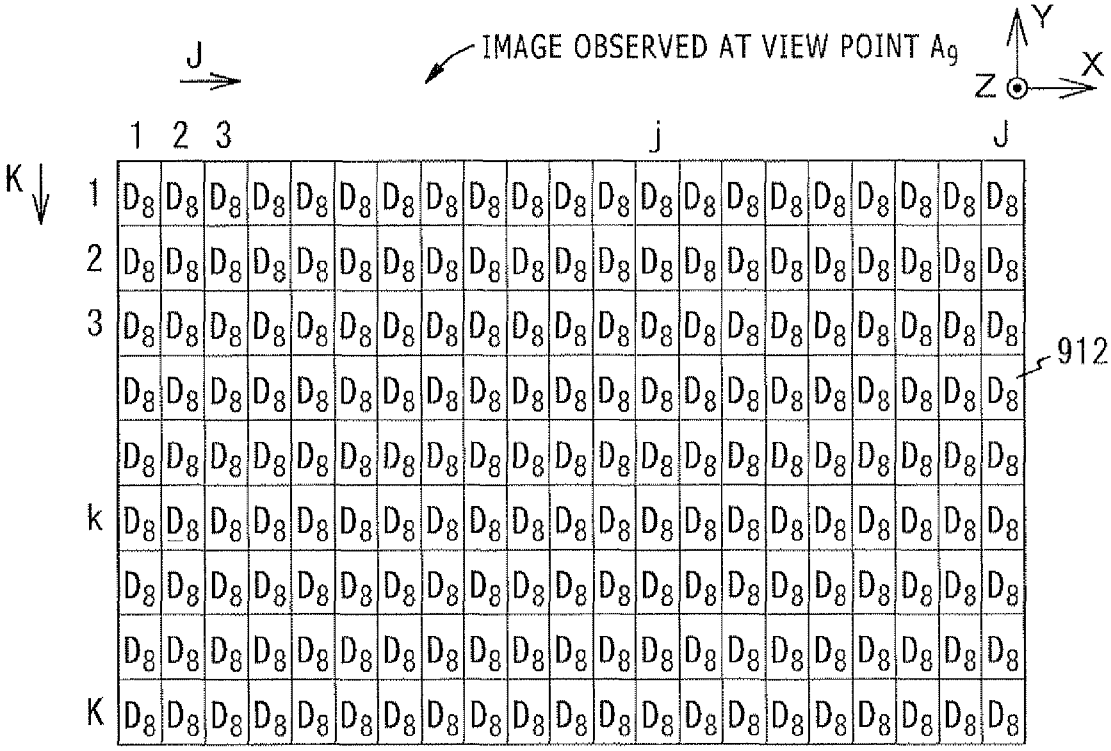


FIG.40B

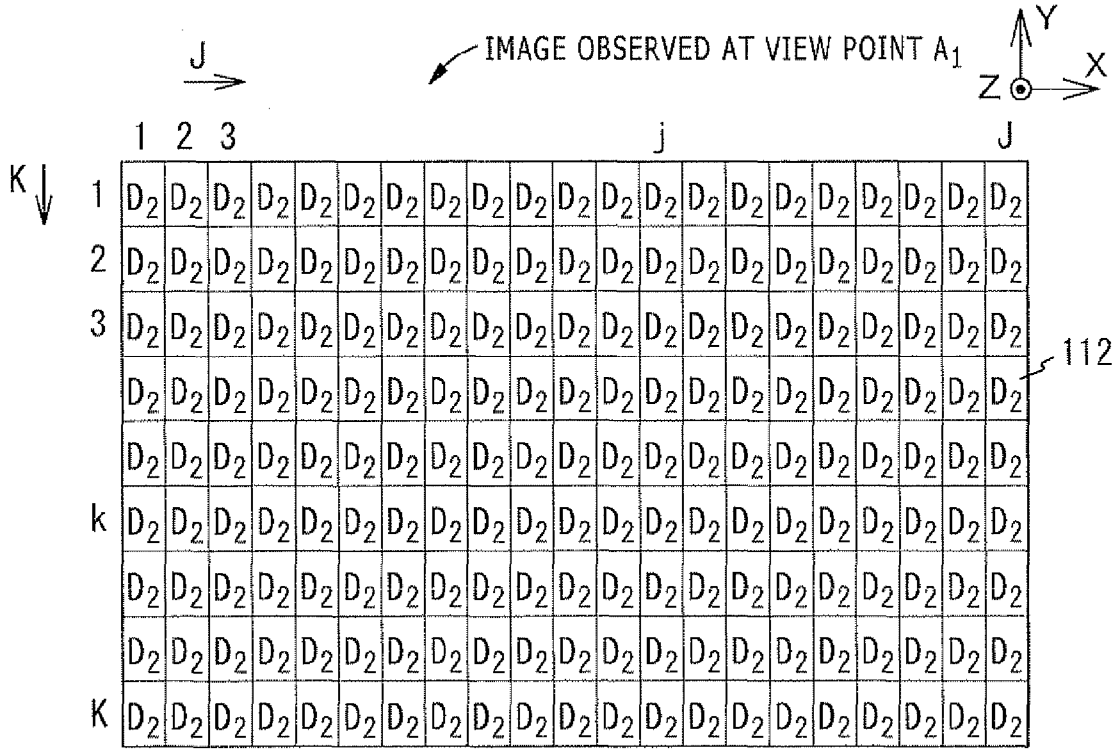

FIG. 41

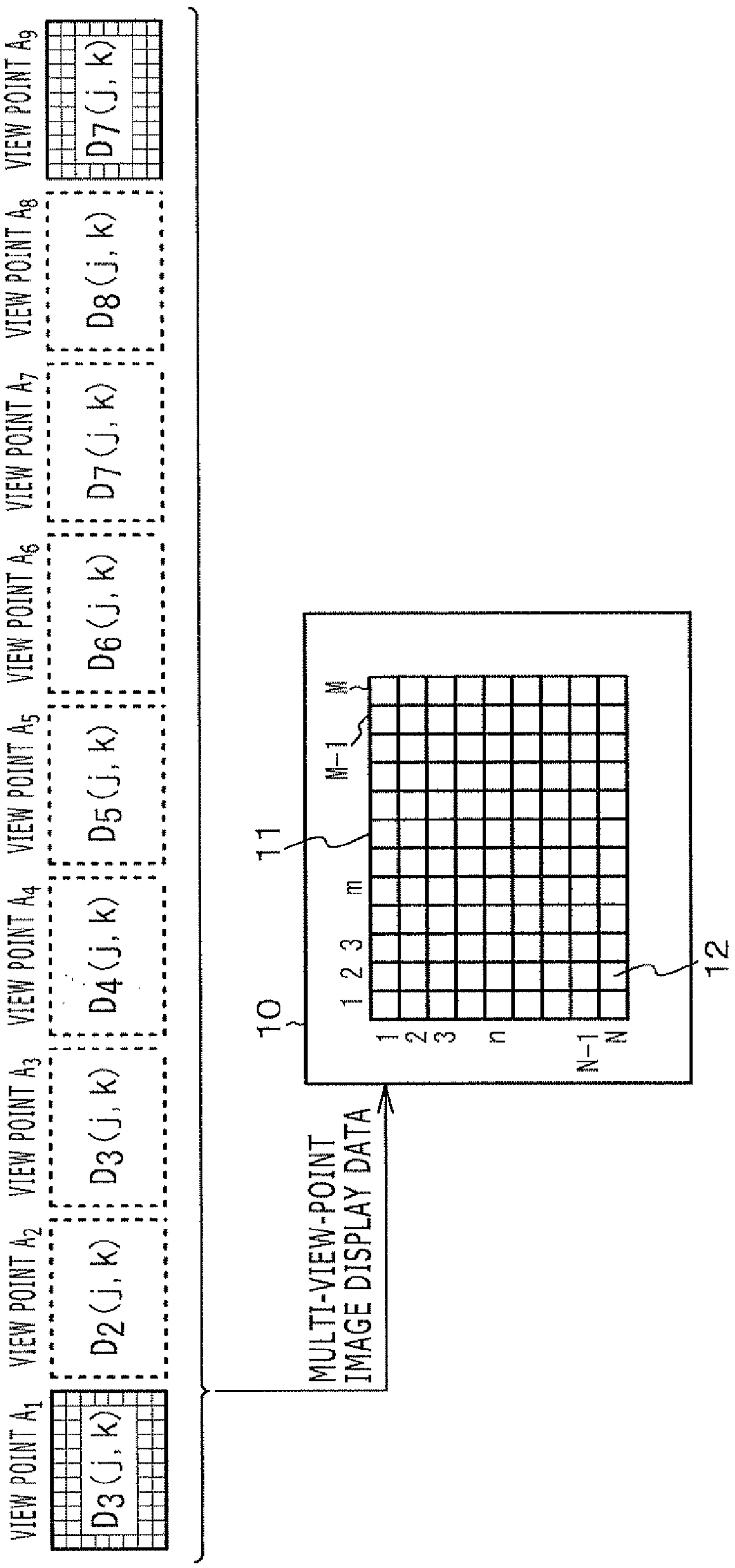
VIEW POINT $A_1$
$D_3(j, k)$
VIEW POINT $A_2$
$D_2(j, k)$
VIEW POINT $A_3$
$D_3(j, k)$
VIEW POINT $A_4$
$D_4(j, k)$
VIEW POINT $A_5$
$D_5(j, k)$
VIEW POINT $A_6$
$D_6(j, k)$
VIEW POINT $A_7$
$D_7(j, k)$
VIEW POINT $A_8$
$D_8(j, k)$
VIEW POINT $A_9$
$D_7(j, k)$
MULTI-VIEW-POINT IMAGE DISPLAY DATA
10
11
12
1 2 3 m M-1 M
1 2 3 n N-1 N

# FIG.42A

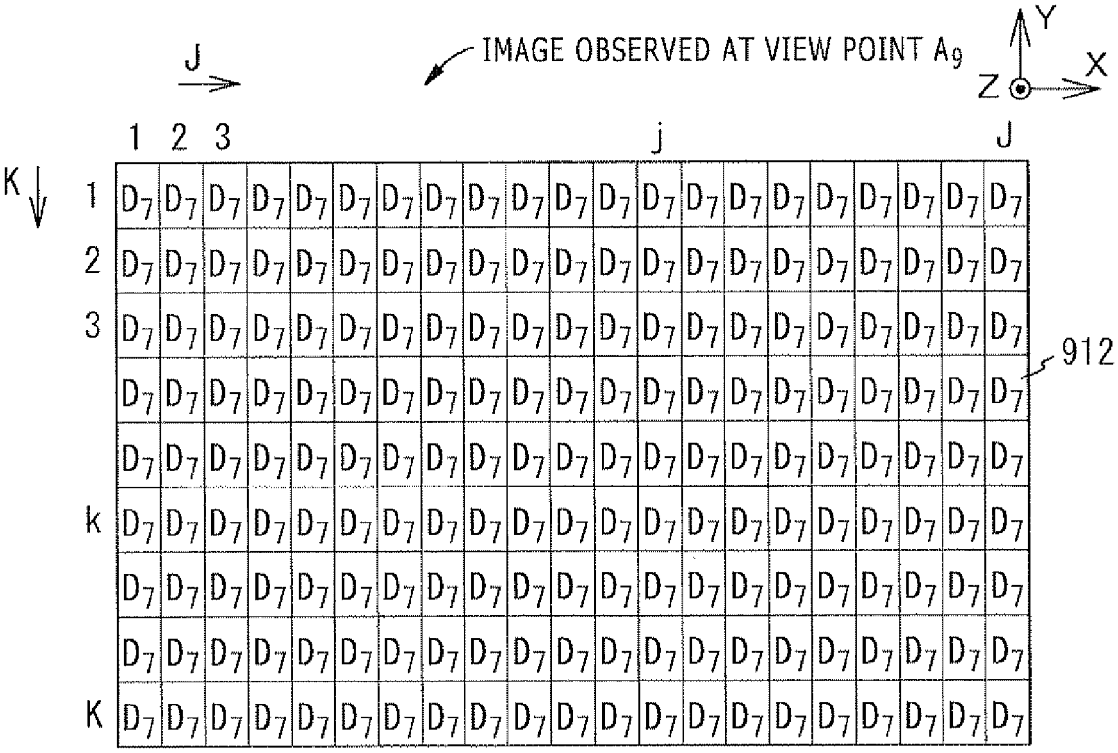


# FIG.42B

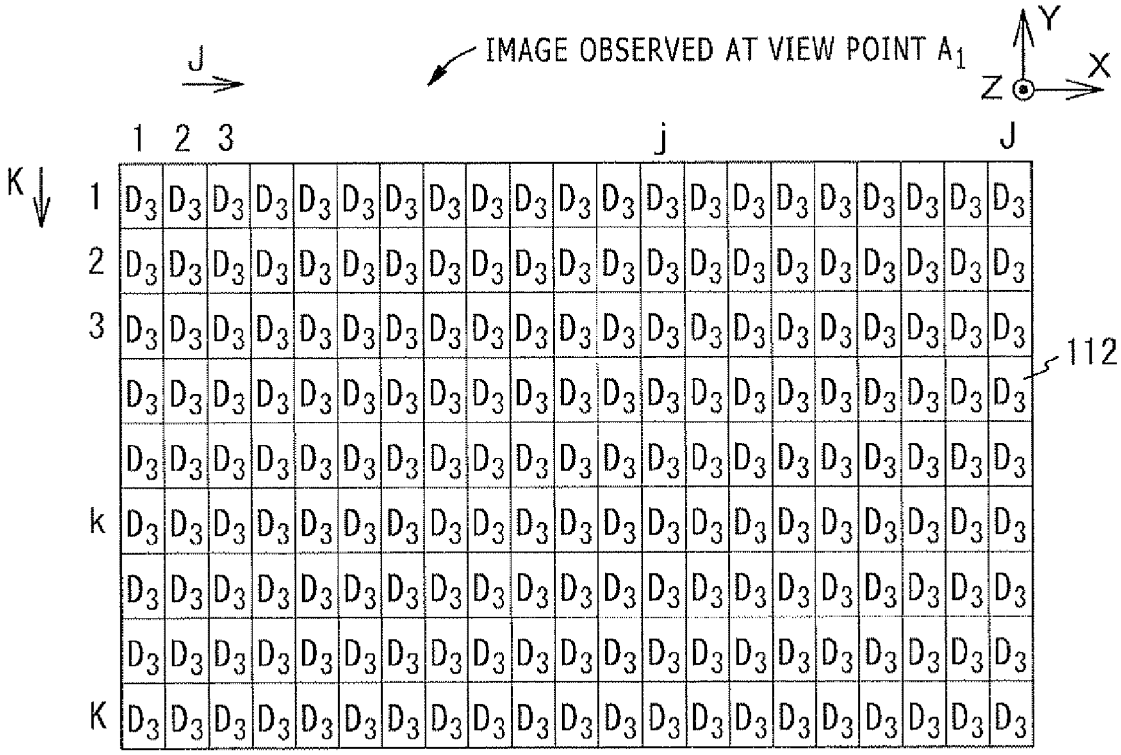

# FIG.43A

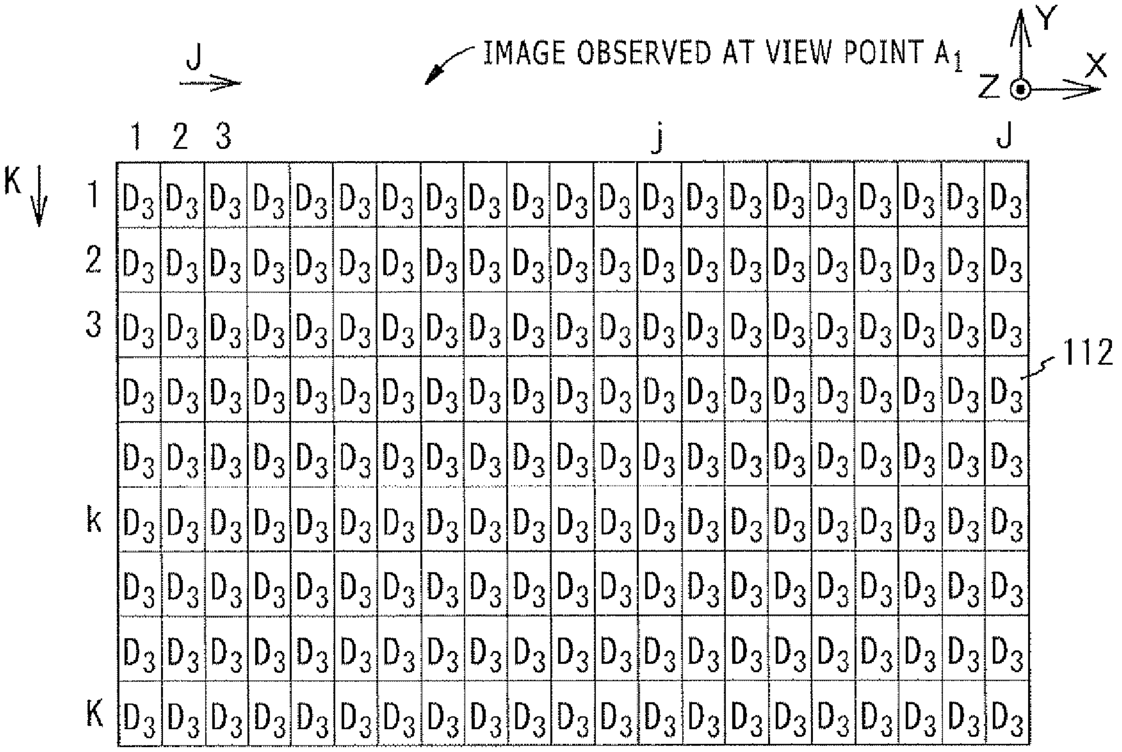


# FIG.43B

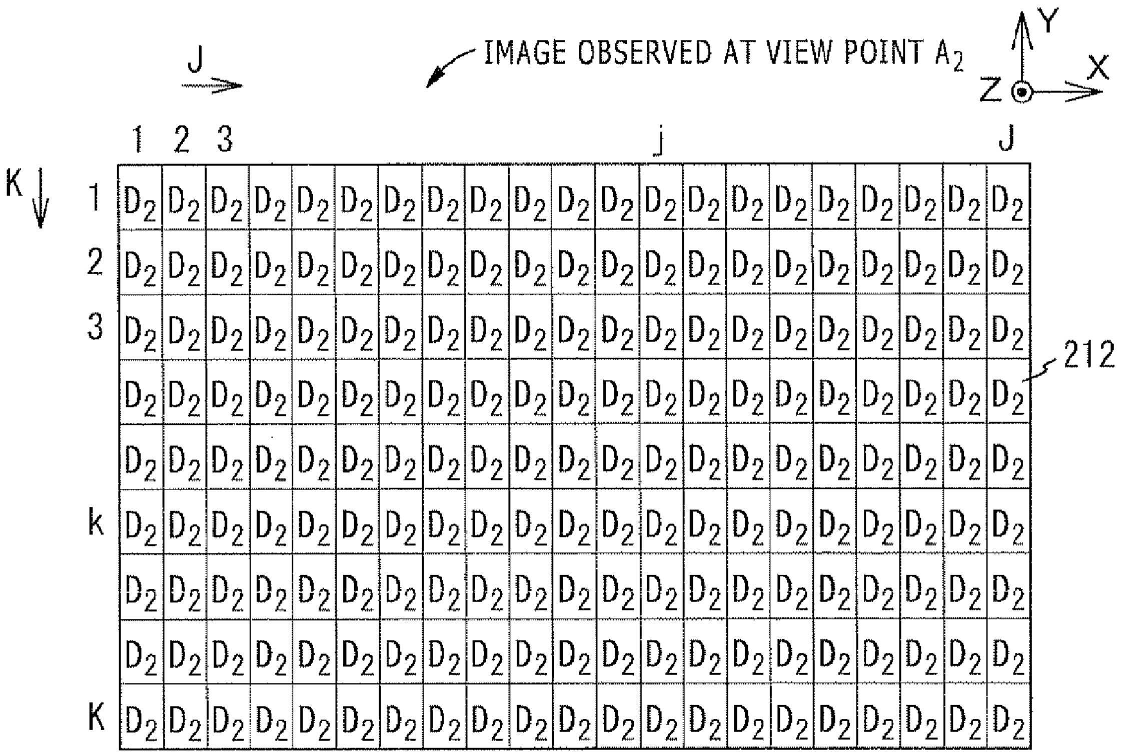

FIG.44A

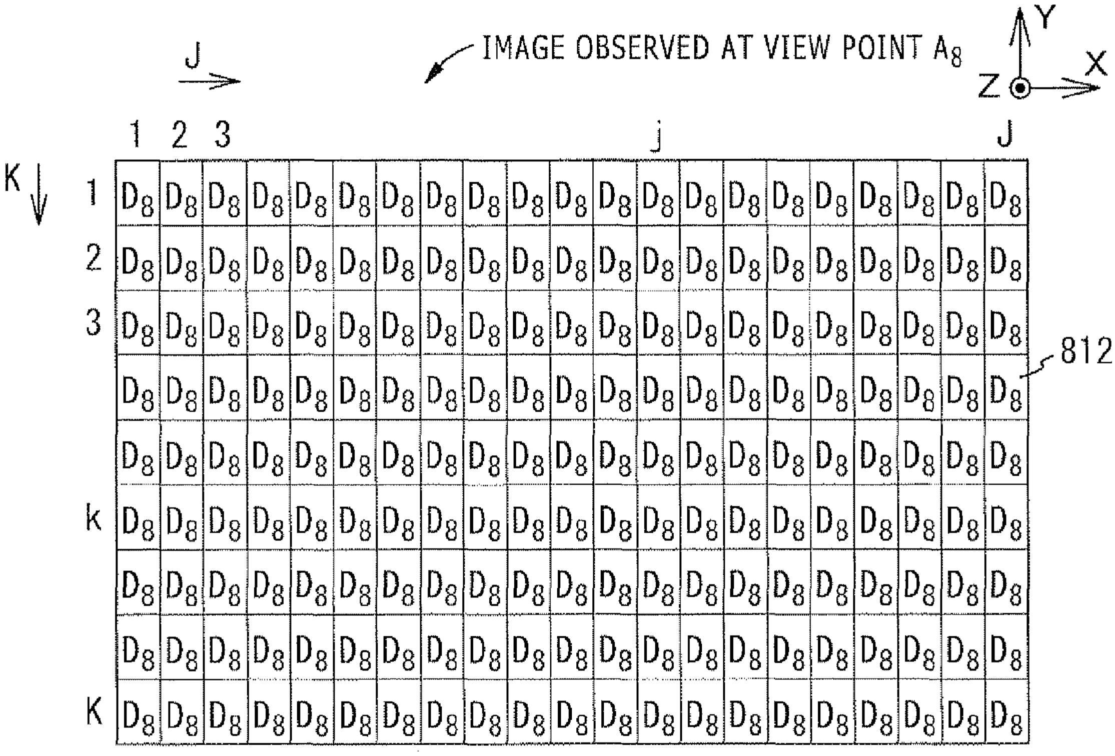


FIG.44B

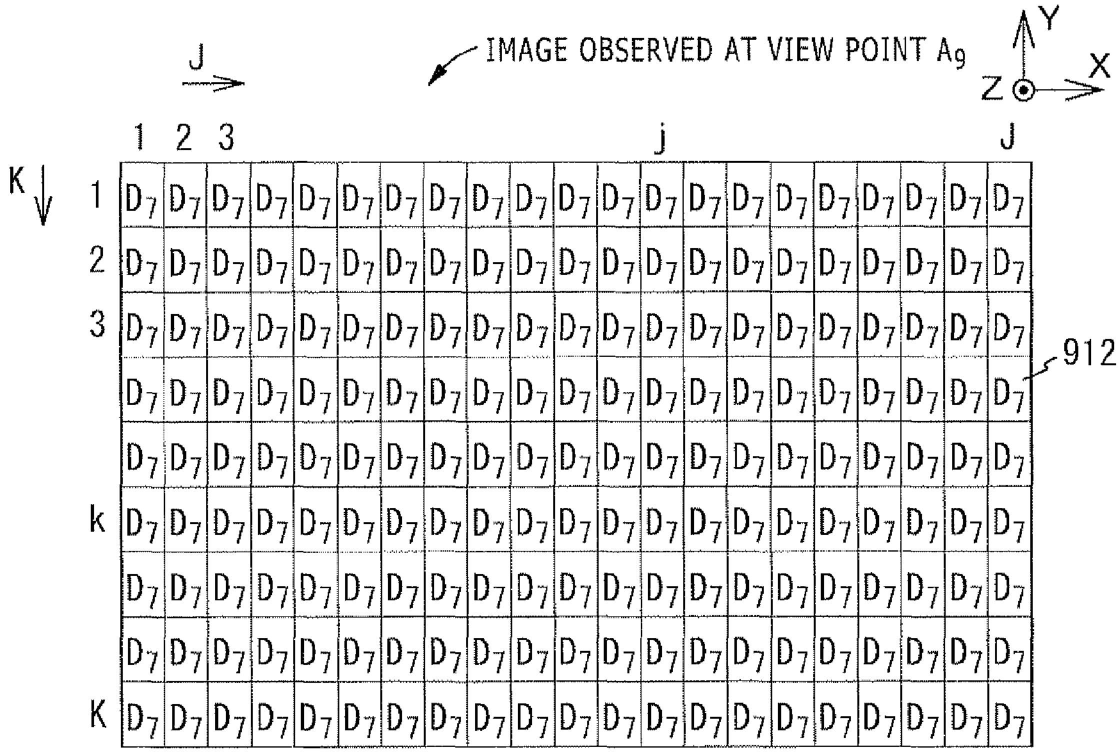

FIG. 45

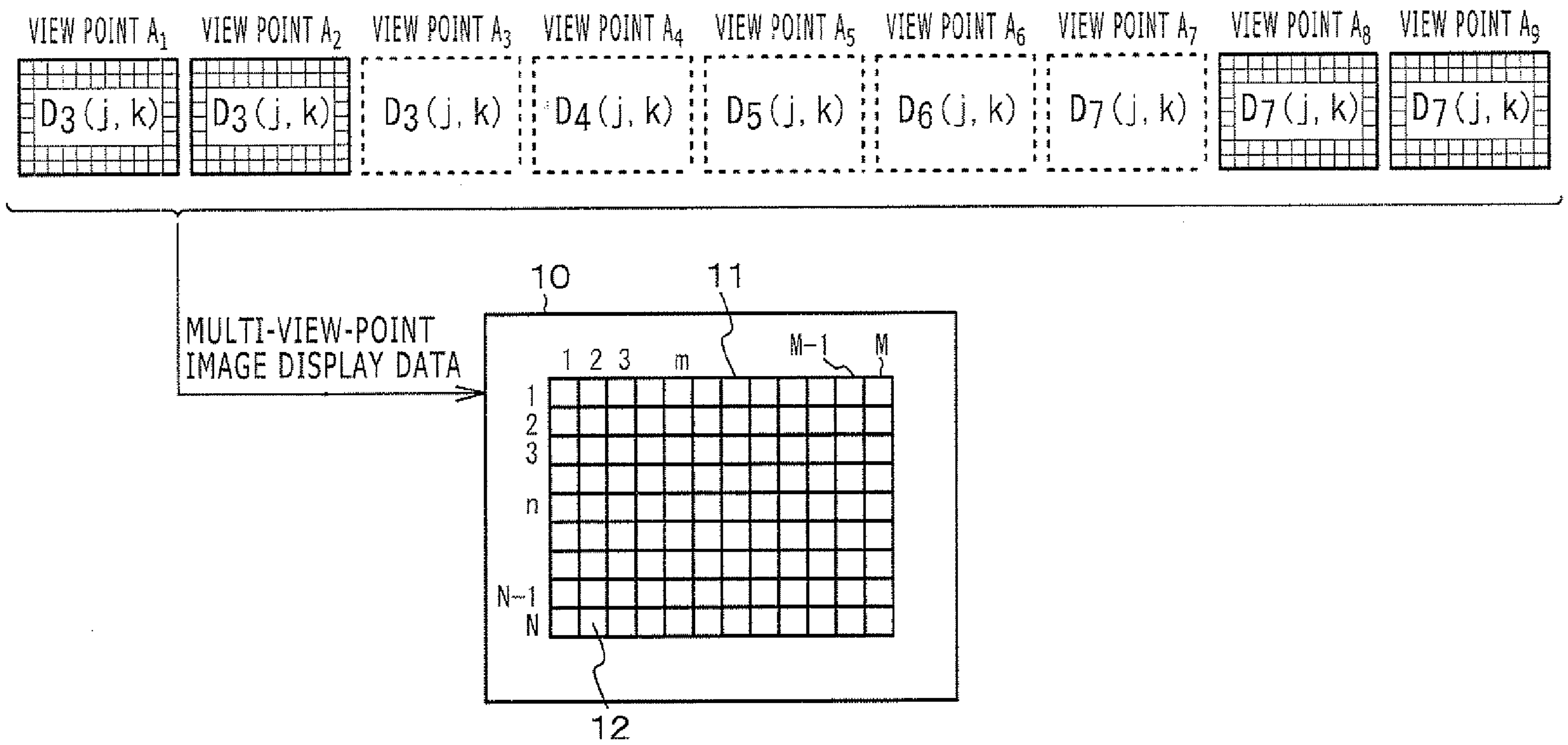
VIEW POINT $A_1$
D3(j, k)
VIEW POINT $A_2$
D3(j, k)
VIEW POINT $A_3$
D3(j, k)
VIEW POINT $A_4$
D4(j, k)
VIEW POINT $A_5$
D5(j, k)
VIEW POINT $A_6$
D6(j, k)
VIEW POINT $A_7$
D7(j, k)
VIEW POINT $A_8$
D7(j, k)
VIEW POINT $A_9$
D7(j, k)
MULTI-VIEW-POINT IMAGE DISPLAY DATA
10
11
12
1 2 3 m M-1 M
1 2 3 n N-1 N

FIG.46

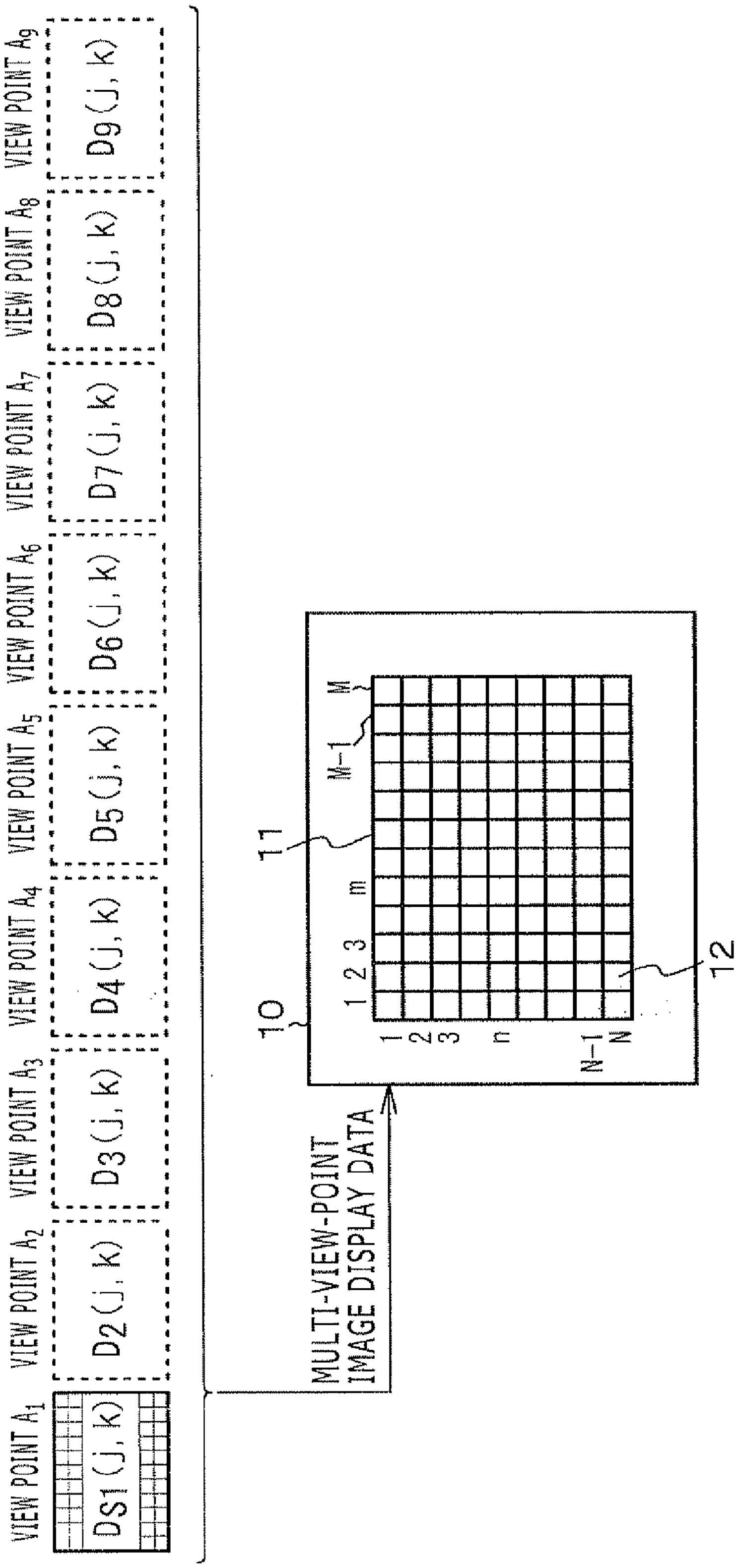
VIEW POINT $A_1$
$Ds_1(j, k)$
VIEW POINT $A_2$
$D_2(j, k)$
VIEW POINT $A_3$
$D_3(j, k)$
VIEW POINT $A_4$
$D_4(j, k)$
VIEW POINT $A_5$
$D_5(j, k)$
VIEW POINT $A_6$
$D_6(j, k)$
VIEW POINT $A_7$
$D_7(j, k)$
VIEW POINT $A_8$
$D_8(j, k)$
VIEW POINT $A_9$
$D_9(j, k)$
MULTI-VIEW-POINT IMAGE DISPLAY DATA
10
11
12
1 2 3 m M-1 M
1 2 3 n N-1 N

# FIG.47A

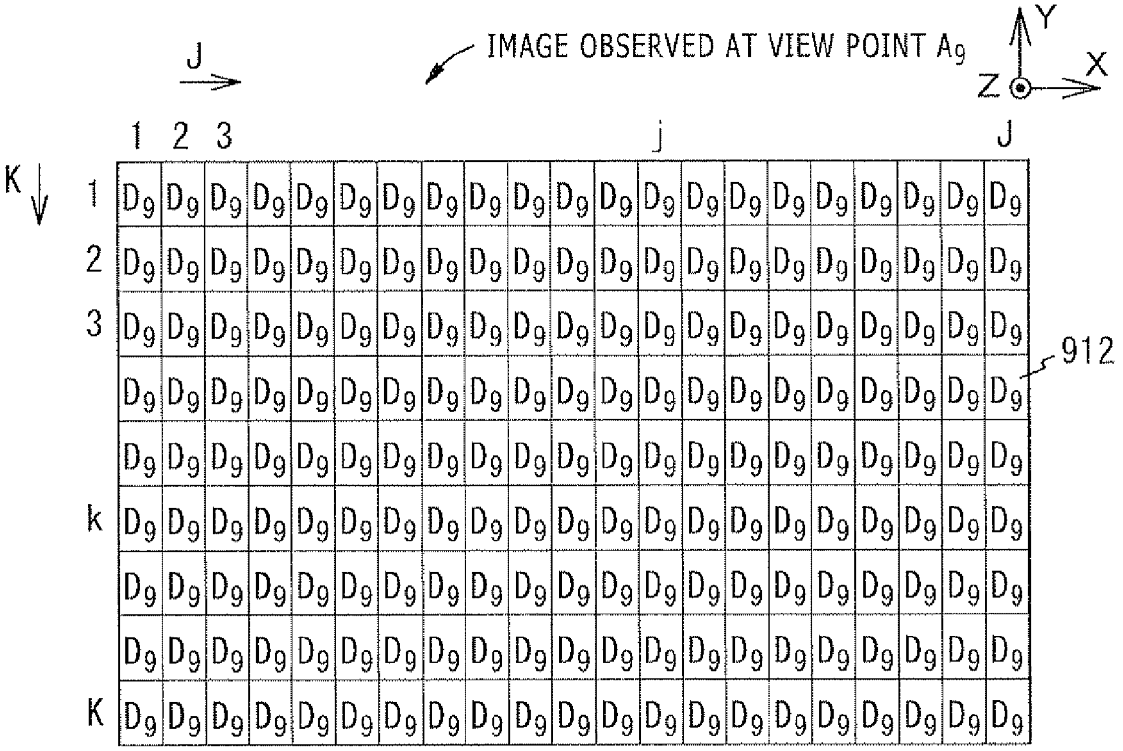


# FIG.47B

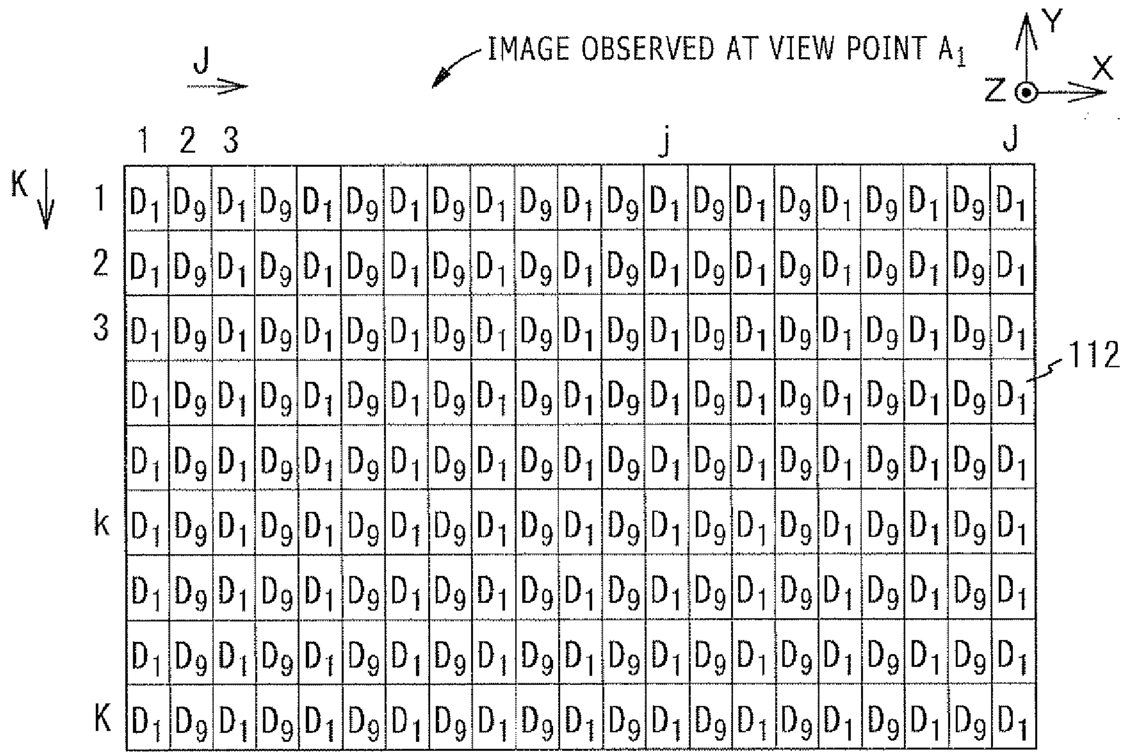

FIG. 48

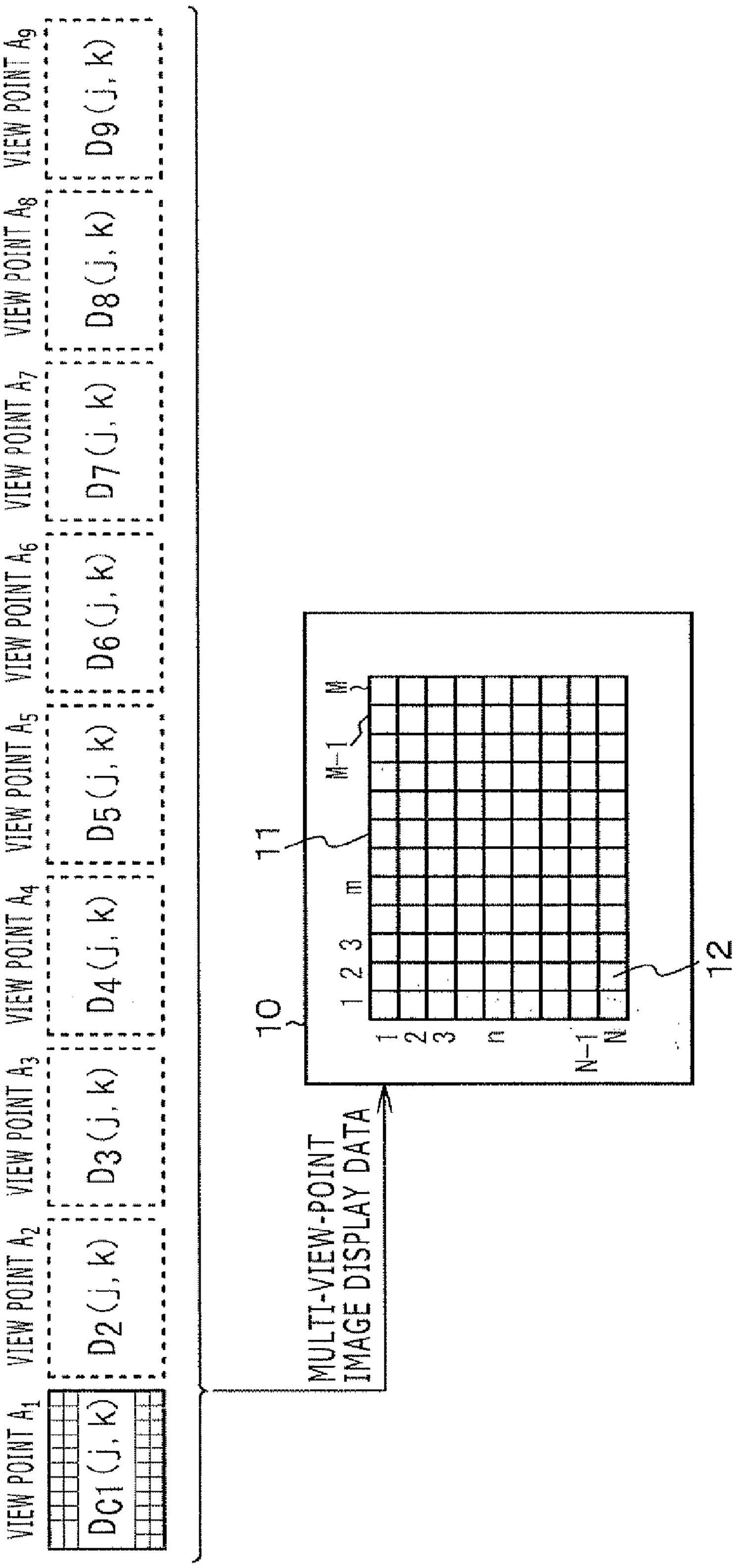
VIEW POINT $A_1$
Dc1(j, k)
VIEW POINT $A_2$
D2(j, k)
VIEW POINT $A_3$
D3(j, k)
VIEW POINT $A_4$
D4(j, k)
VIEW POINT $A_5$
D5(j, k)
VIEW POINT $A_6$
D6(j, k)
VIEW POINT $A_7$
D7(j, k)
VIEW POINT $A_8$
D8(j, k)
VIEW POINT $A_9$
D9(j, k)
MULTI-VIEW-POINT IMAGE DISPLAY DATA
10
11
12
1 2 3 m M−1 M
1 2 3 n N−1 N

# FIG.49A

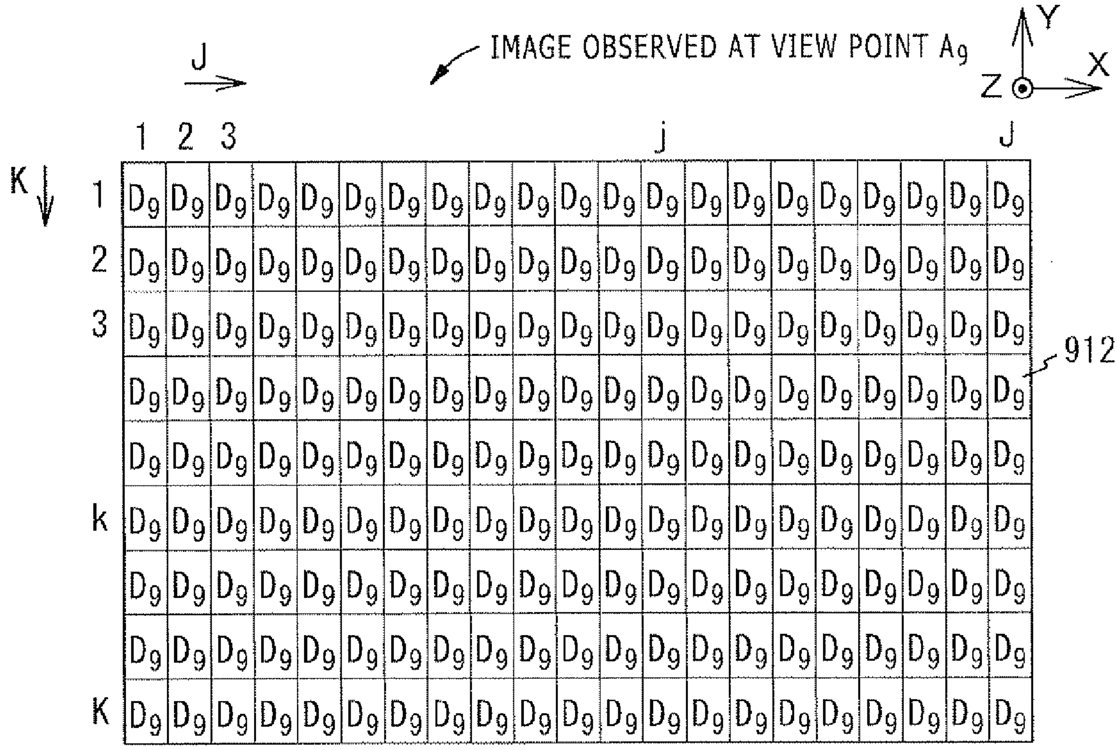


# FIG.49B

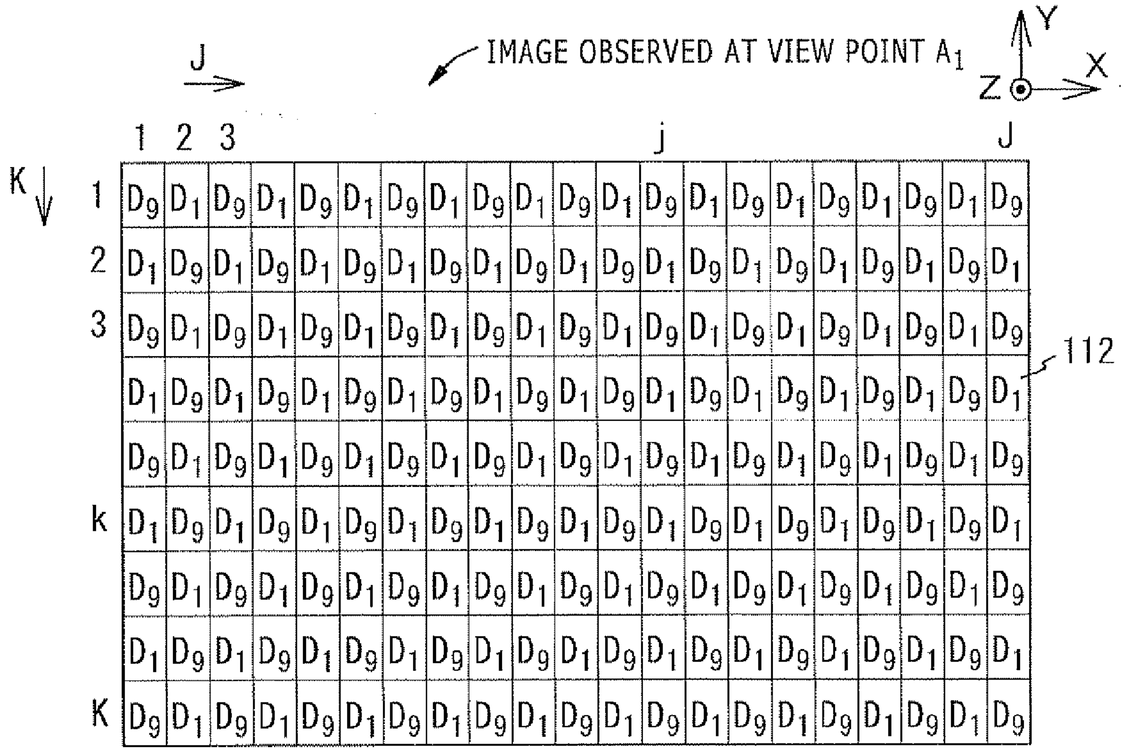

FIG.50

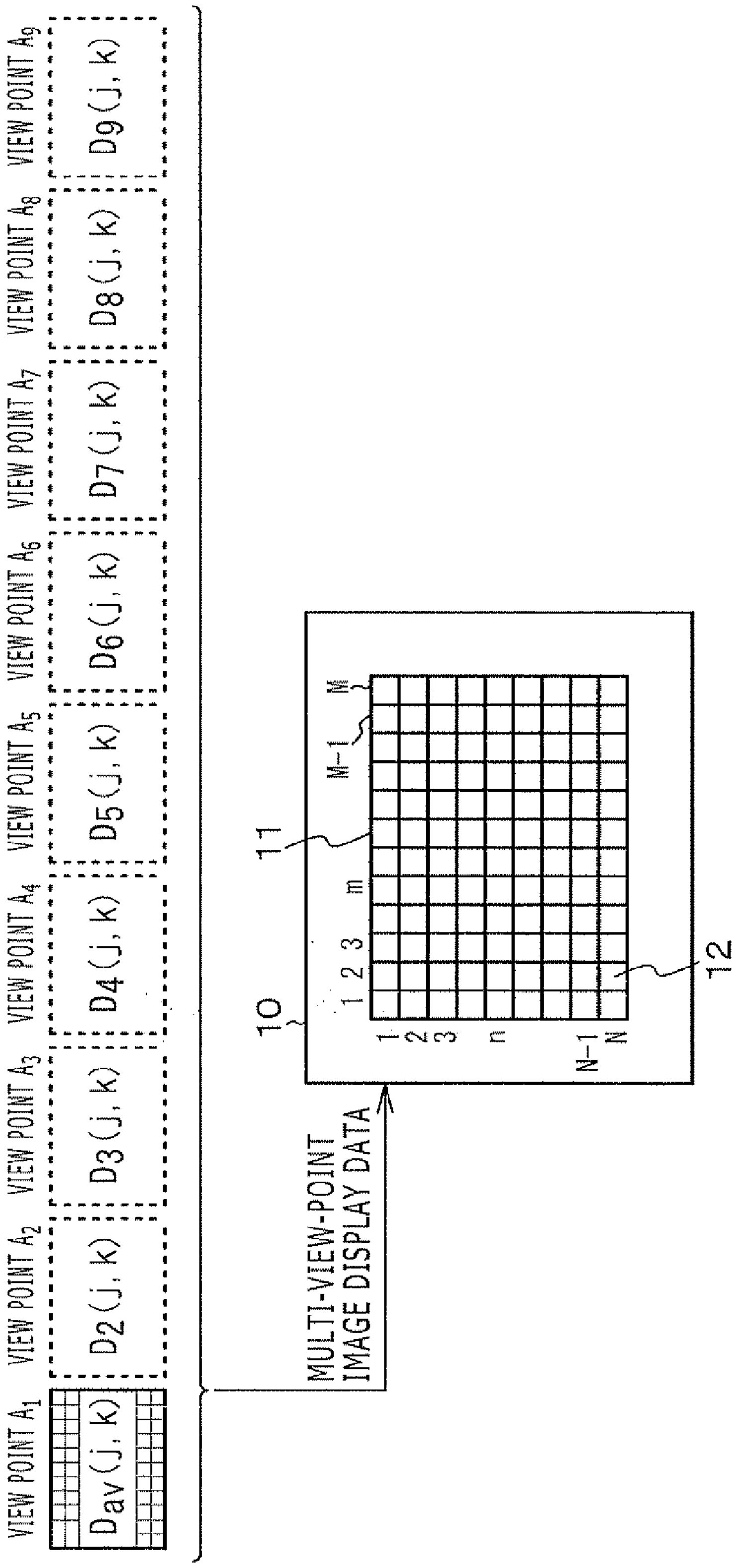
VIEW POINT $A_1$
$D_{av}(j, k)$
VIEW POINT $A_2$
$D_2(j, k)$
VIEW POINT $A_3$
$D_3(j, k)$
VIEW POINT $A_4$
$D_4(j, k)$
VIEW POINT $A_5$
$D_5(j, k)$
VIEW POINT $A_6$
$D_6(j, k)$
VIEW POINT $A_7$
$D_7(j, k)$
VIEW POINT $A_8$
$D_8(j, k)$
VIEW POINT $A_9$
$D_9(j, k)$
MULTI-VIEW-POINT IMAGE DISPLAY DATA
10
11
12
1 2 3 m M-1 M
1 2 3 n N-1 N

# FIG.51A

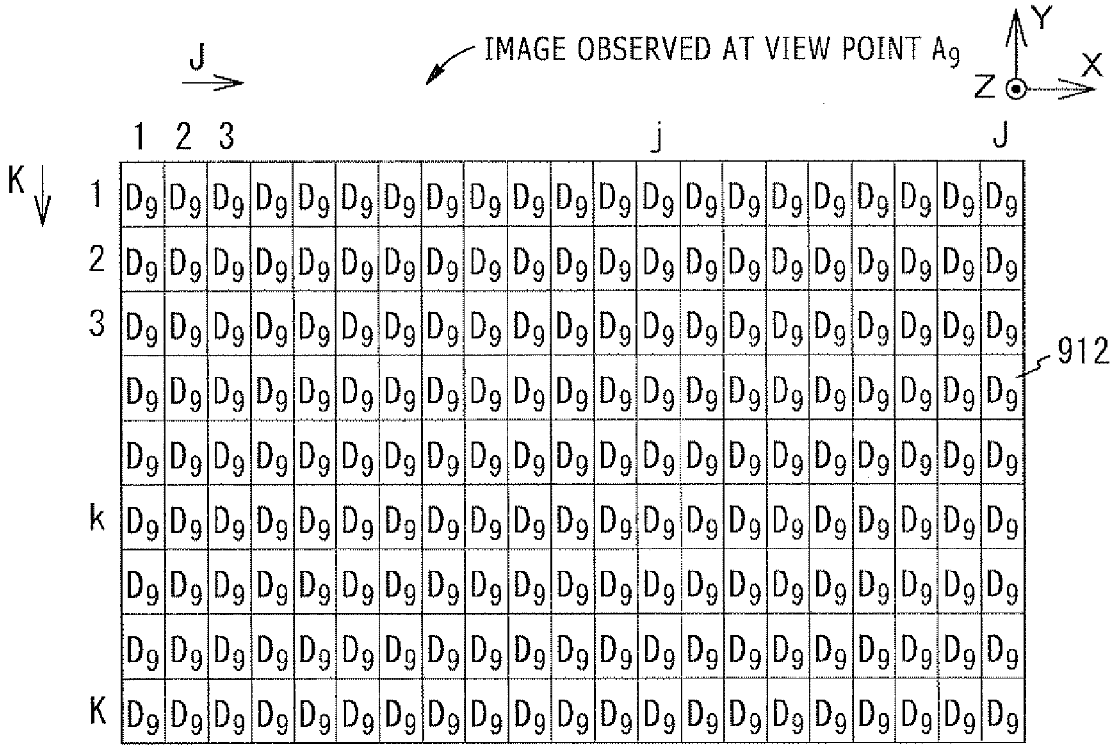


# FIG.51B

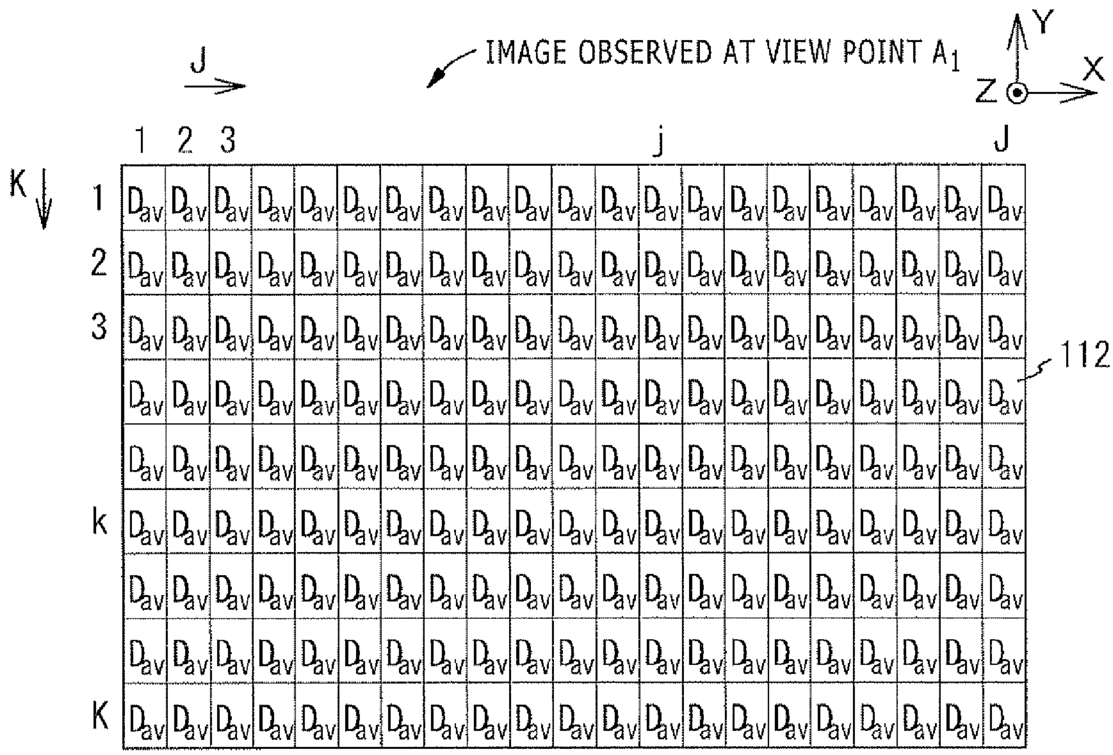

FIG. 52

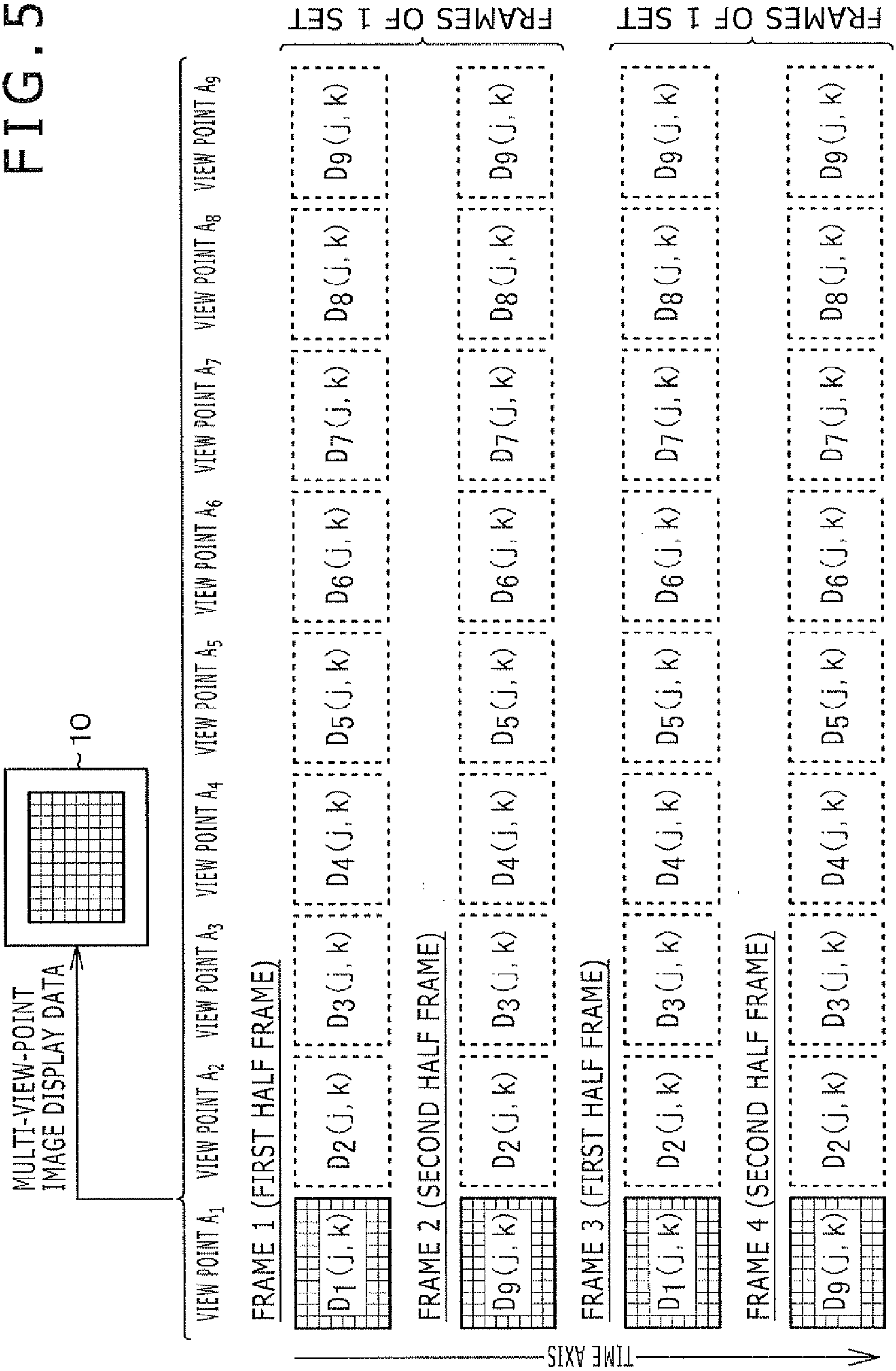

MULTI-VIEW-POINT IMAGE DISPLAY DATA
10
VIEW POINT A1
VIEW POINT A2
VIEW POINT A3
VIEW POINT A4
VIEW POINT A5
VIEW POINT A6
VIEW POINT A7
VIEW POINT A8
VIEW POINT A9
FRAME 1 (FIRST HALF FRAME)
D1(j, k)
D2(j, k)
D3(j, k)
D4(j, k)
D5(j, k)
D6(j, k)
D7(j, k)
D8(j, k)
D9(j, k)
FRAME 2 (SECOND HALF FRAME)
D9(j, k)
D2(j, k)
D3(j, k)
D4(j, k)
D5(j, k)
D6(j, k)
D7(j, k)
D8(j, k)
D9(j, k)
FRAMES OF 1 SET
FRAME 3 (FIRST HALF FRAME)
D1(j, k)
D2(j, k)
D3(j, k)
D4(j, k)
D5(j, k)
D6(j, k)
D7(j, k)
D8(j, k)
D9(j, k)
FRAME 4 (SECOND HALF FRAME)
D9(j, k)
D2(j, k)
D3(j, k)
D4(j, k)
D5(j, k)
D6(j, k)
D7(j, k)
D8(j, k)
D9(j, k)
FRAMES OF 1 SET
TIME AXIS

FIG. 53

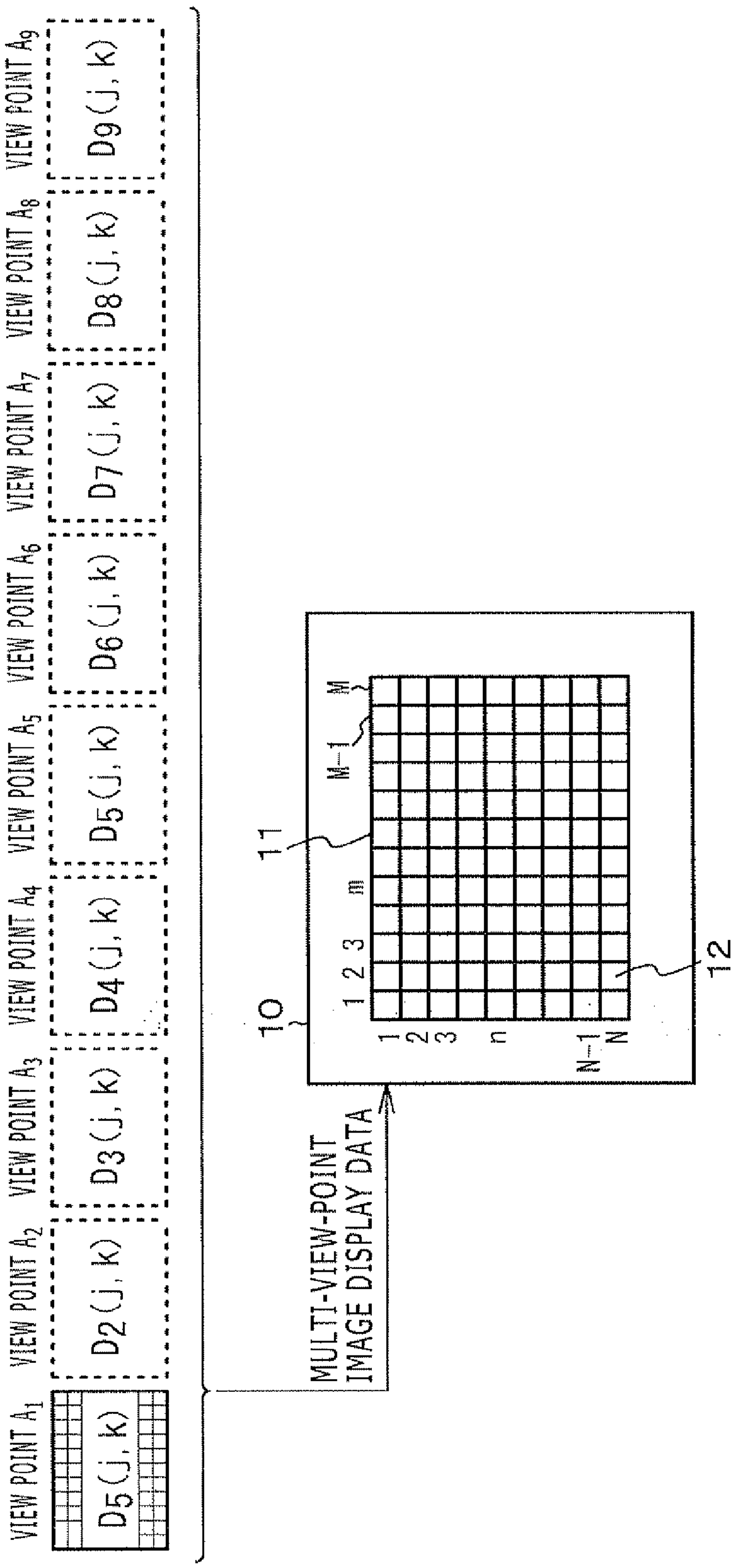
VIEW POINT $A_1$
$D_5$(j, k)
VIEW POINT $A_2$
$D_2$(j, k)
VIEW POINT $A_3$
$D_3$(j, k)
VIEW POINT $A_4$
$D_4$(j, k)
VIEW POINT $A_5$
$D_5$(j, k)
VIEW POINT $A_6$
$D_6$(j, k)
VIEW POINT $A_7$
$D_7$(j, k)
VIEW POINT $A_8$
$D_8$(j, k)
VIEW POINT $A_9$
$D_9$(j, k)
MULTI-VIEW-POINT IMAGE DISPLAY DATA
10
11
12
1 2 3 m M-1 M
1 2 3 n N-1 N

# FIG.54A

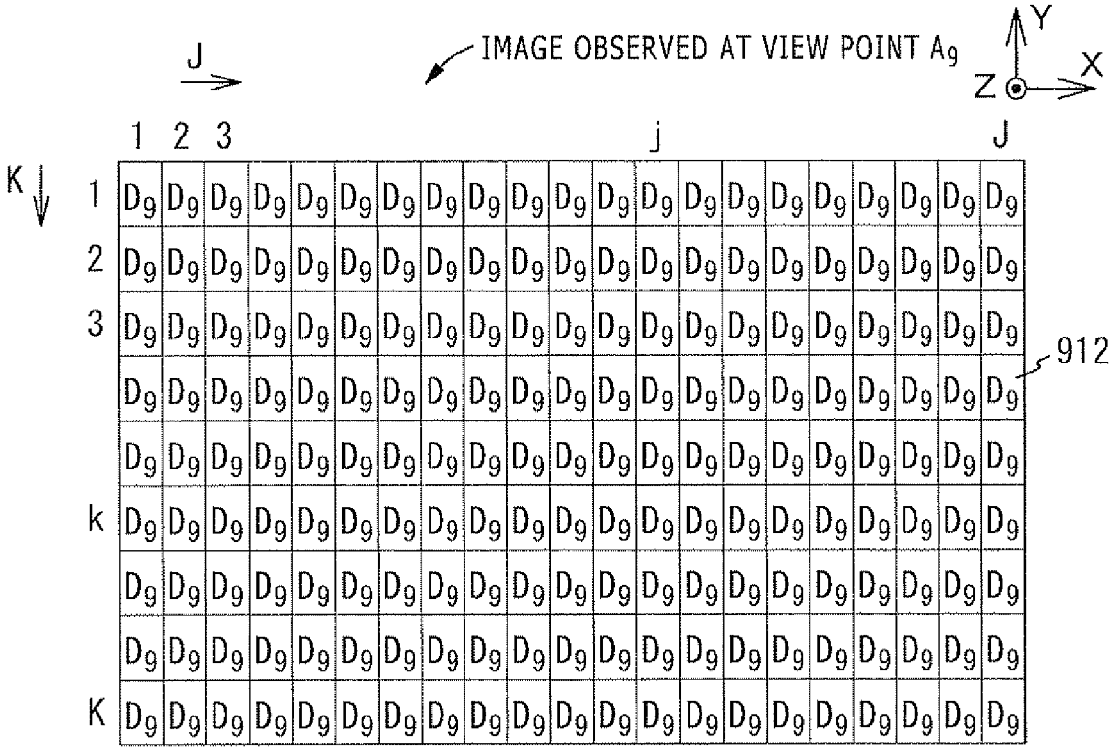


# FIG.54B

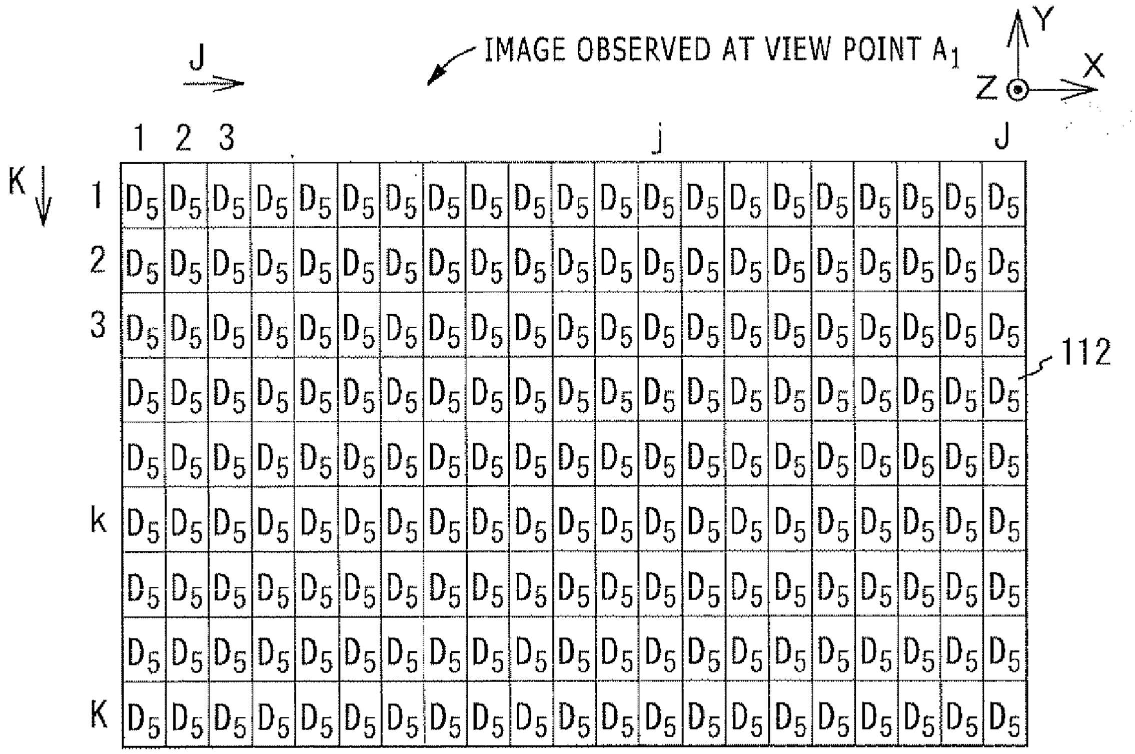

FIG.55

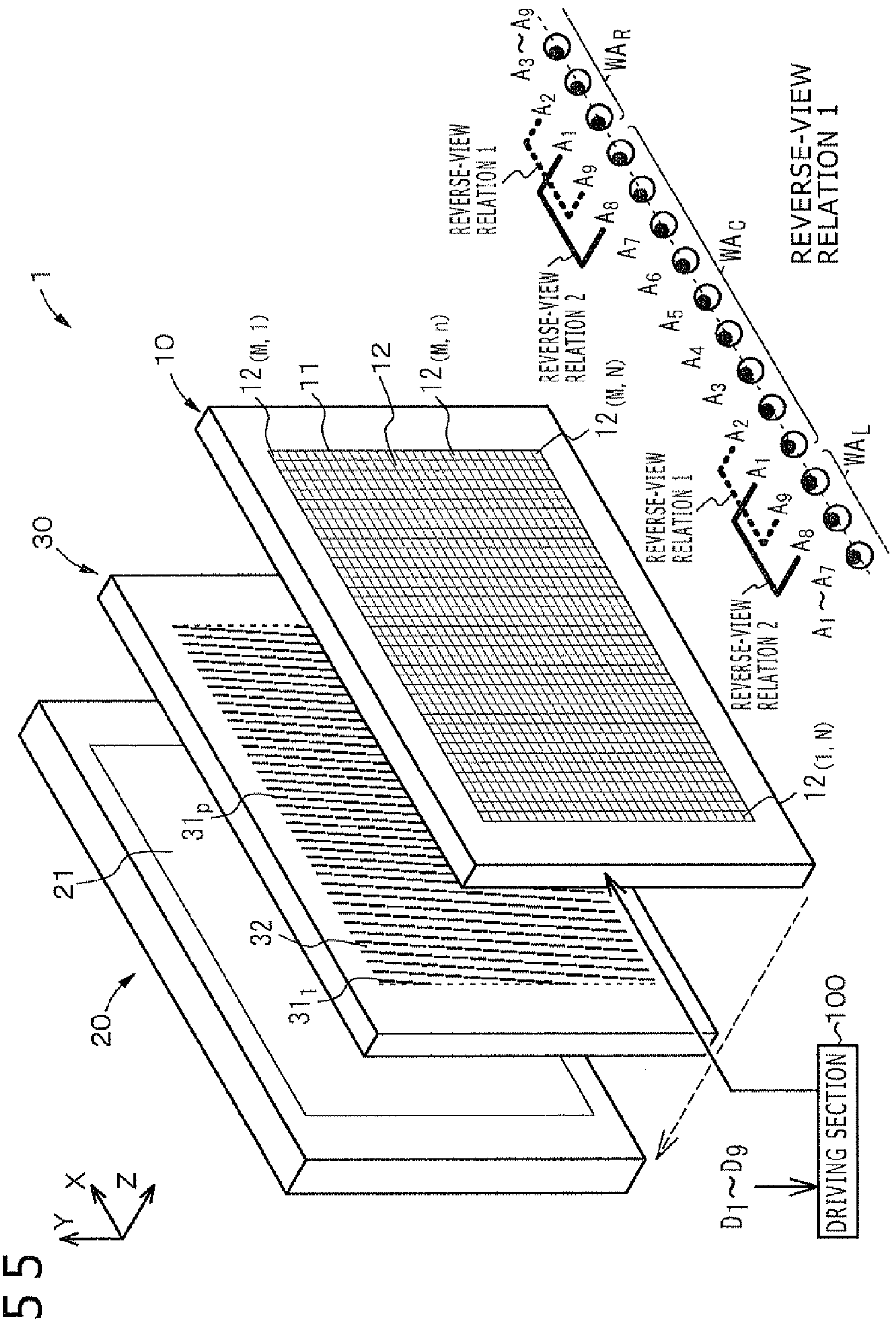
1
10
20
21
30
$31_1$
$31_p$
32
11
12
$12_{(M,1)}$
$12_{(M,n)}$
$12_{(M,N)}$
$12_{(1,N)}$
X
Y
Z
$D_1 \sim D_9$
DRIVING SECTION
100
REVERSE-VIEW RELATION 1
REVERSE-VIEW RELATION 2
$A_1 \sim A_7$
$A_3 \sim A_9$
$A_1$ $A_2$ $A_3$ $A_4$ $A_5$ $A_6$ $A_7$ $A_8$ $A_9$
$WA_L$
$WA_C$
$WA_R$
REVERSE-VIEW RELATION 1

FIG.56

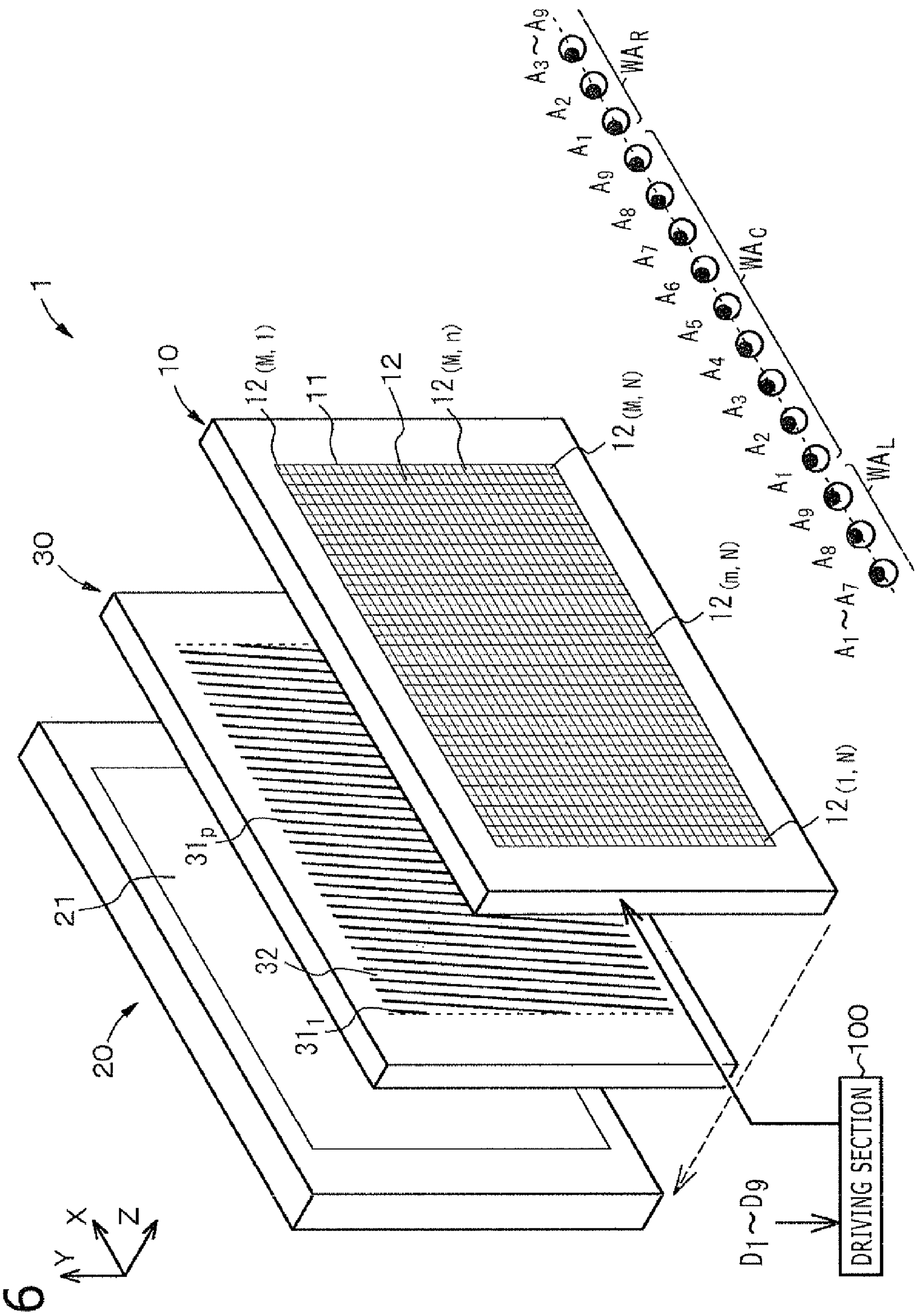
1
10
11
12
20
21
30
32
DRIVING SECTION
100
D1~D9
WAR
WAC
WAL
A1~A7
A3~A9

FIG.57

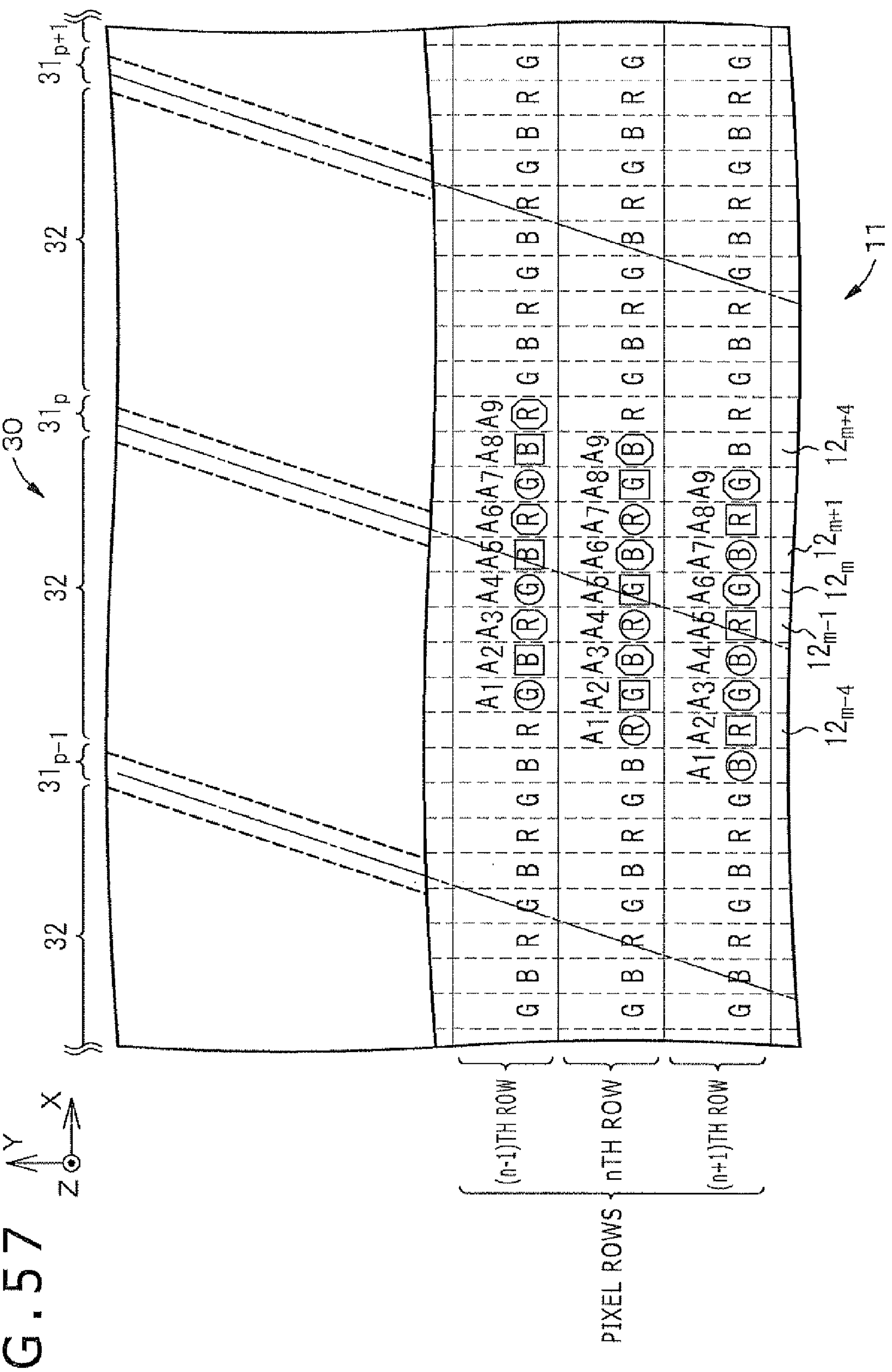
30
$31_{p-1}$
$31_p$
$31_{p+1}$
32
32
32
11
$12_{m-4}$
$12_{m-1}$
$12_m$
$12_{m+1}$
$12_{m+4}$
A1 A2 A3 A4 A5 A6 A7 A8 A9
(n-1)TH ROW
nTH ROW
(n+1)TH ROW
PIXEL ROWS
X
Y
Z

FIG. 58

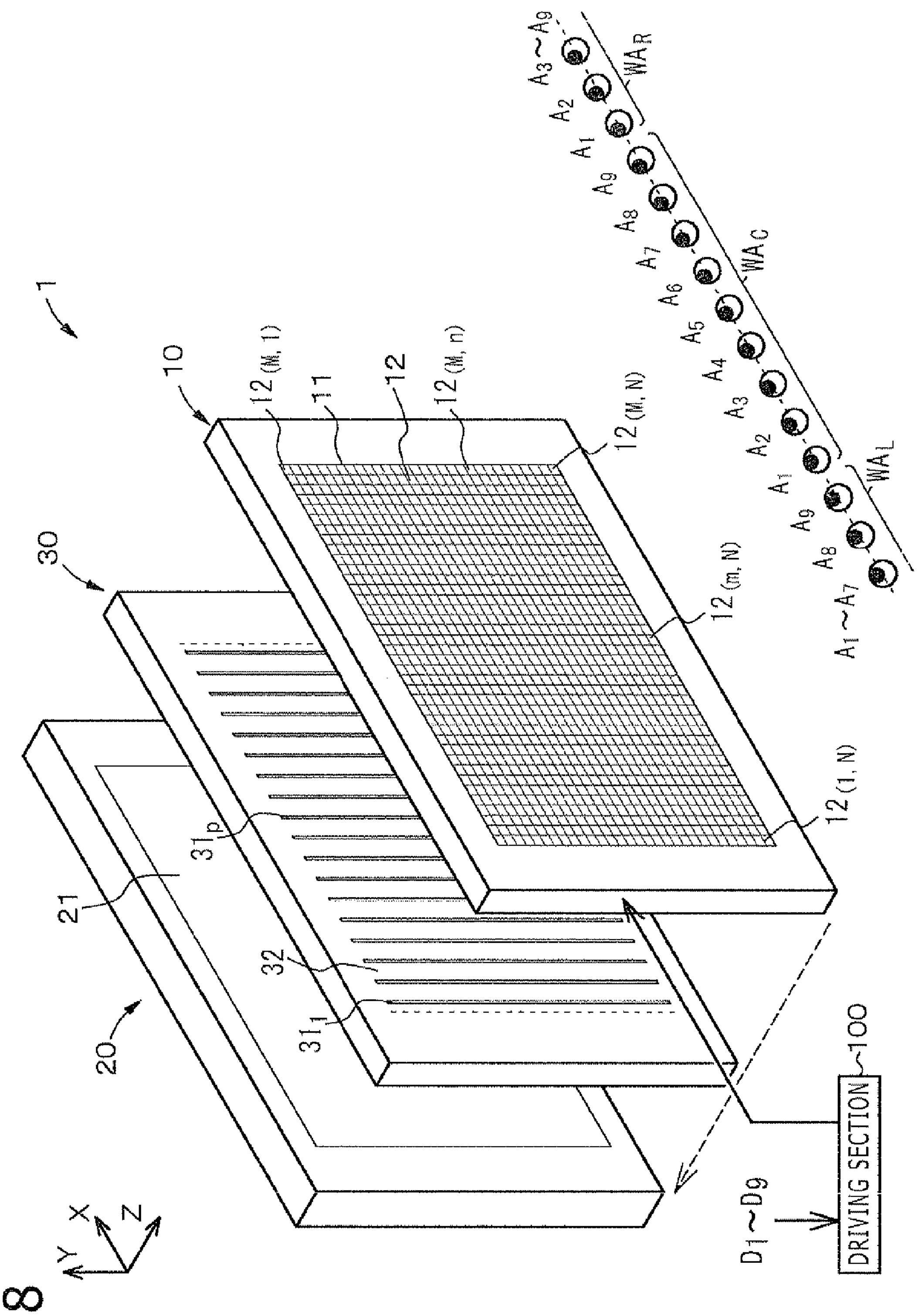
1
10
11
12
12(M,1)
12(M,n)
12(M,N)
12(m,N)
12(1,N)
20
21
30
$31_p$
$31_1$
32
DRIVING SECTION
100
$D_1$~$D_9$
X
Y
Z
$A_3$~$A_9$
$A_2$
$A_1$
$A_9$
$A_8$
$A_7$
$A_6$
$A_5$
$A_4$
$A_3$
$A_2$
$A_1$
$A_9$
$A_8$
$A_1$~$A_7$
$WA_R$
$WA_C$
$WA_L$

FIG.59

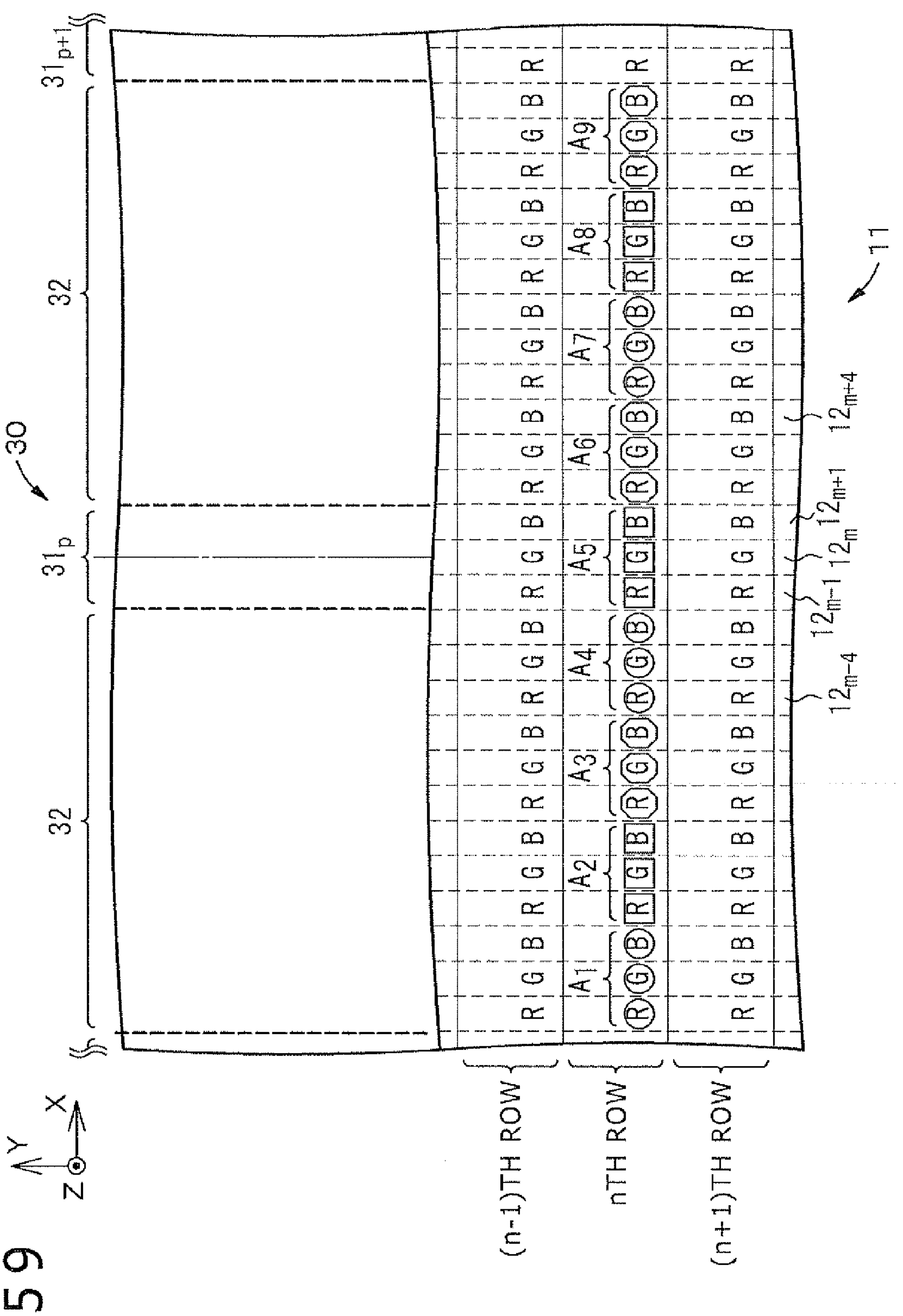
30
31p
31p+1
32
32
11
A1
A2
A3
A4
A5
A6
A7
A8
A9
(n-1)TH ROW
nTH ROW
(n+1)TH ROW
X
Y
Z
12m-4
12m-1
12m
12m+1
12m+4

FIG.60A

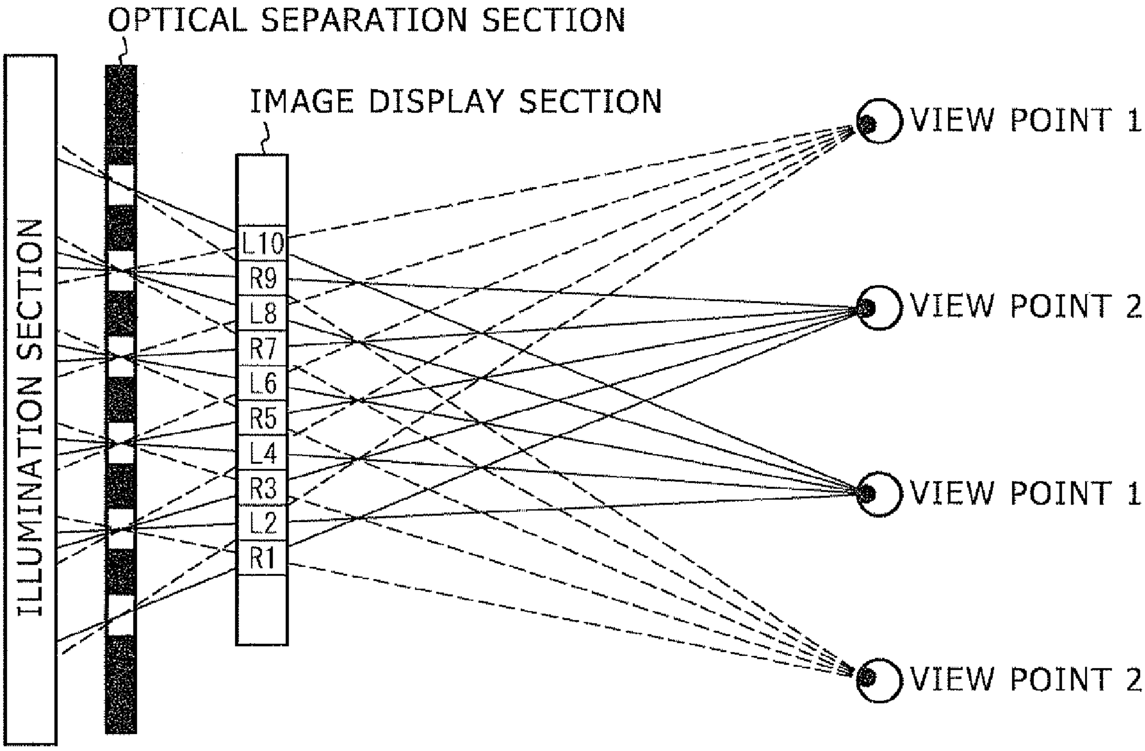


FIG.60B

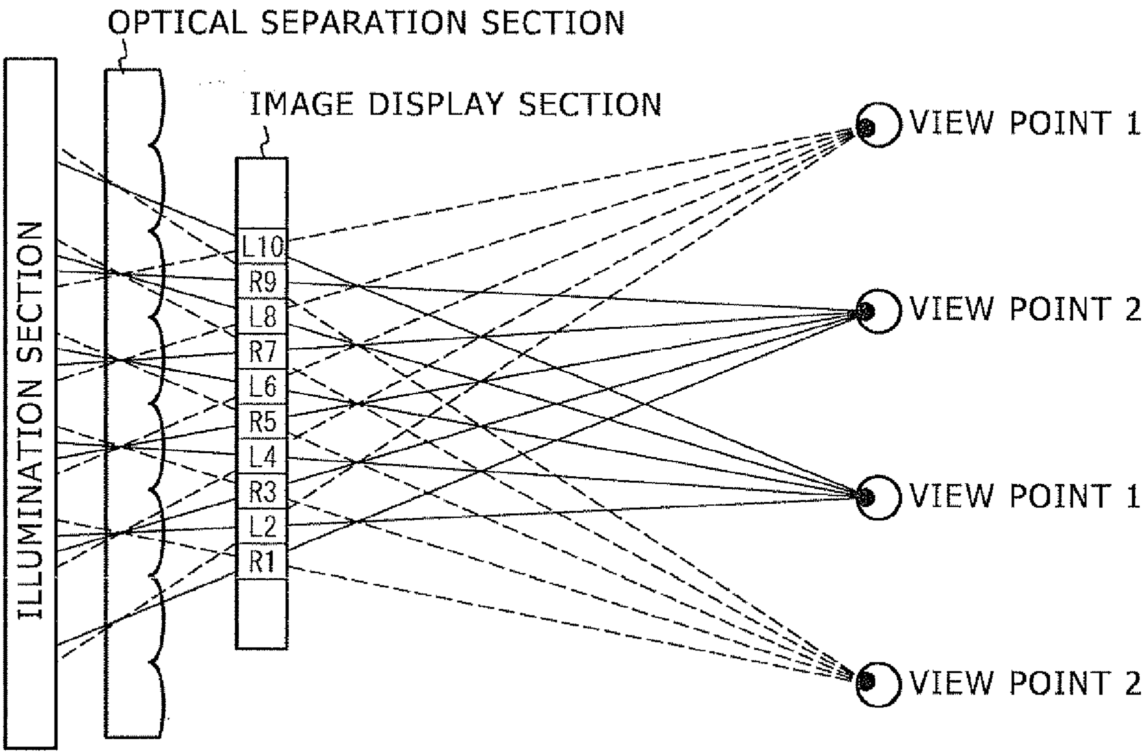

# FIG.61A

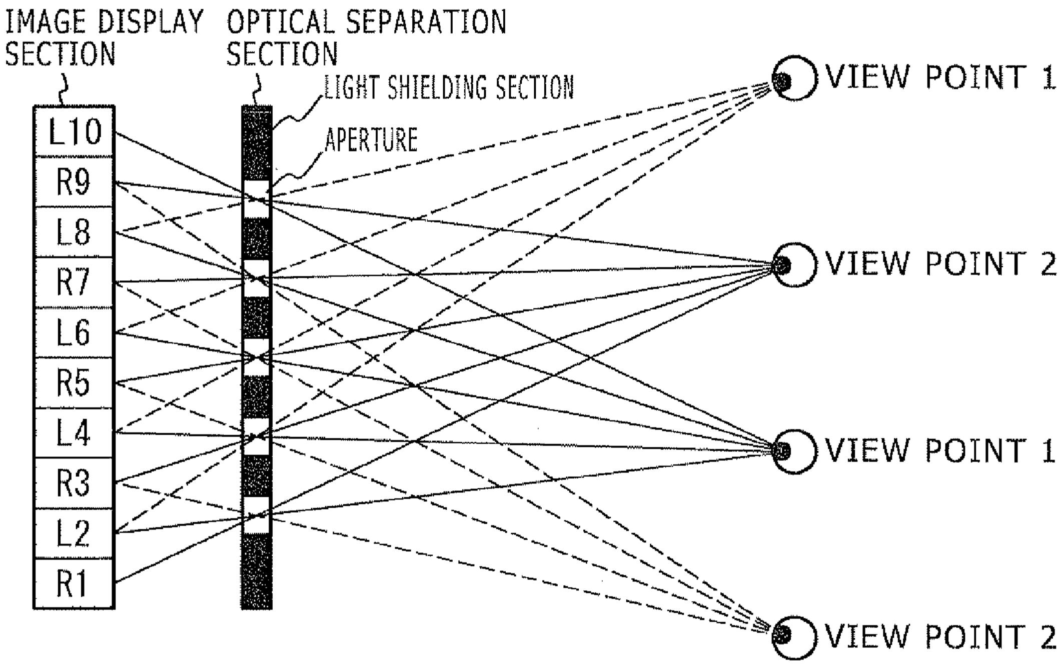


# FIG.61B

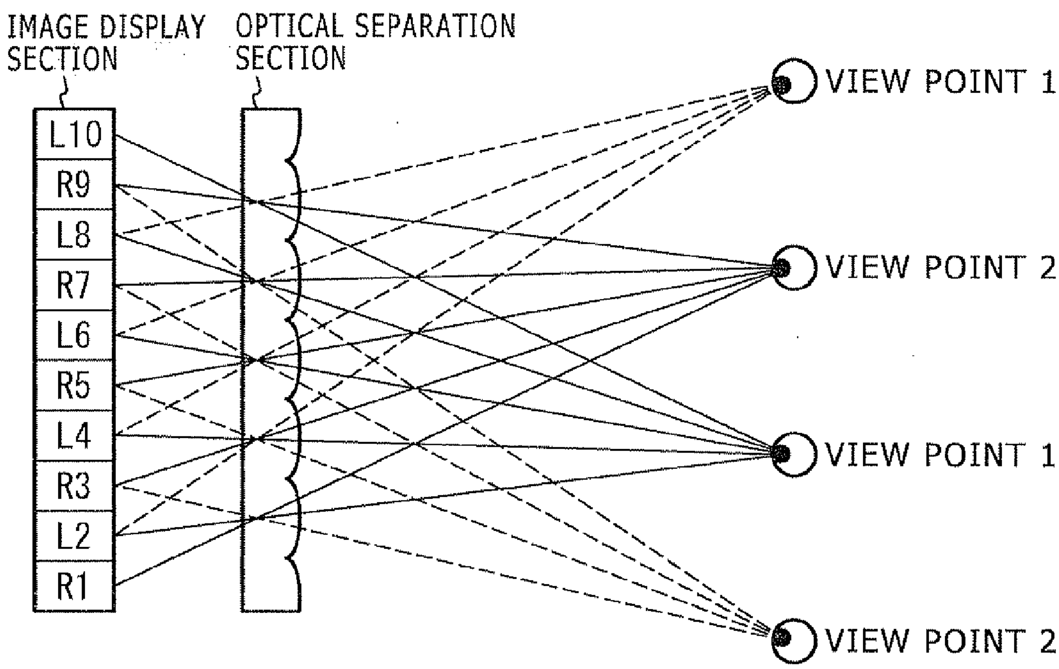

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP HEI5122733 B
- JP 3565391 B
- JP 2000047139 A
- JP 2010293219 A